# FASCICULE DE BREVET EUROPEEN

(11) **EP 1 208 415 B1**
(45) Date de publication et mention de la délivrance du brevet: **06.05.2004**
(21) Numéro de dépôt: 00956752.0
(22) Date de dépôt: 30.08.2000
(51) Int. Cl.: G06F 1/00

(54) **PROCEDE ET DISPOSITIF DE COMMUNICATION**
KOMMUNIKATIONSVERFAHREN UND -GERÄT
COMMUNICATION METHOD AND DEVICE

(30) Priorité: 30.08.1999 FR 9911250; 06.09.1999 FR 9912108; 05.10.1999 FR 9913401
(43) Date de publication de la demande: 29.05.2002
(60) Demande divisionnaire: 03026671.2
(73) Titulaire: CORNUEJOLS, Georges, 75017 Paris (FR)
(72) Inventeur: CORNUEJOLS, Georges, 75017 Paris (FR); CORNUEJOLS, Emmanuelle, F-31450 Ayguesvives (FR)
(86) Numéro de dépôt international: PCT/IB2000/001312
(87) Numéro de publication internationale: WO 2001/016784

(56) Documents cités:
- EP-A- 0 845 733
- EP-A- 0 927 945
- WO-A-95/16971
- WO-A-96/27155
- DE-A- 19 842 673
- US-A- 5 592 375
- US-A- 5 825 881
- US-A- 5 883 810
- US-A- 5 909 023
- HAYASHI K ET AL: "TEMPORALLY-THREADED WORKSPACE: A MODEL FOR PROVIDING ACTIVITY-BASEDPERSPECTIVES ON DOCUMENT SPACES" ACM CONFERENCE ON HYPERTEXT AND HYPERMEDIA,US,NEW YORK, NY: ACM, 20 juin 1998 (1998-06-20), pages 87-96, XP000868462 ISBN: 0-89791-972-6
- BELLARE M. ET AL: 'Keying Hash functions for message authentication' 25 Janvier 1996, pages 1 - 19

## Description

La présente invention concerne un procédé et un dispositif de communication. Elle s'applique, en particulier, à la communication par l'intermédiaire d'un réseau de communication informatique, par exemple, Internet.

La présente invention concerne un procédé et un dispositif de communication. Plus particulièrement, la présente invention s'applique à sécuriser des données, des communications ou des transactions en ligne. Encore plus particulièrement, la présente invention s'attache à sécuriser des transmissions d'informations confidentielles et des achats effectués par l'intermédiaire d'un réseau de communication, par exemple l'Internet.

Un utilisateur d'un réseau de communication, par exemple l'Internet, sent un certain inconfort lorsqu'il s'aventure sur ce réseau. Il ne peut garder de traces organisées des pages informatiques qu'il reçoit, il ne peut identifier aisément les personnes, physiques ou morales à qui il a à faire, il se sent en insécurité au cours de ses achats en ligne.

Les utilisateurs d'un tel réseau sont mal protégés contre des abus de la part de tiers, par exemple d'autres utilisateurs du réseau ou de sites informatiques qui délivrent un contenu sur le réseau.

Le document "Keying Hash functions for message authentication", pages 1-19, M. Bellare et al., 25 Janvier 1996, décrit l'utilisation de condensât pour authentifier des documents communiqués par une source A à un destinataire B. Lorsque la source A transmet un message au destinataire B, il associe au message une valeur appelée marque d'authentification (en anglais "authentication tag") calculé par un algorithme de code d'authentification de message (en anglais MAC pour "Message Authentication Code"), qui est une fonction de l'information transmise et d'une clé secrète partagée avec le destinataire. A la réception, le destinataire B recalcule la marque d'authentification sur le message reçu en utilisant le même mécanisme et la même clé et vérifie que la valeur obtenue est égale à la valeur de la marque associée au message. Seulement si les valeurs sont égales, l'information reçue est considérée comme non modifiée sur le chemin entre A et B. Ce document ne s'applique qu'aux cas où la source connaît l'information transmise au destinataire et ne s'applique donc pas aux visites de sites Internet dans lesquelles le visiteur ne reçoit qu'une partie des informations mises à disposition par les sites sur lesquels il navigue.

Le document EP-A-0 845 733 (Sun Micrasystems Ins) décrit un procédé pour implémenter des signatures électroniques pour des flux de données et des archives de données. Il possède les mêmes limitation que le document précédant.

La présente invention telle que définie dans la revendication 1 entend remédier à ces inconvénients.

Selon un premier aspect, la présente invention vise un procédé de sécurisation, caractérisé en ce qu'il comporte :
- une opération de mise en mémoire de caractéristiques de données dites « confidentielles »,
- une opération d'ouverture d'une communication sur un réseau de communication,
- une opération de comparaison de caractéristiques de données à transmettre sur ledit réseau avec lesdites caractéristiques mises en mémoire et
- lorsqu'une caractéristique de données à transmettre correspond à une caractéristique de donnée confidentielle, une opération de retardement de la transmission desdites données à transmettre.

Selon des caractéristiques particulières du procédé visé par le premier aspect de la présente invention, ladite opération de comparaison est effectuée en tâche de fond par rapport à l'opération de communication.

Selon des caractéristiques particulières du procédé visé par le premier aspect de la présente invention, les caractéristiques des données confidentielles sont insuffisantes pour déterminer les données confidentielles protégées.

Selon un deuxième aspect, la présente invention vise un procédé de gestion de mémoire,
caractérisé en ce qu'il comporte :
- au moins une opération de communication par l'intermédiaire d'un réseau de communication,
- au moins une opération de mémorisation de différents types de données en provenance dudit réseau au cours de ladite opération de communication,
- une opération de détermination de nécessité d'effacer certaines données mémorisées, et
- lorsqu'il est nécessaire d'effacer des données mémorisées, une opération d'effacement au cours de laquelle des données mémorisées sont effacées en fonction de leur date de mémorisation et de leur type, les données d'au moins un type prédéterminé étant conservées plus longtemps que les données d'au moins un autre type.

Selon des caractéristiques particulières du procédé visé par le deuxième aspect de la présente invention, l'opération de détermination de nécessité comporte une opération de comparaison d'un espace mémoire avec une valeur d'espace mémoire prédéterminée.

Selon des caractéristiques particulières du procédé visé par le deuxième aspect de la présente invention, ce procédé comporte une opération de comparaison de page déjà mémorisée et de page visitée au cours de l'opération de communication sur un réseau de communication et au cours de l'opération de mémorisation, seules les pages non encore mémorisées sont mémorisées.

Selon un troisième aspect, la présente invention vise un procédé de communication caractérisé en ce qu'il comporte :
- une opération d'ouverture d'une première session de communication avec un premier site d'un réseau de communication,
- une opération d'ouverture d'une deuxième session de communication avec un deuxième site dudit réseau de communication,
- une opération de transmission audit deuxième site d'informations relatives à la première session et
- une opération de réception, en provenance dudit deuxième site, d'informations relatives à la première session.

Selon des caractéristiques particulières du troisième aspect de la présente invention, ladite opération de transmission audit deuxième site comporte une opération de transmission automatique d'un identifiant dudit premier site.

Selon d'autres caractéristiques particulières du troisième aspect de la présente invention, le procédé de communication comporte une opération de mémorisation d'au moins une caractéristique d'une information confidentielle et ladite opération d'ouverture d'une deuxième session de communication comporte une opération de détection d'une caractéristique d'une information confidentielle dans des données à transmettre audit premier site.

Selon d'autres caractéristiques particulières du troisième aspect de la présente invention, le procédé de communication comporte une opération de transmission audit premier site d'informations basées sur des informations reçues en provenance dudit deuxième site.

Selon d'autres caractéristiques particulières du troisième aspect de la présente invention, les informations reçues en provenance du deuxième site comportent une racine ou code générateur d'un identificateur de moyen de paiement.

Selon d'autres caractéristiques particulières du troisième aspect de la présente invention, le procédé de communication comporte une opération de transmission dudit identificateur de moyen de paiement audit premier site.

Selon d'autres caractéristiques particulières du troisième aspect de la présente invention, l'opération de transmission audit deuxième site d'informations relatives à la première session comporte une opération de transmission d'un identifiant d'un produit ou service susceptible d'être fourni par l'intermédiaire dudit premier site.

Selon d'autres caractéristiques particulières du troisième aspect de la présente invention, le procédé de communication comporte une opération de mémorisation automatique de données reçues de la part du premier site au cours de ladite première session.

Selon d'autres caractéristiques particulières du troisième aspect de la présente invention, le procédé de communication comporte une opération de requête d'informations permettant de déterminer un identificateur de moyen de paiement à usage unique.

Le troisième aspect de la présente invention vise aussi un procédé de communication
caractérisé en ce qu'il comporte :
- une opération d'ouverture d'une session de communication dite « deuxième » avec un terminal,
- une opération de réception en provenance dudit terminal d'une information relative à une session de communication dite « première » à laquelle participe ledit terminal et
- une opération de fourniture audit terminal d'informations relatives à la première session.

Selon des caractéristiques particulières du troisième aspect de la présente invention, les informations relatives à la première session comporte une racine ou code générateur permettant de définir un identificateur de moyen de paiement à usage unique.

Selon d'autres caractéristiques particulières du troisième aspect de la présente invention, le procédé de communication comporte une opération de réception dudit identificateur, une opération de vérification de validité dudit identificateur, une opération de déclenchement de paiement et une opération d'invalidation dudit identificateur.

Selon un quatrième aspect, la présente invention vise un procédé de paiement en ligne,
caractérisé en ce qu'il comporte :
- une opération d'ouverture d'une première session de communication avec un premier site, par l'intermédiaire d'un réseau de communication,
- une opération de réception d'une racine d'un identificateur de moyen de paiement à usage unique, de la part dudit premier site,
- une opération de détermination d'un identificateur de moyen de paiement à usage unique,
- une opération de fourniture dudit identificateur à un deuxième site, par l'intermédiaire dudit réseau de communication, au cours d'une deuxième session de communication, et
- une opération paiement par ledit moyen de paiement à usage unique.

En relation avec le quatrième aspect, la présente invention vise un procédé de paiement
caractérisé en ce qu'il comporte :
- une opération de génération d'une racine d'un identificateur de moyen de paiement à usage unique,
- une opération de transmission de ladite racine à un utilisateur, par l'intermédiaire d'un réseau de communication,
- une opération de réception d'un identificateur de moyen de paiement à usage unique de la part d'un tiers,
- une opération de vérification de correspondance dudit identificateur avec ladite racine, et lorsqu'il y a correspondance :
   - une opération de paiement dudit tiers, au débit dudit utilisateur, et
   - une opération d'invalidation dudit moyen de paiement à usage unique à la suite de la première opération de paiement utilisant ledit moyen de paiement.

Selon des caractéristiques particulières du procédé visé par le quatrième aspect de la présente invention, ce procédé comporte une opération d'authentification de l'utilisateur.

Selon des caractéristiques particulières du procédé visé par le quatrième aspect de la présente invention, cette opération d'authentification comporte une opération de reconnaissance d'un identificateur d'un moyen de paiement à usage permanent.

Selon des caractéristiques particulières du procédé visé par le quatrième aspect de la présente invention, l'identificateur de moyen de paiement à usage unique est un identificateur de carte de paiement, par exemple à 20 chiffres compris entre 0 et 9.

Selon des caractéristiques particulières du procédé visé par le quatrième aspect de la présente invention, l'opération d'ouverture de la deuxième session précède l'opération d'ouverture de la première session.

Selon des caractéristiques particulières du procédé visé par le quatrième aspect de la présente invention, l'opération de paiement comporte une opération de vérification d'un identifiant du deuxième site.

Selon un cinquième aspect, la présente invention vise un procédé de communication,
caractérisé en ce qu'il comporte :
- une opération d'ouverture d'une première session de communication entre un terminal et un site d'un réseau de communication,
- une opération de sélection d'une date,
- une opération de mémorisation de ladite date et,
- à ladite date, une opération d'ouverture automatique d'une deuxième session de communication entre ledit terminal et ledit site.

Selon des caractéristiques particulières du procédé visé par le cinquième aspect de la présente invention, ce procédé comporte une opération d'interrogation d'un utilisateur dudit terminal et ladite deuxième session dépend d'au moins une réponse donnée par ledit utilisateur.

Selon un sixième aspect, la présente invention vise un procédé de mémorisation de communications, caractérisé en ce qu'il comporte une opération de mémorisation de contenus de pages accessibles par l'intermédiaire d'un réseau de communication et une opération de relecture de contenu mémorisé comportant une opération de sélection de vitesse de relecture et, lorsqu'une vitesse de relecture lente est sélectionnée, une première opération d'affichage de contenu mémorisé pendant une première durée, et lorsqu'une vitesse de relecture rapide est sélectionnée, une deuxième opération d'affichage de contenu mémorisé pendant une deuxième durée inférieure à la première durée.

Selon des caractéristiques particulières du sixième aspect du procédé visé par la présente invention, lorsqu'une fonction de relecture lente est sélectionnée, au cours de la première opération d'affichage, une première portion de contenu mémorisé est affichée et, au cours de la deuxième opération d'affichage, une deuxième portion de contenu mémorisé est affichée la deuxième portion étant différente de la première portion.

Selon des caractéristiques particulières du sixième aspect du procédé visé par la présente invention, la deuxième portion comporte au moins une adresse de page accessible sur le réseau de communication.

Selon des caractéristiques particulières du sixième aspect du procédé visé par la présente invention, la deuxième portion comporte au moins une date de mémorisation.

Selon des caractéristiques particulières du sixième aspect du procédé visé par la présente invention, la deuxième portion comporte un contenu de haut de page accessible sur le réseau de communication.

Selon des caractéristiques particulières du sixième aspect du procédé visé par la présente invention, le procédé comporte une opération d'affichage de parties de pages accessibles et la première portion comporte une opération de réaffichage des parties de pages déjà affichées, dans l'ordre de leur premier affichage au cours de l'opération d'affichage.

Selon des caractéristiques particulières du sixième aspect du procédé visé par la présente invention, au cours de l'opération de mémorisation, l'utilisateur sélectionne les pages à mémoriser.

Selon des caractéristiques particulières du sixième aspect du procédé visé par la présente invention, le procédé comporte, avant l'opération de relecture, une opération d'authentification de l'utilisateur.

Selon des caractéristiques particulières du sixième aspect du procédé visé par la présente invention, la première portion comporte la deuxième portion.

Selon des caractéristiques particulières du sixième aspect du procédé visé par la présente invention, la première opération de relecture est automatique, chaque élément de l'information mémorisée et affichée ne restant pas affichée pendant plus d'une durée prédéterminée.

Selon des caractéristiques particulières du sixième aspect du procédé visé par la présente invention, le procédé comporte une opération de sélection de touches affichées dans une barre d'outil sur un écran de visualisation où sont affichées les portions de contenu.

Selon des caractéristiques particulières du sixième aspect du procédé visé par la présente invention, le procédé comporte une opération d'arrêt de relecture et, à la suite de l'opération d'arrêt de relecture, une opération d'affichage de tout le contenu mémorisé relatif à la page en cours d'affichage au moment de la sélection de l'arrêt de relecture.

Selon des caractéristiques particulières du sixième aspect du procédé visé par la présente invention, le procédé comporte une opération de sélection d'ordre de relecture au cours de laquelle l'utilisateur sélectionne une ordre de défilement de page identique à l'ordre de mémorisation ou un ordre de défilement de page inverse à l'ordre de mémorisation.

Selon un septième aspect, la présente invention vise un procédé de mémorisation de communications, caractérisé en ce qu'il comporte une opération de réception de pages en provenance d'un réseau de communication, une opération d'affichage de pages reçues, une opération de sélection de groupe de pages, une opération de mémorisation de contenus de dites pages en relation avec le groupe sélectionné, une opération de sélection de groupe de pages et une opération de réaffichage de pages mémorisées en relation avec le groupe sélectionné.

Selon un huitième aspect, la présente invention vise un procédé de transmission d'une page sur un réseau de communication, caractérisé en ce qu'il comporte:
- une première opération de requête de transmission d'un premier contenu de ladite page correspondant à une première quantité d'information à transmettre et, en cas d'échec de la transmission pour cause de dépassement d'une durée de transmission prédéterminée,
- une opération de détermination automatique d'un deuxième contenu de ladite page, le deuxième contenu correspondant à une quantité d'information à transmettre inférieure à la première quantité et une opération de requête de transmission dudit deuxième contenu de ladite page.

Selon des caractéristiques particulières du procédé visé par le huitième aspect de la présente invention, le deuxième contenu est une partie du premier contenu.

Selon des caractéristiques particulières du procédé visé par le huitième aspect de la présente invention, le deuxième contenu correspond à des fichiers texte.

Selon des caractéristiques particulières du procédé visé par le huitième aspect de la présente invention, le premier contenu correspond à des fichiers représentatifs d'image et/ou de sons.

On observe que la mise en oeuvre du procédé peut être effectuée en tout lieu du réseau de communication, et, en particulier, dans le terminal informatique ou dans un système informatique d'un fournisseur d'accès audit réseau. On observe que le moyen de sécurisation peut aussi se trouver sur le réseau de communication, en tout endroit et, en particulier, dans le terminal informatique ou dans un système informatique d'un fournisseur d'accès audit réseau.

La présente invention vise aussi un site informatique, un serveur, un ordinateur, caractérisé en ce qu'ils mettent en oeuvre le procédé succinctement exposé ci-dessus. La présente invention vise aussi un support d'information, tel qu'une disquette, un disque dur, un compact disque ou une mémoire d'ordinateur, qui conserve des instructions de programme pour :
- ouvrir une session de communication entre un terminal informatique et un site informatique, par l'intermédiaire d'un réseau de communication,
- détecter automatiquement une préparation de paiement par transmission, au cours de ladite session, par l'intermédiaire dudit terminal, d'un identifiant d'un moyen de paiement, et
- lorsqu'une préparation de paiement est détectée, sécuriser automatiquement ledit paiement en dehors dudit site informatique, au moins en sauvegardant le montant du paiement en dehors dudit site informatique.

La présente invention vise, selon un neuvième aspect, un procédé de communication,
caractérisé en ce qu'il comporte :
- une opération de réception d'une succession de pages en provenance d'un premier site d'un réseau informatique,
- une opération de mémorisation d'information représentative de ladite succession de pages, en dehors dudit premier site, et
- une opération d'association d'un certificat d'intégrité à l'information mémorisée représentative de ladite succession de pages, ledit certificat d'intégrité étant mémorisé en association avec l'information représentative de ladite succession de pages, ledit certificat d'intégrité rendant détectable toute modification de l'information mémorisée représentative de ladite succession de pages, ultérieurement à sa mémorisation.

Selon des caractéristiques particulières, le procédé visé par le neuvième aspect de l'invention, tel que succinctement exposé ci-dessus comporte une opération de datation attribuant une date à l'une au moins des opérations de réception et de mémorisation, ladite date est mémorisée en association avec l'information représentative de ladite succession de pages et le certificat d'intégrité rend détectable une modification de ladite date ultérieurement à sa mémorisation.

Selon des caractéristiques particulières, le procédé visé par le neuvième aspect de l'invention tel que succinctement exposé ci-dessus comporte une opération de détermination d'une adresse dudit premier site sur ledit réseau, ladite adresse étant mémorisée en association avec l'information représentative de ladite succession de pages et le certificat d'intégrité rend détectable une modification de ladite adresse ultérieurement à sa mémorisation.

Selon des caractéristiques particulières, le procédé visé par le neuvième aspect de l'invention tel que succinctement exposé ci-dessus comporte une opération de détermination d'une durée d'affichage de chaque page de ladite succession, ladite durée étant mémorisée en association avec l'information représentative de ladite succession de pages et le certificat d'intégrité rend détectable une modification de ladite durée ultérieurement à sa mémorisation.

Selon des caractéristiques particulières, le procédé visé par le neuvième aspect de l'invention tel que succinctement exposé ci-dessus comporte, pour chaque site d'une pluralité de sites dudit réseau, une opération de détermination d'adresses de pages dudit site, ladite opération de mémorisation comportant une mémorisation desdites pages, lesdites pages étant mémorisées en association avec l'information représentative de ladite succession de pages et le certificat d'intégrité rend détectable une modification desdites pages ultérieurement à sa mémorisation.

Selon des caractéristiques particulières, le procédé visé par le neuvième aspect de l'invention, tel que succinctement exposé ci-dessus, comporte une opération d'affichage des pages reçues au cours de l'opération de réception, et au cours de l'opération de mémorisation, sont mémorisées les parties des pages reçues qui sont affichées au cours de l'opération d'affichage.

Selon des caractéristiques particulières, le procédé visé par le neuvième aspect de l'invention, tel que succinctement exposé ci-dessus, comporte une opération d'affichage des pages reçues au cours de l'opération de réception, et au cours de l'opération de mémorisation, sont mémorisées des indicateurs des parties des pages reçues qui sont affichées au cours de l'opération d'affichage.

Selon des caractéristiques particulières, le procédé visé par le neuvième aspect de l'invention, tel que succinctement exposé ci-dessus, comporte une opération d'affichage des pages reçues au cours de l'opération de réception, et au cours de l'opération de mémorisation, ne sont pas mémorisées les parties des pages reçues qui ne sont pas affichées au cours de l'opération d'affichage.

Selon des caractéristiques particulières, dans le procédé visé par le neuvième aspect de la présente invention, tel que succinctement exposé ci-dessus, l'information mémorisée au cours de l'opération de mémorisation comporte l'information au format texte de ladite succession de pages.

Selon des caractéristiques particulières, le procédé visé par le neuvième aspect de la présente invention, tel que succinctement exposé ci-dessus, comporte une opération de communication avec un deuxième site dudit réseau et de transmission audit deuxième site d'une information dépendant du premier site.

Selon des caractéristiques particulières, le procédé visé par le neuvième aspect de la présente invention, tel que succinctement exposé ci-dessus, comporte une opération de communication avec un deuxième site dudit réseau et de réception d'information en provenance dudit deuxième site, l'information mémorisée étant représentative de ladite information en provenance du deuxième site.

Selon des caractéristiques particulières, le procédé visé par le neuvième aspect de la présente invention, tel que succinctement exposé ci-dessus, comporte une opération de communication avec un deuxième site dudit réseau et de transmission audit deuxième site de l'information représentative desdites pages, l'opération de mémorisation étant effectuée par ledit deuxième site.

Selon des caractéristiques particulières, le procédé visé par le neuvième aspect de la présente invention, tel que succinctement exposé ci-dessus, comporte une opération de communication avec un deuxième site dudit réseau, l'opération de réception étant effectuée par l'intermédiaire dudit deuxième site.

Selon des caractéristiques particulières, le procédé visé par le neuvième aspect de la présente invention, tel que succinctement exposé ci-dessus, comporte une opération de détection d'une information caractéristique d'une transaction avec ledit premier site, et une opération d'effacement de l'information mémorisée représentative de ladite succession de page dudit premier site, ladite opération d'effacement dépendant de ladite détection.

Selon des caractéristiques particulières, le procédé visé par le neuvième aspect de la présente invention, tel que succinctement exposé ci-dessus, comporte une opération de détection d'une information caractéristique d'une transaction avec ledit premier site, ladite opération de mémorisation dépendant de ladite détection.

Selon des caractéristiques particulières, le procédé visé par le neuvième aspect de la présente invention, tel que succinctement exposé ci-dessus comporte une opération de détection d'une information caractéristique d'une transaction avec ledit premier site, par détermination d'une préparation de communication au premier site d'une information correspondant à une information dite "à protéger" conservée dans une mémoire.

La présente invention vise, selon un dixième aspect, un procédé de communication, caractérisé en ce qu'il comporte :
- une opération de réception d'une succession de pages en provenance d'un premier site d'un réseau informatique,
- une opération d'affichage de parties de pages de ladite succession de pages,
- une opération de mémorisation d'information représentative desdites parties de pages affichées, en dehors dudit premier site, ladite information étant identifiée en mémoire comme affichée et
- une opération de mémorisation d'information de parties de pages non affichées, en provenance dudit premier site, en dehors dudit premier site, ladite information étant identifiée en mémoire comme non affichée.

Le dixième aspect de l'invention présente, selon des caractéristiques particulières, toutes ou parties des caractéristiques du neuvième aspect.

La présente invention vise, selon un onzième aspect, un procédé de communication, caractérisé en ce qu'il comporte :
- une opération de réception, par un terminal informatique, d'une succession de pages en provenance d'un premier site d'un réseau informatique,
- une opération d'affichage, par le terminal informatique, de parties de pages de ladite succession, et
- une opération de mémorisation en un deuxième site informatique indépendant dudit terminal, d'information représentatives desdites parties de pages affichées.

Le onzième aspect de l'invention présente, selon des caractéristiques particulières, toutes ou parties des caractéristiques du neuvième aspect.

La présente invention vise, selon un douzième aspect, un procédé de communication,
caractérisé en ce qu'il comporte :
- une opération de réception, par un terminal informatique, d'une succession de pages en provenance d'un premier site informatique,
- une opération automatique de réception, par le terminal informatique, en provenance d'un deuxième site informatique, d'information contextuelle dépendant d'un identifiant dudit premier site,
- une opération de déclenchement, et
- une opération d'affichage de ladite information contextuelle.

La présente invention vise, selon un treizième aspect, un procédé de communication, caractérisé en ce qu'il comporte :
- une opération de réception, par un terminal informatique, d'une succession de pages en provenance d'un premier site,
- une opération de détection d'une signature électronique,
- une opération de mémorisation d'information représentative d'au moins une page de ladite succession de pages, en dehors dudit premier site, dépendant de ladite détection.

Selon des caractéristiques particulières du procédé visé par le treizième aspect de la présente invention, au cours de l'opération de mémorisation, l'information mémorisée est représentative d'une pluralité de pages de ladite succession.

Selon des caractéristiques particulières du procédé visé par le treizième aspect de la présente invention, au cours de l'opération de mémorisation, l'information mémorisée est représentative d'au moins une page où est demandée ladite signature électronique.

Selon des caractéristiques particulières du procédé visé par le treizième aspect de la présente invention, au cours de l'opération de mémorisation, l'information mémorisée est représentative de chaque page de ladite succession.

Selon des caractéristiques particulières, le procédé visé par le treizième aspect de la présente invention, comporte une opération de détermination d'un début de document contractuel et une opération de détermination de fin de document contractuel et au cours de l'opération de mémorisation, l'information mémorisée est représentative de chaque page accédée entre le début de document et la fin de document.

Selon des caractéristiques particulières, le procédé visé par le treizième aspect de la présente invention, comporte une opération d'association d'un certificat d'intégrité à l'information mémorisée représentative de ladite succession de pages, ledit certificat d'intégrité étant mémorisé en association avec l'information représentative d'au moins une page de ladite succession de pages, ledit certificat d'intégrité rendant détectable toute modification de l'information mémorisée, ultérieurement à sa mémorisation.

Selon des caractéristiques particulières, ladite signature comporte un certificat d'intégrité mémorisé en association avec l'information représentative d'au moins une page de ladite succession de pages, ledit certificat d'intégrité rendant détectable toute modification de l'information mémorisée, ultérieurement à sa mémorisation.

Selon un quatorzième aspect, la présente invention vise un procédé de communication,
caractérisé en ce qu'il comporte :
- une opération de réception, par un terminal informatique, d'une succession de pages en provenance d'un premier site,
- une opération de détection d'une signature électronique,
- une opération d'édition d'une pluralité de pages de ladite succession,
- ladite signature électronique dépendant de ladite pluralité de pages.

Selon des caractéristiques particulières, le procédé visé par le quatorzième aspect de la présente invention comporte une opération d'affichage conjoint d'information représentative de ladite pluralité de pages.

Selon des caractéristiques particulières, le procédé visé par le quatorzième aspect de la présente invention comporte une opération de transmission d'une information représentative de ladite opération de mémorisation en association avec une opération de transmission de signature électronique.

Selon un quinzième aspect, la présente invention vise un procédé de gestion de mémoire,
caractérisé en ce qu'il comporte :
- une opération de détermination d'au moins une donnée dite "à protéger",
- au moins deux opérations de communication par l'intermédiaire d'un réseau de communication, et, pour chaque opération de communication :
   . une opération de détermination de préparation de transmission de données à protéger au cours de ladite opération de communication,
   . une opération de mémorisation de données reçues au cours de dites opération de communication, et d'un indicateur de détermination ou non de préparation de transmission de données à protéger,
- une opération de détermination de nécessité d'effacer certaines données mémorisées, et
- lorsqu'il est nécessaire d'effacer des données mémorisées, une opération d'effacement au cours de laquelle des données mémorisées sont traitées différemment en fonction de leur date de mémorisation et de la valeur dudit indicateur.

Selon un seizième aspect, la présente invention vise un procédé de gestion de mémoire,
caractérisé en ce qu'il comporte :
- une opération de détermination d'au moins deux niveaux de protection de données dites "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, et d'un indicateur de niveau de protection de données à protéger dont une préparation de transmission a été déterminée,
- une opération de détermination de nécessité d'effacer certaines données mémorisées, et
- lorsqu'il est nécessaire d'effacer des données mémorisées, une opération d'effacement au cours de laquelle des données mémorisées sont traitées différemment en fonction de leur date de mémorisation et de la valeur dudit indicateur.

Selon des caractéristiques particulières du procédé visé par le seizième aspect de la présente invention, l'opération de détermination de nécessité comporte une opération de comparaison d'un espace mémoire avec une valeur d'espace mémoire prédéterminée.

Selon un dix-septième aspect, la présente invention vise un procédé de gestion de mémoire,
caractérisé en ce qu'il comporte :
- une opération de détermination d'au moins une donnée dite "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, ladite opération de mémorisation dépendant de ladite détermination ou non de préparation de transmission de données à protéger.

Selon des caractéristiques particulières du dix-septième aspect de la présente invention, l'opération de mémorisation comporte une opération de cryptage des données mémorisées.

Selon un dix-huitième aspect, la présente invention vise un procédé de gestion de mémoire,
caractérisé en ce qu'il comporte :
- une opération de détermination d'au moins une donnée dite "à protéger",
- au moins deux opérations de communication par l'intermédiaire d'un réseau de communication, et pour chaque opération de communication :
   . une opération de détermination de transmission de données à protéger au cours de ladite opération de communication,
   . une opération de mémorisation de données représentatives de données reçues au cours de dites opération de communication, ladite opération de mémorisation dépendant de ladite détermination ou non de transmission de données à protéger, et
   . une opération de transmission à destination dudit réseau d'une information représentative de ladite opération de mémorisation.

Selon des caractéristiques particulières du dix-huitième aspect, ladite opération de transmission d'une information représentative de ladite opération est effectuée par courrier électronique.

Selon un dix-neuvième aspect, la présente invention vise un procédé de gestion de mémoire,
caractérisé en ce qu'il comporte :
- une opération de détermination d'au moins deux niveaux de protection de données dites "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, ladite mémorisation dépendant du niveau de protection de données à protéger déterminé au cours de ladite opération de détermination.

Selon des caractéristiques particulières du procédé visé par le dix-neuvième aspect de la présente invention, l'opération de mémorisation met en oeuvre différents formats de données, en relation avec le résultat de ladite opération de détermination.

Un vingtième aspect de la présente invention vise un procédé de protection de données,
caractérisé en ce qu'il comporte :
- une opération de sélection de contexte logiciel de protection de données dites "à protéger", au cours de laquelle un utilisateur détermine dans quel cas parmi au moins deux des cas suivants, des données à protéger doivent être protégées;
   . hors communication sur un réseau de communication international,
   . pour des communications de courriers électroniques sur un réseau de communication international, et/ou
   . pour des visites de sites Internet web;
- une opération de détection d'utilisation, par un utilisateur, de données à protéger, dans l'un des contextes logiciels sélectionnés; et
- une opération de mémorisation d'une information représentative de ladite utilisation.

Un vingt-et-unième aspect de la présente invention vise un procédé de mémorisation de données, caractérisé en ce qu'il comporte :
- une opération de communication, par l'intermédiaire d'un réseau de communication, au cours de laquelle des données sont échangées entre un terminal et ledit réseau,
- une opération de mémorisation de données provenant dudit réseau de communication au cours de ladite opération de communication,
- au cours de ladite opération de mémorisation, une opération de détermination de nécessité de conserver lesdites données mémorisées, en fonction des données émises sur ledit réseau par ledit terminal au cours de ladite opération de communication, et
- une opération de conservation desdites données mémorisées dépendant du résultat de ladite opération de détermination de nécessité de conserver lesdites données mémorisées.

Un vingt-deuxième aspect de la présente invention vise un procédé d'information contextuel,
caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant du premier serveur distant sont échangées avec un deuxième serveur distant,
- au cours de ladite première opération de communication, une opération de détermination de nécessité d'afficher lesdites deuxièmes données, en fonction des premières données émises par le terminal au cours de ladite première opération de communication, et
- une opération d'affichage desdites deuxièmes données dépendant du résultat de ladite opération de détermination de nécessité d'afficher lesdites deuxièmes données.

Selon des caractéristiques particulières du vingt-deuxième aspect, lesdites deuxièmes données sont représentatives de pages fournies par ledit premier serveur distant.

Selon des caractéristiques particulières du vingt-deuxième aspect, le procédé comporte une opération de mémorisation de tout ou partie desdites premières données et de tout ou partie desdites deuxièmes données.

Un vingt-troisième aspect de la présente invention vise un procédé de conservation de données à distance, caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant des premières données sont reçues par un deuxième serveur distant,
- au cours de ladite première opération de communication, une opération de détermination de nécessité de conserver lesdites deuxièmes données, en fonction des premières données émises par le terminal au cours de ladite première opération de communication, et
- une opération de conservation desdites deuxièmes données dépendant du résultat de ladite opération de détermination de nécessité de conserver lesdites deuxièmes données.

Selon des caractéristiques particulières du vingt-troisième aspect, lesdites deuxièmes données sont des adresses de pages fournies par ledit premier serveur et, au cours de l'opération de conservation, au moins un type de données, par exemple les données textes, situées audites adresses sont conservées.

Selon des caractéristiques particulières du vingt-troisième aspect, lesdites deuxièmes données comportent un identificateur du premier serveur distant, du terminal, de la date de la première opération de communication.

Selon des caractéristiques particulières du vingt-troisième aspect, lesdites deuxièmes données sont représentatives des premières données qui sont affichées sur ledit terminal.

Un vingt-quatrième aspect de la présente invention vise un procédé de conservation de données à distance, caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant des premières données sont reçues par un deuxième serveur distant,
- au cours de ladite première opération de mémorisation, une opération de détermination de nécessité de conserver lesdites premières et deuxièmes données, en fonction des premières données émises par le terminal au cours de ladite première opération de communication, et
- une opération de conservation desdites premières données par ledit terminal et desdites deuxièmes données par ledit deuxième serveur, dépendant du résultat de ladite opération de détermination de nécessité de conserver lesdites premières et deuxièmes données.

Selon des caractéristiques particulières du vingt-quatrième aspect, lesdites premières données et lesdites deuxièmes données ne sont pas conservées dans les mêmes formats.

Selon un vingt-cinquième aspect, la présente invention vise un procédé d'enregistrement de données échangées entre un terminal et un site distant, caractérisé en ce qu'il comporte l'affichage d'un témoin sur ledit terminal, ledit témoin variant entre au moins deux états visibles lorsqu'un enregistrement est en cours et au moins l'un des deux états visibles n'étant pas affiché lorsque l'enregistrement n'est pas en cours.

Selon un vingt-sixième aspect, la présente invention vise un procédé de conservation de données relatives à une communication sur un réseau de communication, caractérisé en ce qu'il comporte :
- une opération de mise en mémoire desdites données associées à une date de mise en mémoire,
- une opération de détermination de nécessité de comprimer lesdites données, en fonction de la date de leur mise en mémoire, et lorsque ladite opération de détermination indique qu'il est nécessaire de comprimer lesdites données, une opération de compression desdites données et de mémorisation de données secondaires représentatives desdites données primaires.

Selon des caractéristiques particulières du vingt-sixième aspect, ladite opération de compression comporte une opération de reconnaissance optique de caractères.

Selon des caractéristiques particulières du vingt-sixième aspect, ladite opération de compression comporte la sélection de formats de données et d'élimination de données qui n'ont pas un format sélectionné.

Selon des caractéristiques particulières, ladite opération de compression comporte la sélection d'au plus deux images par page de données reçues d'un site Internet web.

Selon un vingt-septième aspect, la présente invention vise un procédé de communication,
caractérisé en ce qu'il comporte une opération de communication d'informations entre au moins deux personne et une opération d'ajout d'information à ladite communication, en fonction d'au moins l'un des critères suivants :
- l'identité de l'une desdites personnes, et/ou
- le contenu desdites informations communiquées.

Selon des caractéristiques particulières du vingt-septième aspect, ladite information ajoutée comporte une limitation de la portée juridique de ladite communication.

D'autres avantages, buts et caractéristiques de la présente invention ressortiront de la description qui va suivre, faite dans un but explicatif et nullement limitatif, en regard des dessins annexés dans lesquels :
- la figure 1 représente un mode de réalisation d'un dispositif adapté à la mise en oeuvre du procédé visé par la présente invention,
- la figure 2 représente un organigramme d'un premier mode de mise en oeuvre du premier aspect du procédé visé par la présente invention,
- la figure 3 représente un organigramme d'un deuxième mode de mise en oeuvre du premier aspect du procédé visé par la présente invention,
- la figure 4 représente un organigramme de mise en oeuvre du deuxième et du huitième aspects du procédé visé par la présente invention,
- les figures 5A et 5B représentent un organigramme de mise en oeuvre du sixième aspect de la présente invention;
- la figure 6 représente un écran de visualisation au cours d'une opération de relecture de l'organigramme illustré en figure 5,
- la figure 7 représente un organigramme de mise en oeuvre du troisième aspect du procédé visé par la présente invention,
- la figure 8 représente des fonctions mises en oeuvre dans différents systèmes informatiques reliés à un réseau de communication au cours d'un premier exemple de succession d'opération mises en oeuvre conformément au quatrième aspect du procédé visé par la présente invention,
- la figure 9 représente des fonctions mises en oeuvre dans différents systèmes informatiques reliés à un réseau de communication au cours d'un deuxième exemple de succession d'opérations mises en oeuvre conformément au quatrième aspect du procédé visé par la présente invention.
- la figure 10 représente un écran de visualisation au cours de la mise en oeuvre d'un autre mode de réalisation du procédé objet de la présente invention,
- la figure 11 représente un organigramme de fonctionnement du dispositif illustré en figure 1, selon le mode de réalisation du procédé objet de la présente invention illustré en figure 10,
- la figure 12 représente un organigramme de fonctionnement du dispositif illustré en figure 1, selon un autre mode de réalisation du procédé objet de la présente invention,
- la figure 13 représente un écran de visualisation au cours de la mise en oeuvre du mode de réalisation du procédé objet de la présente invention illustré en figure 12,
- la figure 14 représente un organigramme de fonctionnement de chacun des modes de réalisation illustrés en figures 11 et 12,
- la figure 15 représente un organigramme de fonctionnement d'un aspect particulier de la présente invention,
- la figure 16 représente un organigramme de fonctionnement du dispositif illustré en figure 1, pour la mise en oeuvre du cinquième aspect de la présente invention, et
- la figure 17 représente des fonctions mises en oeuvre dans différents systèmes informatiques reliés à un réseau de communication au cours d'un troisième exemple de succession d'opération mises en oeuvre conformément au quatrième aspect du procédé visé par la présente invention,
- la figure 18 représente un autre mode de réalisation de la présente invention, en relation avec le mode de réalisation de dispositif illustré en figure 1.
- la figure 19 représente un autre mode de réalisation de la présente invention, en particulier adaptée au cas des terminaux mobiles, et
- la figure 20 représente un autre mode de réalisation de la présente invention, en relation avec la mise en oeuvre d'une signature électronique.

Pour certains des aspects de la présente invention, préférentiellement, le procédé est implémenté en tâche de fond pour ne pas perturber le fonctionnement auquel l'utilisateur est habitué, jusqu'à ce qu'un événement de déclenchement survienne, soit volontairement de la part de l'utilisateur, soit par détection d'une information confidentielle à protéger.

Pour chacun des aspects de la présente invention, au moins une partie d'un logiciel qui le met en oeuvre réside préférentiellement dans le terminal de l'utilisateur ou dans un serveur d'un fournisseur d'accès au réseau concerné.

Chacun des aspects de la présente invention participe à la définition d'un procédé et d'un dispositif d'assistance à un utilisateur d'un réseau de communication. Dans la suite de la description, le terme « logiciel d'assistance » fait référence à un exemple particulier d'implémentation de certains aspects du procédé et du dispositif visé par la présente invention.

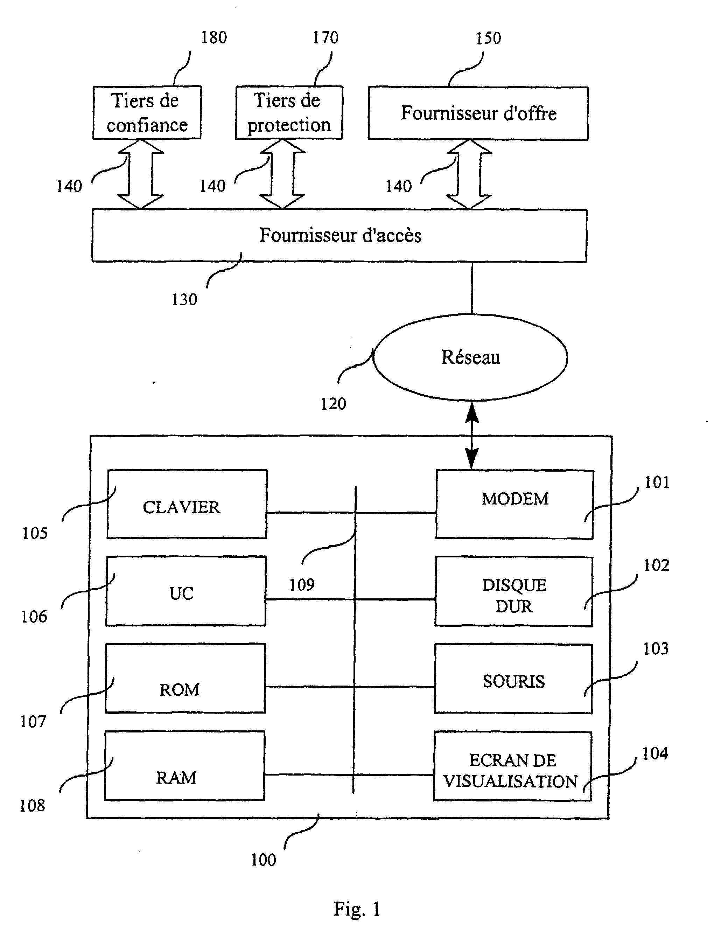

En figure 1 sont représentés un terminal informatique 100, connecté, par l'intermédiaire d'un réseau 120, d'un serveur d'un fournisseur d'accès 130 et d'un réseau 140, à un site informatique distant 150. Dans le premier mode de réalisation illustré en figure 1, le terminal 100 comporte, reliés entre eux par un bus d'adresses et de données 109, une interface de communication sur un réseau 101, une unité de sauvegarde non volatile 102, un dispositif de pointage 103, un écran de visualisation 104, un clavier 105, une unité centrale 106, une mémoire centrale non volatile 107 et une mémoire vive 108.

Le réseau 120 est, par exemple, le réseau téléphonique commuté. Le serveur du fournisseur 5 d'accès 130 est, par exemple, le serveur du fournisseur d'accès au réseau Internet connu sous le nom d'AOL (marque déposée) ou de WANADOO (marque déposée). Le réseau 140 est, par exemple, le réseau de communication informatique connu sous le nom d'Internet. Le site informatique distant 150 est mis en oeuvre par un serveur informatique ou un ordinateur programmé à cet effet selon des techniques connues.

Dans le premier mode de réalisation illustré en figure 1, le terminal 100 est un ordinateur personnel connu sous le nom de PC (acronyme de Personal Computer pour ordinateur personnel) ou un ordinateur de réseau, connu sous le nom de NC (acronyme de Network Computer pour ordinateur de réseau). L'interface de communication sur un réseau 101 est, dans le premier mode de réalisation décrit et représenté, un modulateur-démodulateur ou MODEM. L'unité de sauvegarde non volatile 102, est, dans le premier mode de réalisation décrit et représenté, un disque dur ou un lecteur/enregistreur de disques compacts. Le dispositif de pointage 103, est, dans le premier mode de réalisation décrit et représenté, une souris informatique. L'écran de visualisation 104 est de type connu, par exemple à tube cathodique et compatible avec la norme connue de l'homme du métier sous le nom de SVGA.

Le clavier 105 comporte au moins des touches qui, seules ou en combinaison, permettent de sélectionner des caractères alphanumériques. L'unité centrale 106 est, dans le premier mode de réalisation décrit et représenté, un processeur, par exemple des marques déposées Intel Pentium. La mémoire centrale non volatile 107 conserve les instructions de programme du processeur 106 qui lui permettent de démarrer lorsqu'il commence à être alimenté en électricité. Le mémoire vive 108 est, dans le premier mode de réalisation décrit et représenté, une mémoire cache adaptée à conserver des informations représentatives d'au moins une page reçue de la part d'un site tel que le site informatique distant 150.

Pour la mise en oeuvre de certains aspects de la présente invention, le terminal 100 est relié, par l'intermédiaire du réseau 140 à un site tiers d'assistance ou de protection 170 et/ou à un site tiers de confiance 180. Le site tiers de protection 170 et le site tiers de confiance 180 possèdent, chacun un serveur qui conserve des pages Internet. En variante, au moins l'un de ces sites 170 et 180 est confondu avec celui du fournisseur d'accès 130.

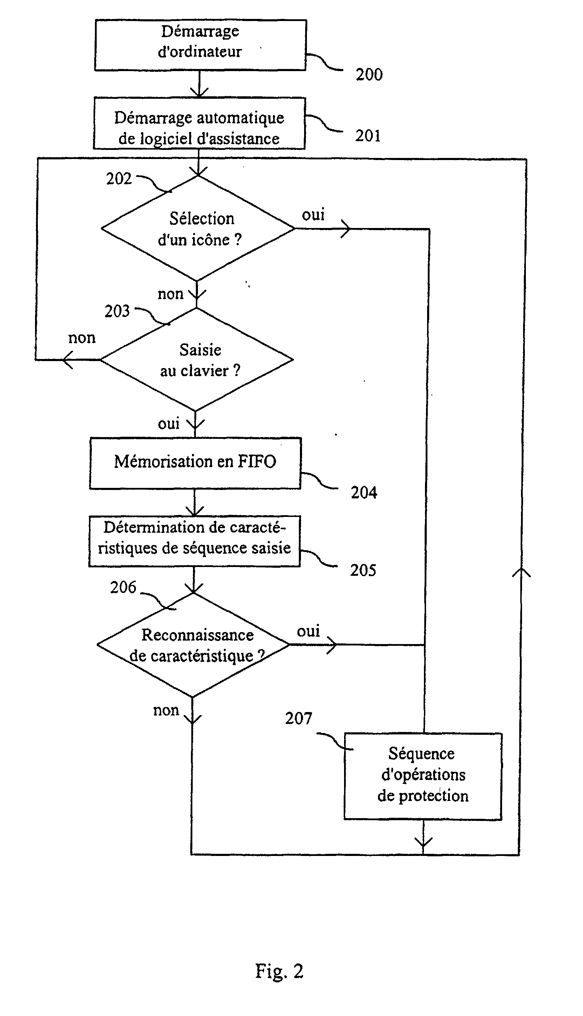

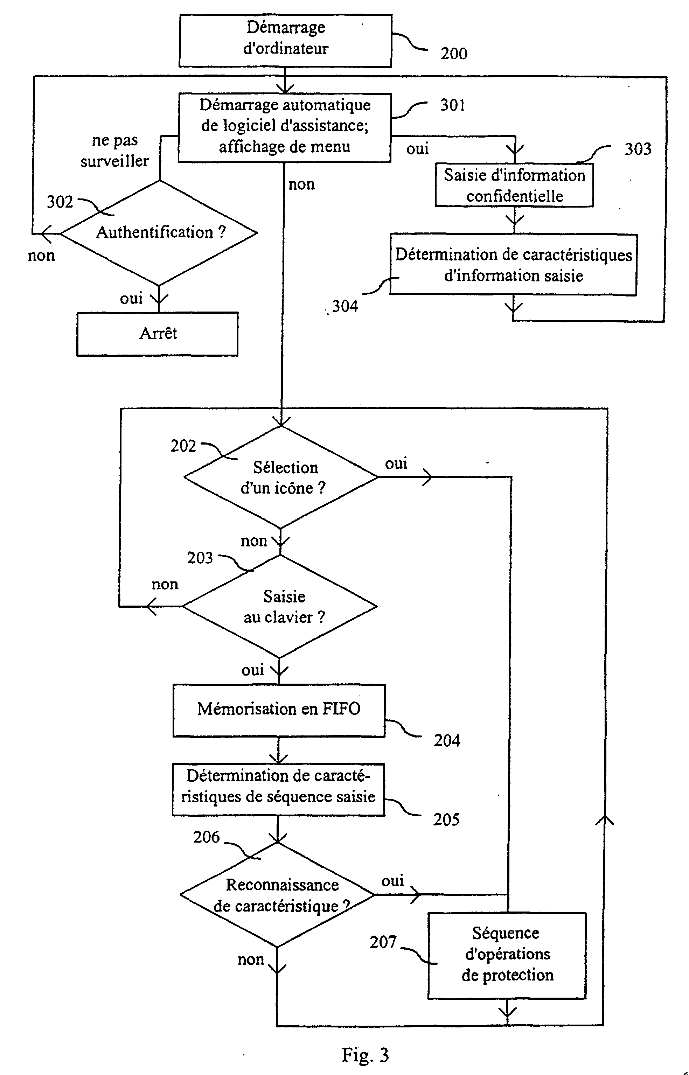

D'une manière générale, selon le premier aspect de la présente invention, lorsqu'un utilisateur met en fonctionnement un système informatique, le logiciel d'assistance qui met en oeuvre certains des aspects de la présente invention est initialisé et fonctionne en tâche de fond. Ensuite, alors que l'utilisateur utilise ce système informatique, le logiciel d'assistance surveille la fourniture d'informations à protéger. Ces informations sont définies par leur forme (voir par exemple l'organigramme illustré en figure 2) ou par leur valeur particulière (voir par exemple l'organigramme illustré en figure 3). Lorsqu'une information a protéger est détectée en tâche de fond, une opération de protection de cette information est effectuée.

La figure 2 représente un organigramme d'un premier mode de mise en oeuvre du premier aspect du procédé visé par la présente invention. A la suite d'une opération 200 de démarrage du terminal 100, au cours d'une opération 201, le logiciel d'assistance est automatiquement démarré.

Au cours de l'utilisation du terminal 100 et de manière connue, l'utilisateur effectue des sélections en mettant en oeuvre la souris 103 ou des saisies de symboles en utilisant le clavier 105.

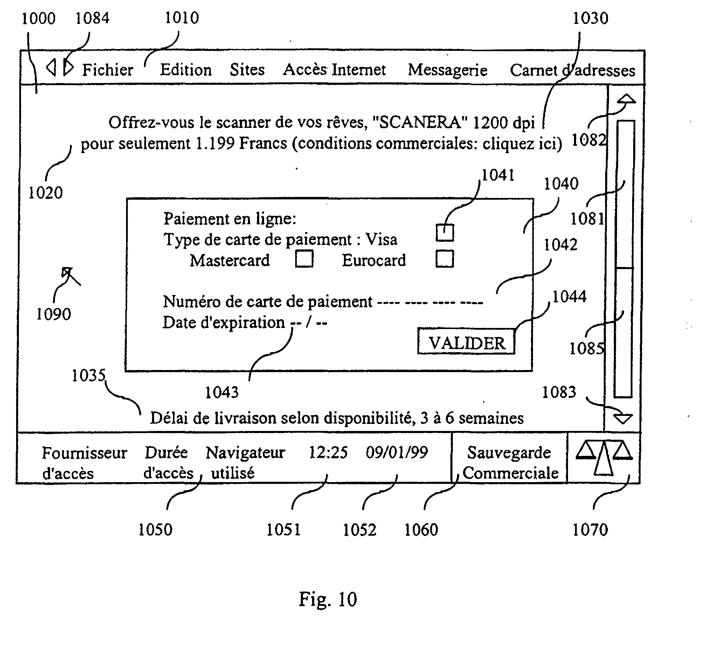

Au cours d'un test 202, l'unité centrale 106 détermine si un icône spécifique à la mise en oeuvre du premier aspect du procédé visé par la présente invention a été sélectionné par l'utilisateur, ou non. Cet icône spécifique peut être un icône, telle que icône 1070 illustré en figure 10 et représenté sur l'écran de visualisation 104, soit un icône qui représente une mémoire d'informations personnelles, connue sous le nom anglais de « valet » ou « wallet », dans les logiciels de navigation (ou « browser ») sur Internet.

Lorsque le résultat du test 202 est négatif, au cours d'une opération 203, l'unité centrale 106 détermine si un symbole a été saisi au clavier 105. Lorsque le résultat du test 203 est négatif, le test 202 est réitéré. Lorsque le résultat du test 203 est positif, au cours d'une opération 204, le symbole saisi est mis en mémoire dans un registre « premier entré premier sorti » (connu de l'homme du métier sous l'acronyme anglais FIFO pour First In, First Out) qui possède une dimension au moins égale à la plus grande des séquences de symboles dont la diffusion est protégée. Au cours d'une·opération 205, des caractéristiques de reconnaissance de la séquence saisie sont déterminées. Ces caractéristiques de reconnaissance sont des informations qui caractérisent la séquence conservée dans le registre premier entré premier sorti et qui sont destinées à être comparées à des caractéristiques de reconnaissance de séquences protégées.

Par exemple, la reconnaissance a lieu par comparaison du contenu de la mémoire FIFO avec des séquences de symboles à protéger ou des segments de ces séquences et les caractéristiques sont alors la séquence elle-même ou un ou plusieurs de ses segments.

Selon un autre exemple, si l'information protégée est un numéro de sécurité sociale ou un numéro de carte de paiement, des caractéristiques peuvent être constituées du nombre de chiffres entrés consécutivement et de la vraisemblance que certains de ces chiffres représentent un mois, une année, une indication de sexe, une information de redondance par rapport aux autres chiffres ou de toute autre fonction, éventuellement à sens unique, qui fournit au moins une caractéristique.

Par exemple, un numéro de carte de crédit possède 16 chiffres, qui possèdent entre eux une relation, et une date de péremption sous forme de deux chiffres pour le mois et deux chiffres pour l'année, l'année ne pouvant être plus de quelques années après la date d'émission de la carte de crédit. Ceci fournit plusieurs caractéristiques d'un numéro de carte de crédit, sans qu'il soit nécessaire d'identifier ce numéro.

Par exemple, un numéro de sécurité sociale français possède les caractéristiques suivantes (sauf très rares exception):
- il comporte 13 chiffres
- le premier chiffre est égal soit à 1, soit à 2,
- le quatrième chiffre est soit 0, soit 1,
- le cinquième est 1 ou 2 lorsque le quatrième chiffre est 1.

Au cours d'un test 206, l'unité centrale 106 détermine si des caractéristiques déterminées au cours de l'opération 205 correspondent à des caractéristiques d'une information à protéger.

Lorsque le résultat du test 206 est négatif, le test 202 est réitéré. Lorsque le résultat du test 202 ou le résultat du test 206 est positif, au cours d'une opération 207, l'information à protéger dont au moins une caractéristique a été reconnue est protégée.

A cet effet, au cours de l'opération 207, l'utilisateur est interrogé sur la saisie en cours par un affichage d'un message dans une fenêtre représentée sur l'écran de visualisation 104, « Etes-vous en train de saisir XXX » où XXX est remplacé par un nom d'information protégé, par exemple « numéro de carte de paiement, numéro de sécurité sociale, code confidentiel, ..., et l'utilisateur doit choisir de sélectionner soit « oui » soit « non ».

Puis lorsque l'utilisateur a choisi « non », l'opération 207 est achevée et lorsque l'utilisateur a choisi « oui », au moins une des opérations de protection exposés dans la mise en oeuvre des autres aspects de la présente invention est mise en oeuvre (effacement des symboles de l'information à protéger, par exemple par simulation d'entrée de touche d'effacement « backspace », mise en mémoire de la succession d'opération effectuée depuis l'opération 201, mise en relation avec un site tiers de protection 170, authentification de l'utilisateur comme personne autorisée à divulguer l'information à protéger, datation, affichage d'information légales, par exemple).

A la suite de l'opération 207, le test 202 est réitéré et les opérations 202 à 206 se succèdent en tâche de fond, jusqu'à ce que le terminal soit arrêté de manière connue.

La figure 3 représente un organigramme d'un deuxième mode de mise en oeuvre du premier aspect du procédé visé par la présente invention. Ce deuxième mode de réalisation comporte les mêmes opérations que le premier mode, à l'exception de l'opération 201 qui est remplacée par des opérations 301 à 304 et l'opération 205 qui est remplacée par une opération 305.

Au cours de l'opération 301, le logiciel d'assistance est automatiquement mis en fonctionnement et provoque l'affichage par l'écran de visualisation 104, dans une fenêtre de dialogue, d'une question de saisie de nouvelles informations à protéger (par exemple "souhaitez-vous entrer de nouvelles informations confidentielles à protéger ?") et de trois réponses possibles que l'utilisateur peut sélectionner par l'intermédiaire de la souris 103, « oui », « non », « ne pas démarrer la surveillance ». Lorsque « ne pas démarrer la surveillance » est mis en oeuvre, une opération d'authentification 302 est effectuée. Si l'utilisateur est authentifié, le fonctionnement du logiciel d'assistance est arrêté. Si l'utilisateur n'est pas authentifié, l'opération 301 est réitérée. Lorsque « non » est sélectionné, le test 202 est effectuée. Lorsque « oui » est sélectionné, au cours d'une opération 303, l'utilisateur est invité à saisir un identifiant de l'information à protéger (par exemple en sélectionnant « valet » ou « walet », « carte de paiement », « numéro de sécurité sociale », « nom », « numéro de permis de conduire », « numéro de carte d'identité », « date de naissance », « adresse », « code d'accès à Internet », « code d'accès au compte bancaire », « autre » ...), puis, une partie des informations à protéger, par exemple les huit premiers chiffres des cartes de paiement à protéger, les six premiers chiffres de son numéro de sécurité sociale, le jour et le mois de sa naissance, les premières lettres de la rue où il habite, les premiers chiffres de son code postal, ...

Puis, au cours d'une opération 304, des caractéristiques de reconnaissance de l'information à protéger sont déterminées de la même manière qu'au cours de l'opération 305 et ces caractéristiques sont mises en mémoire non volatile 102. A la suite de l'opération 304, l'opération 301 est réitérée.

On observe que ces caractéristiques peuvent être constituées de l'intégralité de l'information à protéger, en particulier lorsque l'identification d'information à protéger « autre » a été sélectionnée. Les caractéristiques peuvent aussi être constituées d'un nombre prédéterminé de premiers chiffres du numéro protégé ou de toute autre fonction, éventuellement à sens unique, qui fournit au moins une caractéristique. Le lecteur pourra s'inspirer des procédés de production de redondances pour la correction d'erreurs de transmission (connu sous l'acronyme anglais de FEC pour Forward Error Correction), par exemple les sommes de vérifications connues sous le nom anglais de « checksum ».

Pour les informations conservées dans le registre « valet » ou « wallet », l'utilisateur fournit le nom du logiciel de navigation qu'il utilise ou le met en oeuvre et sélectionne « valet » ou « wallet », de telle manière que l'adresse mémoire à protéger ou le moyen d'y accéder soit déterminé automatiquement par le logiciel d'assistance.

Au cours de l'opération 305, des caractéristiques de reconnaissance de la séquence de symboles en mémoire sont déterminées de la même manière qu'au cours de l'opération 304.

On observe ici que seulement deux moyens d'entrée de données sont mis en oeuvre en figures 2 et 3. Cependant, d'autres moyens d'entrée de données, comme un microphone associé à une logiciel de reconnaissance de la parole, comme un scanner associé à un logiciel de reconnaissance optique de caractères, comme une caméra, peuvent être mis en oeuvre conformément au premier aspect de la présente invention.

On observe aussi que les informations à protéger peuvent prendre d'autres formes qu'une séquence de symboles, comme par exemple, une image de fond de l'oeil, une signature vocale, une signature saisie par utilisation de la souris, une empreinte lue par un capteur optique ou thermique, ...

Dans une variante non représentée, les opérations 201 à 207 ne sont mises en oeuvre automatiquement que lorsque une communication est mise en oeuvre. Ainsi, lorsque des enfants accèdent à un site informatique, par exemple par l'intermédiaire de l'Internet, des informations confidentielles sont protégées.

D'une manière générale, selon le deuxième aspect de la présente invention, des contenus de fichiers informatiques reçus sur un réseau de communication sont mis en mémoire et cet espace mémoire est géré de manière à prévenir qu'il sature l'espace mémoire total disponible pour les autres applications. La mise en mémoire et l'effacement des contenus reçus sur le réseau est hiérarchisé.

D'une manière générale, selon le huitième aspect de la présente invention, lorsque la transmission d'un ensemble d'information échoue à cause d'une limitation de la bande passante disponible ou de la durée de transmission maximale autorisée pour un ensemble, une requête de transmission d'un sous-ensemble dudit ensemble comportant strictement moins d'information que l'ensemble, est automatiquement émise. Préférentiellement, l'ensemble correspond à plusieurs fichiers et le sous-ensemble comporte un ou plusieurs desdits fichiers.

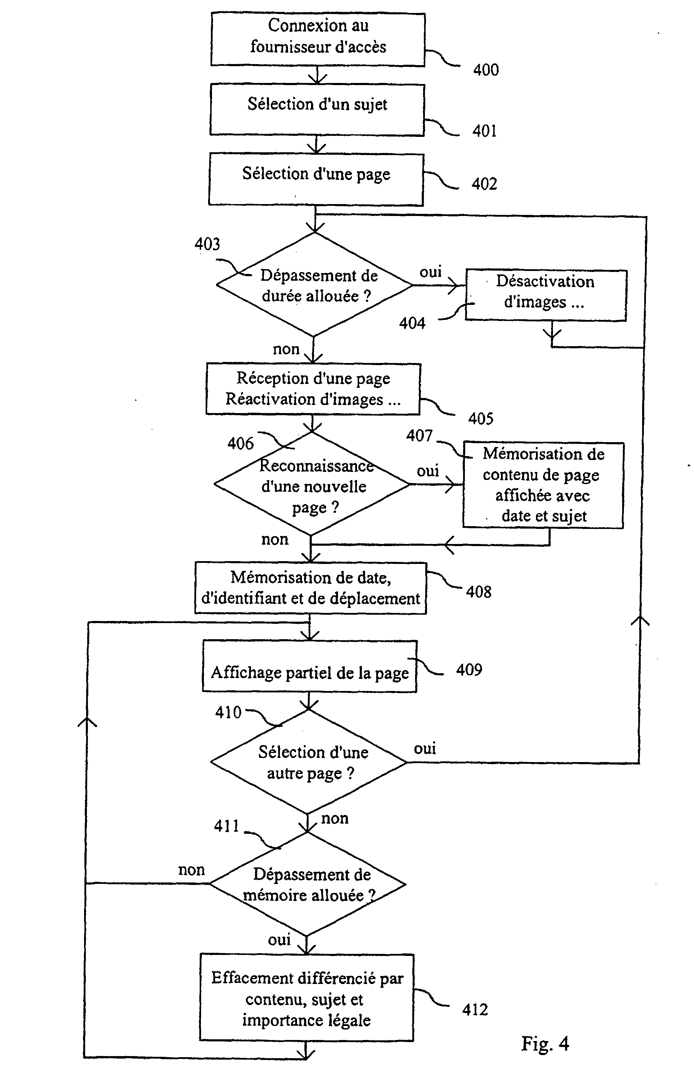

La figure 4 représente un organigramme de mise en oeuvre du deuxième aspect du procédé visé par la présente invention, dans lequel un espace mémoire est géré.

Au cours d'une opération 400, l'utilisateur provoque l'ouverture d'une session de communication entre le terminal 100 et le fournisseur d'accès 130, par l'intermédiaire du réseau 120, de manière connue. Au cours d'une opération 401, le logiciel d'assistance provoque l'affichage d'une fenêtre de sélection et d'un menu comportant un ou plusieurs sujets que l'utilisateur a déjà choisi et/ou une option de définition d'un nouveau sujet. L'utilisateur choisi l'un des sujets affichés et/ou identifie un nouveau sujet. Par exemple, ces sujets peuvent être « bourse », « sport », « voitures », « matériels audiovisuels », « autres » .... Dès que l'utilisateur a sélectionné un sujet, la fenêtre de sélection est effacée de l'écran de visualisation 104.

Puis, au cours d'une opération 402, l'utilisateur sélectionne, de manière connue ou en partant de l'une des pages déjà mises en relation avec le sujet qu'il a sélectionné (A cet effet, lorsque l'utilisateur a choisi un sujet, il peut sélectionner et voir afficher une liste des dernières pages visitées en relation avec le sujet choisi, de la même manière que les logiciels de navigation offrent une liste de sites dit « favoris ». L'utilisateur peut alors cliquer sur une adresse affichée), une page Internet qu'il souhaite visualiser et une requête est transmise, par l'intermédiaire du fournisseur d'accès 130 à un site qui conserve les informations relatives à la page sélectionnée.

Le site en question transmet ces informations au terminal 100, par l'intermédiaire du réseau 120. En général, la transmission est effectuée avec une bande passante limitée en fonction du trafic existant sur le réseau. Il arrive alors que le fournisseur d'accès arrête la transmission lorsqu'une durée prédéterminée est dépassée. Par exemple, lorsqu'à la fin d'une durée de 20 secondes, les informations relatives à la structure de la page n'ont pas été transmises, le fournisseur d'accès transmet un message d'échec de transmission. Au cours du test 403, l'unité centrale 106 détermine si un tel message a été reçu. Lorsque le résultat du test 403 est positif, c'est-à-dire en cas d'échec de la transmission de la page, au cours d'une opération 404, la transmission d'une partie du contenu de la page est désactivé, la requête de transmission de la page est retransmise et le test 403 est réitéré.

Par exemple, si, pour la même page, plusieurs échecs de transmission se succèdent, les contenu suivants sont successivement désactivés :
- fichiers image animée (par exemple fichiers MPEG),
- fichiers image fixe (par exemple fichiers JPEG),
- fichiers sons (par exemple fichiers WAVE),
- fichiers graphiques.

Selon un autre exemple, le contenu de la page étant décrit au format MPEG-7, les fichiers désactivés sont classés en fonction de leur contenu.

Selon un troisième exemple, les fichiers désactivés comportent, à chaque itération de l'opération 404, le fichier de plus grande dimension, à l'exception du fichier qui donne la structure de la page et/ou du fichier texte.

Lorsque le résultat du test 403 est négatif, au cours de l'opération 405, au moins une partie du contenu de la page sélectionnée est reçue et les désactivations effectuées au cours de l'opération 404 sont annulées pour la prochaine page à recevoir.

Au cours du test 406, l'unité centrale 106 détermine si la page reçue est différente de toutes les pages conservées en mémoire du terminal 100. A cet effet, l'unité centrale 106 compare l'adresse de la page ainsi que la dimension de chaque fichier à cette page avec l'adresse de toutes les pages conservées en mémoire et la dimension des fichiers mémorisés qui sont relatifs à ladite adresse, si elle est reconnue.

Lorsque la page n'est pas reconnue comme mémorisée, le résultat du test 407 est positif et, au cours d'une opération 407, l'unité centrale 106 provoque la mémorisation de tous les fichiers associés à la page reçue, en relation avec l'adresse de la page, dans le disque dur 102.

Lorsque le résultat du test 406 est négatif, c'est-à-dire si la page reçue est reconnue comme déjà mémorisée, ou à la suite de l'opération 407, au cours d'une opération 408, l'unité centrale 106 mémorise, en relation avec ladite page mémorisée, la date, le sujet sélectionné au cours de l'opération 401, ainsi qu'un lien avec la page précédemment sélectionnée au cours de la même session de communication avec le site qui conserve les informations relatives à la page sélectionnée, s'il l'opération 408 n'est pas effectuée pour la première fois au cours de cette session.

Au cours d'une opération 409, au moins une partie de la page reçue est affichée, selon des techniques connues et l'utilisateur peut déplacer cette page, mettre fin à la session de communication, et plus généralement utiliser toutes les fonctions de son logiciel de navigation.

Au cours d'un test 410, l'unité centrale 106 détermine si une autre page a été sélectionné par l'utilisateur, ou non. Lorsque le résultat du test 410 est positif, une requête de transmission est émise à destination du site qui conserve les informations relative à la nouvelle page sélectionnée, avec validation de la transmission de tous les fichiers attachés à ladite page et le test 403 est effectué.

Lorsque le résultat du test 410 est négatif, au cours d'un test 411, l'unité centrale 106 détermine si la mémoire allouée par l'utilisateur pour la conservation de contenus de pages reçues par le réseau de communication 120 est dépassé, ou non.

On observe ici qu'au cours de l'installation du logiciel d'assistance, l'utilisateur alloue un espace mémoire du disque dur 102 à la mémorisation de contenu de pages.

Lorsque le résultat du test 411 est négatif, l'opération 409 est réitérée. Lorsque le résultat du test 411 est positif, au cours d'une opération 412, les fichiers les plus anciens conservés dans l'espace mémoire allouée à la conservation des pages reçues sont triés en fonction de critères prédéterminés et certains fichiers qui ne respectent pas lesdits critères sont effacés.

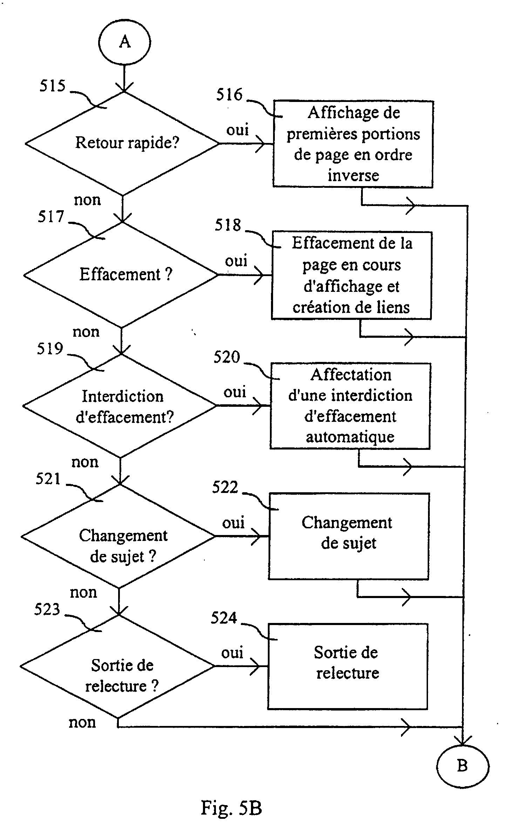

A titre d'exemple, l'utilisateur peut attribuer à certaines pages, une interdiction d'effacement automatique (voir, par exemple, l'opération 519, en figure 5B) et les fichiers qui ont dotées de cette interdiction ne sont pas effacés automatiquement. Au cas où tous les fichiers mémorisés sont dotées de cette interdiction, l'utilisateur est avertis qu'il doit :
- soit alloué un complément d'espace mémoire à la fonction de mémorisation de pages reçues par l'intermédiaire du réseau de communication 120 (il peut alors le faire au cours de l'opération 412,
- soit choisir d'effacer des fichiers relatif à des pages mémorisées (il est alors invité à effectuer un effacement manuel (voir, par exemple, l'opération 517, figure 5B)
- soit autoriser une compression desdits fichiers avec un taux de compression supérieur à celui qui est utilisé pour les fichiers mémorisés (dans ce dernier cas, au cours de l'opération 412, les fichiers images et/ou les fichiers sons, des premières pages mémorisés sont décompressés puis recompressés avec un plus fort taux de compression, jusqu'à ce que l'espace mémoire alloué soit respecté).

A titre de deuxième exemple, non exclusif du premier exemple, les fichiers sont effacés en fonction de leur type, les fichiers images animés, images fixes, puis, sons, puis, graphiques, puis textes étant effacés au bout de durées différentes.

Par exemple, les fichiers images animées sont conservés deux fois moins longtemps que les fichiers images fixe qui sont conservés deux fois moins longtemps que les fichiers sons, qui sont conservés deux fois moins longtemps que les fichiers graphiques qui sont conservés deux fois moins longtemps que les fichiers textes qui sont conservés deux fois moins longtemps que les liens entre les pages qui sont conservés deux fois moins longtemps que les adresses des pages.

A titre de troisième exemple, non exclusif des deux premiers, les informations relatives aux pages les plus anciennement mémorisées sont effacées en premier.

A titre de quatrième exemple, non exclusif des trois premiers, les informations relatives aux différents sujets sont conservés pendant des durées différentes.

A titre de cinquième exemple, non exclusif des quatre premiers, les informations relatives au pages d'un site avec lequel une transaction a été effectuée sont conservés plus longtemps que les autres, et, par exemple, pendant au moins une durée égale à une garantie légale plus un délai de livraison maximal (par exemple, si le délai de garantie est de 12 mois, la durée de conservation des informations sera d'au moins 15 mois).

A la suite de l'opération 412, l'opération 409 est réitérée.

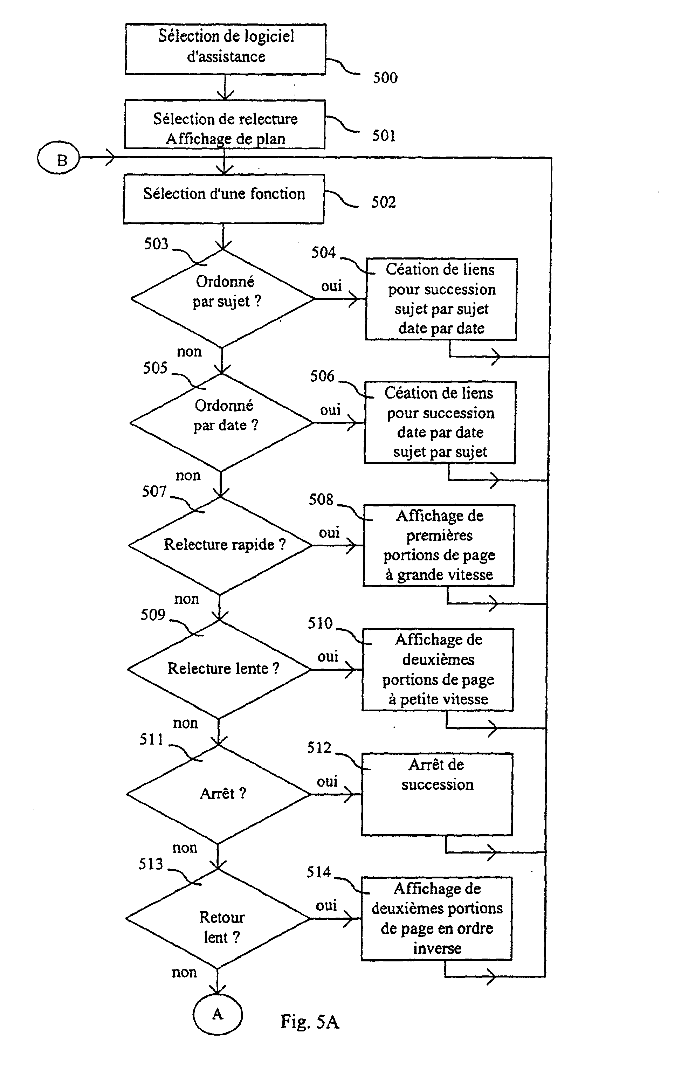

Les figures 5A et 5B représentent un organigramme de mise en oeuvre du sixième aspect de la présente invention. A la suite d'une mise en fonctionnement du logiciel d'assistance, soit automatiquement à la mise en fonctionnement du terminal 100, soit par sélection d'un icône spécifique (non représenté) au cours de l'opération 500, au cours de l'opération 501, l'utilisateur peut sélectionner une fonction de relecture des pages reçues au cours de communications sur un réseau de communication et mémorisées sur le disque dur 102.

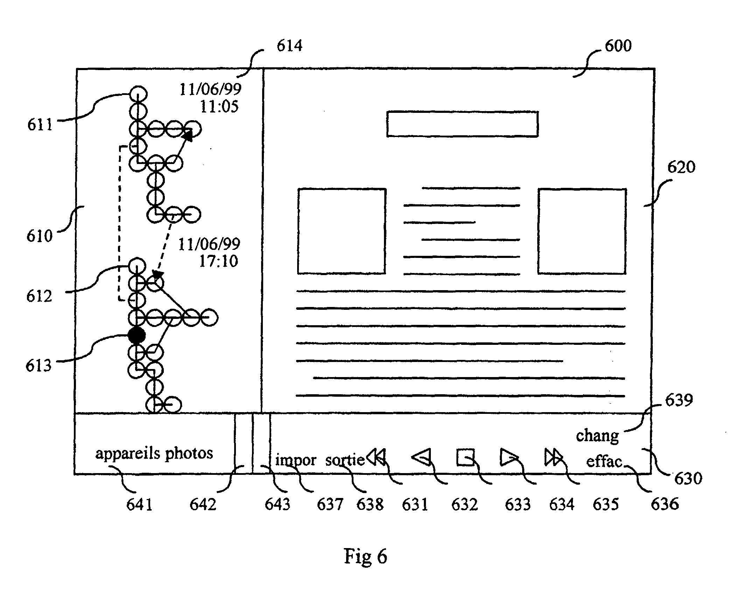

Au cours d'une opération 502, l'utilisateur sélectionne une fonction liée à la relecture, par exemple en utilisant des icônes illustrés en figure 6.

Au cours du test 503, l'unité centrale 106 détermine si la fonction sélectionnée au cours de l'opération 502 est d'ordonner les pages mémorisées par sujet, ou non. Lorsque le résultat du test 503 est positif, au cours d'une opération 504, l'unité centrale 106 affiche une liste des sujets existants et, lorsque l'utilisateur a choisi un sujet, ordonnance les informations conservées en mémoire en relation avec le sujet sélectionné, date par date, en ordre inverse de l'ordre chronologique. A la suite de l'opération 504, l'opération 502 est réitérée.

Lorsque le test 503 est négatif, au cours d'un test 505, l'unité centrale 106 détermine si la fonction sélectionnée au cours de l'opération 502 est d'ordonner les pages mémorisées par date, ou non.. Lorsque le résultat du test 505 est positif, au cours d'une opération 506, l'unité centrale 106 ordonnance les informations conservées en mémoire, date par date, en ordre inverse de l'ordre chronologique. A la suite de l'opération 506, l'opération 502 est réitérée.

Lorsque le test 505 est négatif, au cours d'un test 507, l'unité centrale 106 détermine si la fonction sélectionnée au cours de l'opération 502 est d'effectuer une relecture rapide des pages mémorisées, ou non. Lorsque le résultat du test 507 est positif, au cours d'une opération 508, l'unité centrale 106 affiche des premières portions de page, et chaque page pendant une première durée prédéterminé, dans l'ordre défini par ordonnancement, ou, à défaut, data par date, dans l'ordre chronologique. Les premières portions de page comportent préférentiellement, au moins, l'adresse de la page et, préférentiellement, la partie haute de la page comportant au moins les textes de cette partie haute de la page. Lorsque l'opération 508 est lancée, l'opération 502 peut être réitérée.

Lorsque le test 507 est négatif, au cours d'un test 509, l'unité centrale 106 détermine si la fonction sélectionnée au cours de l'opération 502 est d'effectuer une relecture lentes des pages mémorisées, ou non. Lorsque le résultat du test 509 est positif, au cours d'une opération 510, l'unité centrale 106 affiche des deuxièmes portions de page, et chaque page pendant une deuxième durée prédéterminé plus longue que la première durée prédéterminée, dans l'ordre défini par ordonnancement, ou, à défaut, les fichiers dotés d'une interdiction d'effacement automatique (voir opération 519) avant les autres et, dans chaque groupe, data par date, dans l'ordre chronologique. Les deuxièmes portions de page comportent, préférentiellement, au moins les premières portions. Les deuxièmes portions peuvent comporter les textes de toute la page, avec défilement de la page, de haut en bas, pour afficher ces textes. Ils peuvent, aussi comporter les graphiques, les images fixes, les sons et les images animée. Lorsque l'opération 510 est lancée, l'opération 502 peut être réitérée.

Lorsque le test 509 est négatif, au cours d'un test 511, l'unité centrale 106 détermine si la fonction sélectionnée au cours de l'opération 502 est d'arrêter la relecture, ou non. Lorsque le résultat du test 511 est positif, au cours d'une opération 512, l'unité centrale 106 arrête le défilement sur la page en cours et provoque l'affichage et la diffusion du contenu de chaque fichier associé à ladite page, y compris les fichiers sons et images animées. A la suite de l'opération 512, l'opération 502 est réitérée.

Lorsque le test 511 est négatif, au cours d'un test 513, l'unité centrale 106 détermine si la fonction sélectionnée au cours de l'opération 502 est d'effectuer une relecture lente en sens inverse, ou non. Lorsque le résultat du test 513 est positif, les mêmes opérations qu'au cours de l'opération 510 sont effectuées mais dans l'ordre inverse. Lorsque l'opération 514 est lancée, l'opération 502 peut être réitérée.

Lorsque le test 513 est négatif, au cours d'un test 515, l'unité centrale 106 détermine si la fonction sélectionnée au cours de l'opération 502 est d'effectuer une relecture rapide en sens inverse, ou non. Lorsque le résultat du test 515 est positif, les mêmes opérations qu'au cours de l'opération 508 sont effectuées mais dans l'ordre inverse. Lorsque l'opération 516 est lancée, l'opération 502 peut être réitérée.

Lorsque le test 515 est négatif, au cours d'un test 517, l'unité centrale 106 détermine si la fonction sélectionnée au cours de l'opération 502 est d'effacer des informations, ou non. Lorsque le résultat du test 517 est positif, la page en cours d'affichage reste affichée pendant toute l'opération 518. Une liste des fichiers attachés à la page en cours d'affichage est affichée dans une fenêtre en surimpression sur la page en cours d'affichage et l'utilisateur sélectionne les fichiers qu'il souhaite effacer. Ces fichiers sont alors effacés du disque dur 102. Lorsque l'effacement est opéré, la fonction précédemment sélectionnée avant celle d'effacement est reprise et l'opération 502 peut être réitérée.

Lorsque le test 517 est négatif, au cours d'un test 519, l'unité centrale 106 détermine si la fonction sélectionnée au cours de l'opération 502 est d'affecter la page en cours d'affichage d'une interdiction d'effacement automatique, ou non. Lorsque le résultat du test 519 est positif, au cours d'une opération 520, l'adresse de la page en cours d'affichage est associée à un drapeau qui indique que les fichiers relatifs à cette page ne peuvent être effacés automatiquement, par exemple au cours d'une opération de gestion de mémoire automatique. Lorsque l'opération 520 est effectuée, l'opération 502 peut être réitérée.

Lorsque le test 519 est négatif, au cours d'un test 521, l'unité centrale 106 détermine si la fonction sélectionnée au cours de l'opération 502 est de changer le sujet de référence de la page la page en cours d'affichage, ou non. Lorsque le résultat du test 521 est positif, au cours d'une opération 522, la page en cours d'affichage reste affichée pendant toute la durée de l'opération 522 et, dans une fenêtre superposée à la page en cours d'affichage, les différents sujets référencés ainsi qu'une option de création d'un nouveau sujet sont proposés à l'utilisateur. L'utilisateur sélectionne alors le nouveau sujet auquel la page en cours d'affichage doit être lié et le sujet associé à la page est modifié en mémoire sur le disque dur 102. Lorsque l'opération 522 est effectuée, l'opération 502 peut être réitérée.

Lorsque le test 521 est négatif, au cours d'un test 523, l'unité centrale 106 détermine si la fonction sélectionnée au cours de l'opération 502 est de sortir de la fonction de relecture. Lorsque le résultat du test 523 est positif, la fonction de relecture est arrêtée et une fenêtre de dialogue affichée sur l'écran de visualisation 104 permet à l'utilisateur de sélectionner d'autres fonctions. Lorsque le résultat du test 523 est négatif, l'opération en cours de poursuit, s'il s'agit de l'une des opérations 508, 510, 514 ou 516 et l'opération 502 peut être réitérée.

La figure 6 représente un écran de visualisation 600 au cours d'une opération de relecture de l'organigramme illustré en figure 5. Cet écran 600 correspond, par exemple, à ce qui est affiché par l'écran de visualisation 104 au cours de l'une des opérations 508, 510, 514 et 516, lorsque l'opération 502 peut être réitérée.

Dans l'écran 600, un zone principale 620 représente une partie d'une page relue en mémoire dans le disque dur 102. Une zone graphique 610 représente des pages conservées en mémoire dans le disque dur 102 et leurs liens. Ici les pages reçues à la date du 11/06/99, au cours d'une session de communication entamée à 11 heures et 5 minutes sont représentées dans la partie supérieure de la zone graphique 610 et les premières pages reçues le 11/06/99, au cours d'une session de communication entamée à 17 heures et dix minutes, sont représentées dans la partie basse de zone graphique 610. Chaque page est représentée dans la zone graphique 610 sous forme d'un cercle et deux cercles qui se touchent et dont les centres sont reliés par une ligne droite pleine correspondent à deux pages qui ont été visitées successivement.

Par exemple, une succession de cercles 1 à 5 représentée comme suit

| | | |
|---|---|---|
| 1 | | |
| 2 | 3 | 4 |
| | 5 | |

où les cercles 1 et 2, 2 et 3, 3 et 4 et 3 et 5 se touchent respectivement deux à deux et dont les centres sont reliés par une ligne droite pleine, deux à deux, indiquent que l'utilisateur a visité successivement les pages 1, 2, 3, 4, 3 et 5. Si un lien est indiqué par une ligne droite entre deux cercles qui ne se touchent pas, cela indique que les deux pages représentées possèdent une adresse identiques.

Le cercle noir indique la page en cours de visualisation. Les liens tracés en traits interrompus concerne les pages qui sont représentées dans deux sessions de communication différentes, c'est-à-dire qui ont été reçues au cours de deux sessions différentes. Lorsque l'un de ces traits (plein ou interrompu) comporte une flèche, cela indique que la page a été reçue avec plus d'information au cours de l'occurrence indiquée par la pointe de la flèche qu'au cours de chaque autre occurrence.

La zone de sélection de fonction basse 630 comporte des formes géométriques, dont certaines sont bien connues des utilisateurs de magnétoscope ou de magnétophone et des informations écrites.

Le rectangle le plus à gauche, référencé 641, indique le sujet en cours de relecture, ici « appareils photos ». les rectangles 642 et 643 indiquent qu'il y a deux autres sujets que l'utilisateur peut choisir. Le double triangle orienté à gauche 631 correspond à la relecture rapide en sens inverse de l'ordonnancement sélectionné et permet de sélectionner l'opération 516. Le triangle orienté à gauche 632 correspond à la relecture lente en sens inverse de l'ordonnancement sélectionné et permet de sélection l'opération 514. Le carré 633 correspond à l'arrêt de relecture et permet de sélectionner l'opération 512. Le triangle orienté à droite 634 correspond à la relecture lente dans l'ordre de l'ordonnancement sélectionné et permet de sélection l'opération 510. Le double triangle orienté à droite 635 correspond à la relecture rapide dans l'ordre de l'ordonnancement sélectionné et permet de sélectionner l'opération 508.

Le mot « effac » 636 permet à l'utilisateur de provoquer l'opération 518. Le mot « impor » 637 permet à l'utilisateur de provoquer l'opération 520. Le mot « out » 638 permet à l'utilisateur de provoquer la sortie de la fonction de relecture. Le mot « chang » 639 permet à l'utilisateur de sélectionner l'opération 522.

On observe que l'utilisateur peut sélectionner la prochaine page à afficher directement sur le plan affiché dans la zone 610, par utilisation de la souris 103.

D'une manière générale, selon le troisième aspect de la présente invention, au cours d'une session de communication entre le terminal 100 et un site 150, une deuxième session de communication est ouverte entre le terminal 100 et un site de protection 170 et une information relative au site 150 est transmise automatiquement au site de protection 170. Préférentiellement, n retour, une information relative à la première session de communication est transmise automatiquement au terminal 100 par le site de protection 170.

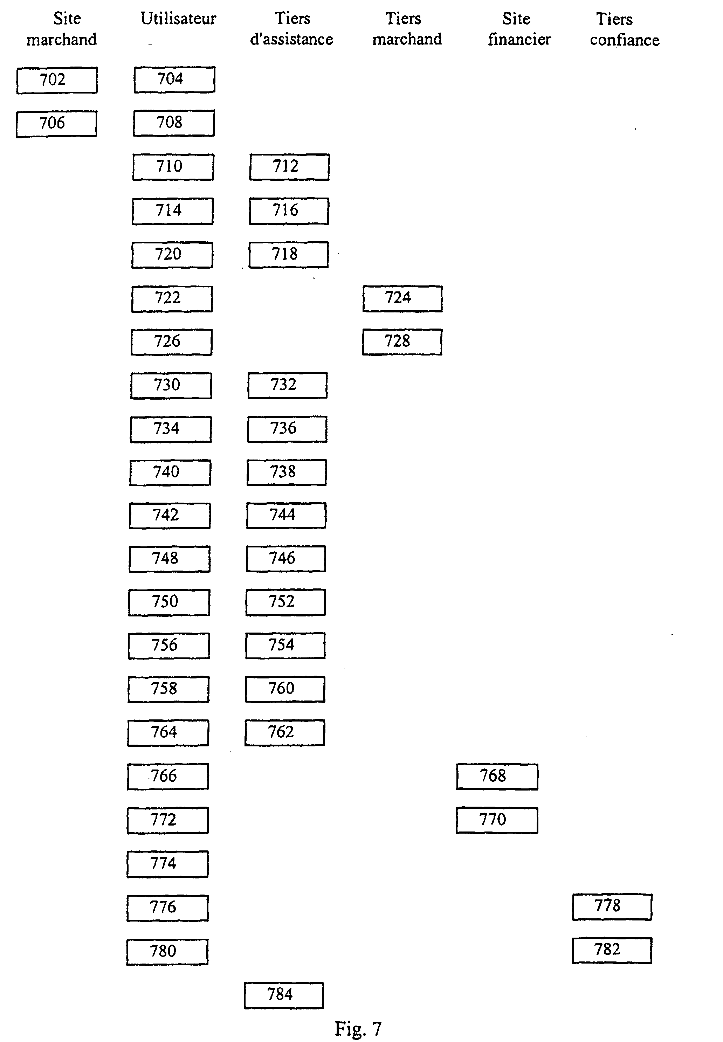

La figure 7 représente un organigramme de mise en oeuvre du troisième aspect du procédé visé par la présente invention.

Au cours d'une opération 702, le site 150 et au cours d'une opération 704, le terminal 100 ouvrent une session de communication entre eux. Au cours d'une opération 706, le site 150 et au cours d'une opération 708, le terminal 100 initient une communication d'information protégée, et, dans le cas illustré en figure 7, une transaction nécessitant un paiement en ligne par transmission d'un identificateur d'un moyen de paiement.

Au cours d'une opération 710, le terminal 100 et au cours d'une opération 712, le tiers de protection ou d'assistance 170 ouvrent une deuxième session de communication. Au cours d'une opération 714, le terminal 100 transmet au site de protection 170 un identifiant du site 150, par exemple sous la forme d'un identifiant de la page en cours d'affichage, et plus particulièrement l'adresse de ladite page. Au cours d'une opération 716, le site de protection reçoit ledit identifiant.

Au cours d'une opération 718 le tiers de protection transmet au terminal 100 des informations relatives à la première session. Par exemple :
- le pays d'implantation du site 150,
- le droit applicable à la communication de l'information protégée, identifié par le pays de résidence du site 150,
- la durée de garantie légale d'un achat auprès du site 150,
- un taux de risque de transaction frauduleuse avec le site 150, évalué à partir de statistiques par exemple disponibles auprès d'un site tel que « fraud.org »,
- un taux de satisfaction d'autres clients du site 150, évalué à partir d'informations transmises par les clients ou par un site tel que « bizrate.com »,
- un taux de ponctualité des livraisons effectuées, évalué à partir d'informations transmises par les clients précédents ou par d'autres sites de "rating",
- une publicité relative aux produits promus par le site 150,
- une offre de mise en relation avec des sites concurrents du site 150,
- une offre de détection automatique d'encryptage de la première session,
- une date d'établissement du site 150, obtenue auprès du site « intemic.com »,
- une offre de conseils relatifs à la transaction en cours,
- une certification d'informations provenant du site 150,
- une certification du site 150, par exemple telle qu'effectuée par le site « verisign.com », éventuellement complétée des opérations recommandées par ce site,
- une date certifiée de la première session destinée à être combinée à des informations à mémoriser,
- un identificateur de moyen de paiement de substitution pour protéger le moyen de paiement habituel de l'utilisateur,
sont des informations relatives à la première session.

Préférentiellement, les informations relatives à la première session qui sont transmises par le site de protection 170 comporte des informations relatives au site 150 et/ou aux caractéristiques techniques de la première session.

Cependant, complémentairement, des informations telles que :
- une offre de mise en relation avec un moteur de recherche de meilleurs prix,
- un questionnaire à remplir, dont les réponses sont destinées à être conservées en mémoire,
- des conseils de prudence généraux, par exemple inspirés des conseils offerts par le site « fraud.org »,
peuvent être transmises par le tiers de protection 170.

Le terminal 100 reçoit et traite ces informations au cours d'une opération 720.

En figure 7, on a représenté le cas où l'utilisateur choisit de visiter un autre site, dit « tiers marchand » concurrent du site 150, par exemple en fonction du résultat d'une recherche effectuée par un moteur de recherche de meilleur prix.

Au cours de l'opération 722, le terminal 100 et, au cours de l'opération 724, le site tiers marchand ouvrent une troisième session de communication. Au cours de l'opération 726, le terminal 100 et, au cours de l'opération 728, le site tiers marchand initient une communication d'information protégée, et, dans le cas illustré en figure 7, une transaction nécessitant un paiement en ligne par transmission d'un identificateur d'un moyen de paiement.

Au cours d'une opération 730, le terminal 100 et au cours d'une opération 732, le tiers de protection ou d'assistance 170 ouvrent une quatrième session de communication. Au cours d'une opération 734, le terminal 100 transmet au site de protection 170 un identifiant du site tiers marchand, par exemple sous la forme d'un identifiant de la page en cours d'affichage, et plus particulièrement l'adresse de ladite page. Au cours d'une opération 736, le site de protection reçoit ledit identifiant.

Au cours d'une opération 738 le tiers de protection transmet au terminal 100 des informations relatives à la troisième session. Au cours de l'opération 740, le terminal 100 reçoit et traite lesdites informations relatives à la troisième session.

A titres d'exemple, en figure 7, on a représenté un grand nombre d'échanges d'informations entre le terminal 100 et le site de protection 170, au cours des opérations 738 à 764. Cependant, conformément au troisième aspect de la présente invention, au moins une information relative à la troisième session est transmise au cours de l'opération 738.

Dans l'exemple illustré en figure 7, complémentairement à la transmission d'information relative à la troisième session effectuée par le site de protection 170 au terminal 100 au cours de l'opération 738, au cours d'une opération 742 le terminal 100 requiert la transmission de taux de risque, de taux de ponctualité et de taux de satisfaction. Le site de protection 170 reçoit cette requête au cours de l'opération 744 et transmet ces taux au cours de l'opération 746. Le terminal 100 reçoit ces taux et les affiche à l'utilisateur au cours d'une opération 748.

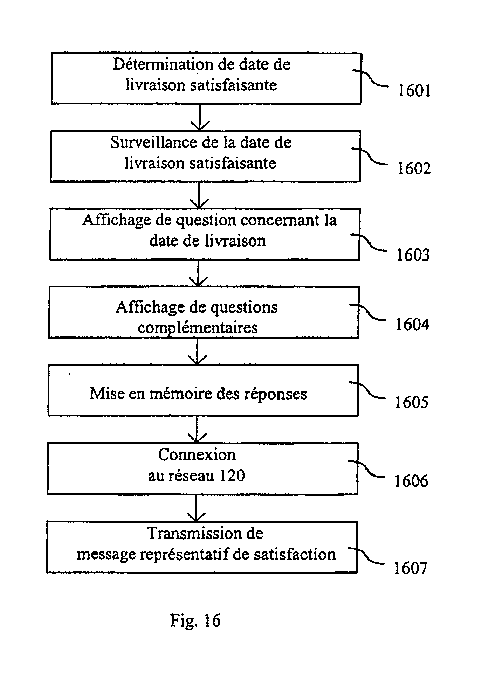

Comme indiqué plus haut, chacun de ces taux peut être basé sur des statistiques de fraude et de satisfaction officielles (par exemple pays par pays ou état par état, par moyen de paiement utilisé, par type de transaction en cours, par site ...) ou disponibles sur un réseau tel que le réseau Internet, et/ou sur des informations fournies par des visiteurs du site de protection 170 (voir la figure 16).

Au cours d'une opération 750 le terminal 100 requiert la transmission d'un questionnaire légal. Le site de protection 170 reçoit cette requête au cours de l'opération 752 et transmet ce questionnaire au cours de l'opération 754. Le terminal 100 reçoit ce questionnaire et l'affiche à l'utilisateur au cours d'une opération 756. Le questionnaire peut comporter des questions auxquelles il faut répondre soit automatiquement, par la mise en oeuvre du logiciel d'assistance, soit manuellement, par saisie au clavier 105 en vue d'une conservation de trace légale de la transaction. Par exemple, ces informations peuvent comporter un identifiant du site 170, un identifiant de l'utilisateur, une date de transaction, un objet de la transaction et un montant de transaction. Le questionnaire peut aussi comporter des question dont les réponses sont optionnelles mais qui servent à mettre en garde l'utilisateur sur les conséquences de la transaction ou sur la méconnaissance qu'il a du site tiers marchand.

Le terminal 100 transmet les réponses au questionnaire, et, éventuellement, des pages attachées qui proviennent de la troisième session, au site de protection 170 avec une requête de séquestre, au cours d'une opération 758. Le site de protection 170 reçoit ces informations au cours d'une opération 760 et les encrypte en y ajoutant une date certifiée et un certificat d'intégrité, et les renvoie au terminal 100, au cours d'une opération 762. Le terminal 100 reçoit ces informations cryptées et le certificat d'intégrité au cours d'une opération 764 et les place en mémoire dans le disque dur 102, et, le cas échéant, en les dotant d'une interdiction d'effacement automatique (voir opération 519). En variante, le site de protection 170 stocke une double de ces informations ou le certificat d'intégrité qui permet de détecter si les informations conservées en mémoire sont modifiées ultérieurement.

Au cours de l'opération 766, le terminal 100 transmet une requête de moyen de paiement à usage unique auprès d'un site financier proposé par le site de protection 170. Le site financier reçoit cette requête au cours d'une opération 768.

Le site financier fournit, au cours d'une opération 770, au terminal 100, une information destinée à participer à la détermination d'un identificateur d'un moyen de paiement à usage unique.

Par exemple l'identificateur d'une carte de paiement à usage unique est constitué des huit premiers chiffres d'une carte de paiement réelle et de huit chiffres fournis par le site financier. On observe que la date de péremption de ladite carte peut faire partie des informations fournies par le site financier et correspondre à un code.

Selon une autre variante, le logiciel d'assistance implanté sur le terminal 100 permet un codage du numéro de carte de paiement de l'utilisateur, par l'intermédiaire d'une clé fournie par le site financier, de telle manière que le numéro codé soit ultérieurement décodé par un organisme financier, par exemple le même site financier et permette d'effectuer un paiement.

Lorsque l'utilisateur est déjà référencé auprès du site financier, c'est-à-dire qu'un numéro de compte permanent lui est attribué, le site financier effectue préalablement une authentification de l'utilisateur. Puis le site tiers financier ne transmet pas de numéro de carte de paiement intégral, pour éviter que ce numéro puisse être piraté, c'est-à-dire utilisé par un tiers. Au contraire, préférentiellement, le site financier fourni une racine qui permettent la détermination d'un identificateur de moyen paiement par l'utilisateur ou le terminal 100 mais ne permettent pas de constituer, avec la racine seule, un identificateur de moyen de paiement. Cette caractéristique est opposée au mode de fonctionnement décrit dans le brevet U.S. 5,883,810 qui est intégralement incorporée ici par référence. La racine fournie par le site financier et/ou la détermination de l'identificateur du moyen de paiement à usage unique dépendent, préférentiellement, d'identificateurs de la transaction financière, comme son montant, l'identificateur de son bénéficiaire et/ou l'identificateur du site financier.

La racine fournie par le site financier peut être générée comme un certificat de transaction de la transaction en cours.

Le terminal 100 reçoit l'information destinée à participer à la détermination d'un identificateur de moyen de paiement à usage unique au cours de l'opération 772. Il détermine l'identificateur de moyen de paiement à usage unique au cours de l'opération 774, par exemple en mettant en oeuvre une fonction de calcul à sens unique du logiciel d'assistance, agissant sur l'information reçue de la part du site financier, d'un numéro de carte de paiement, d'un identificateur du site 150 et d'un montant de transaction. Eventuellement, un certification de transaction est aussi utilisé pour la détermination de l'identificateur de moyen de paiement à usage unique.

Dans l'exemple illustré en figure 7, au cours de l'opération 776, le terminal 100 et, au cours de l'opération 778, un site tiers de confiance 180 ouvrent une cinquième session de communication. Au cours d'une opération 780, le terminal 100 transmet des informations à séquestrer au site tiers de confiance. Ces informations sont des informations légales liées à la transaction effectuée avec le site tiers marchand. Au cours de l'opération 782, le site tiers de confiance 180 met en mémoire ces informations, éventuellement cryptées et dotées d'un certificat d'intégrité.

Dans l'exemple illustré en figure 7, au cours d'une opération 784, le site de protection 170 transmet un message de sécurisation au site tiers marchand pour confirmer que la transaction a été sécurisée.

On observe que en figure 7, les sites de protection 170, site financier et site tiers de confiance 180 ont été représentés comme des entités indépendantes. Cependant, dans d'autres modes de réalisation du procédé de la présente invention, deux ou trois de ces sites sont confondus en une seule entité.

On observe que le site dit financier peut ne servir que d'intermédiaire entre les parties à la transaction (l'utilisateur et le site tiers marchand) et faire effectuer le paiement par un autre organisme financier, après lui avoir fourni un identifiant de l'utilisateur ou d'un moyen de paiement réelle ou virtuel. En particulier, le site dit financier peut utiliser la racine qu'il a transmise et, éventuellement, des informations qu'il a reçu de la part du terminal 100, pour déterminer un numéro de carte de paiement permanent.

Par exemple si la clé transmise est une série de chiffres qui doivent être additionnés aux chiffres du numéro d'une carte de paiement permanente pour fournir, modulo 10, les chiffres de l'identificateur de moyen de paiement à usage unique, la clé conservée par le site financier peut lui servir à déterminer le numéro de la carte de paiement permanente.

On observe que, préférentiellement, toutes les communications mises en oeuvre conformément à la présente invention sont protégées par cryptage, selon des techniques connues ou à venir.

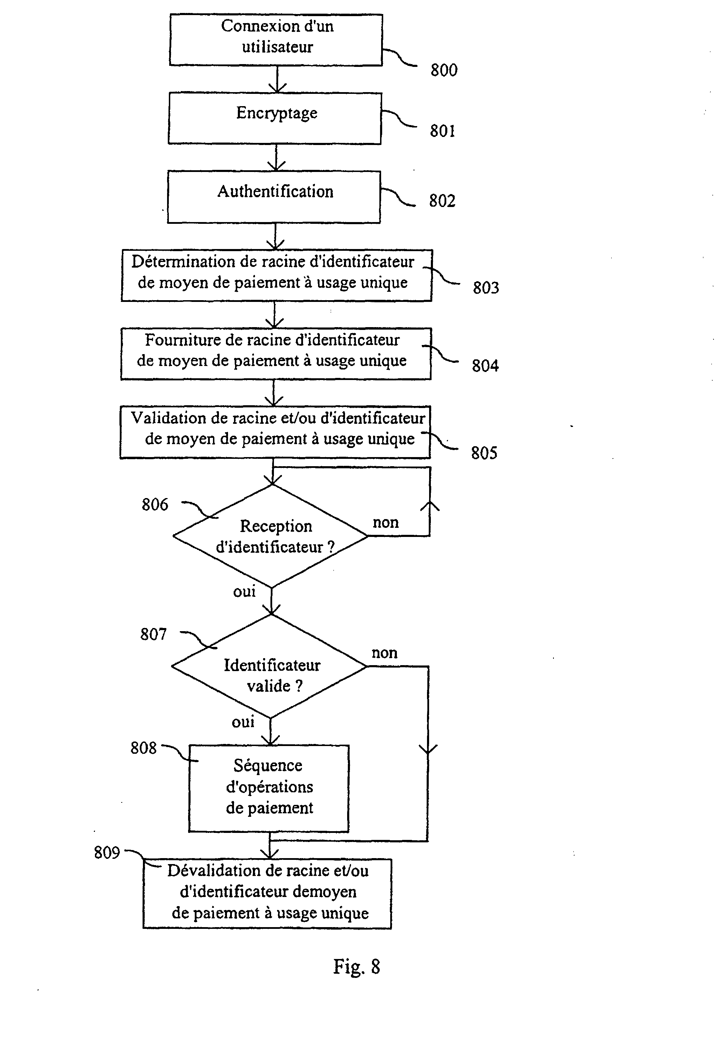

La figure 8 représente des fonctions mises en oeuvre dans différents systèmes informatiques reliés à un réseau de communication au cours d'un premier exemple de succession d'opérations mises en oeuvre conformément au quatrième aspect du procédé visé par la présente invention, dans le cas où l'utilisateur est référencé auprès du site financier. On observe en figure 8, qu'au cours d'une opération 800, le terminal 100 est connecté au site financier et qu'une session de communication est mise en place. Au cours d'une opération 801, le site financier et le terminal 100 organisent l'encryptage de la communication. Ensuite, au cours d'une opération 802, le site financier authentifie l'utilisateur du terminal 100 de manière connue, par exemple en lui demandant un code d'accès confidentiel et en vérifiant ce code.

Ensuite, au cours d'une opération 803, le site financier effectue une détermination de racine d'identificateur de moyen de paiement à usage unique. Cette racine est préférentiellement liée à un identificateur de l'utilisateur et conservé avec cet identificateur dans une mémoire (non représentée) du site financier. Par exemple, cette racine représente les huit derniers chiffres d'un numéro de carte de paiement à fournir à un site marchand tel que le site marchand 150 ou le site tiers marchand. Selon d'autres modes de réalisation, la racine est une clé de codage utilisée par un logiciel résident dans le terminal 100 pour générer un identificateur de moyen de paiement. Au cours d'une opération 804, la racine est fournie au terminal 100. Au cours d'une opération 805, la racine est validée en mémoire du site financier, dans une liste de racines valides. Selon une variante, le site financier détermine l'identificateur de moyen de paiement à usage unique que le terminal 100 va utiliser. Par exemple, le site financier connaît les huit premiers numéros d'une carte de paiement et y ajoute les huit derniers numéros qu'il fournit au terminal 100 ou la fonction de codage et les racines utilisées par le terminal 100. Cet identificateur est alors conservé dans une mémoire d'identificateurs valides.

La session de communication avec le terminal 100 est alors interrompue. Lorsque le site marchant veut être payé, il fournit un identificateur de moyen de paiement au site financier. Au cours d'un test 806, le site financier détermine s'il a reçu un identificateur de moyen de paiement, ou non. Lorsque le résultat du test 806 est négatif, le test 806 est réitéré. Lorsque le résultat du test 806 est positif, au cours d'un test 807, le site financier détermine si l'identificateur de moyen de paiement est valide, ou non. A cet effet, par exemple, le site financier extrait la racine qu'il a fournit et la compare aux racines conservées dans la liste des racines valides. Selon un autre exemple, le site financier compare l'identificateur qu'il reçoit aux éléments d'une liste d'identificateurs valides qu'il a déterminé.

Lorsque le résultat du test 807 est positif, au cours d'une opération 808, le paiement est effectué. Lorsque le résultat du test 807 est négatif ou que l'opération de paiement 808 est achevée, au cours d'une opération 809, la racine de l'identificateur ou l'identificateur lui-même est invalidé dans la mémoire du site financier de telle manière que cette racine ou cet identificateur ne puisse être utilisé pour un paiement.

En variante, l'utilisateur fournit, au cours de l'opération 803, des informations relatives à la transaction, comme, par exemple, le nom de la société qui gère le site marchand (fournit, par exemple, par le tiers de protection 170) ou le montant de la transaction et l'identificateur du moyen de paiement à usage unique est déterminé de manière à être représentatif de ces informations ou à être associé, en mémoire du site financier à cet identificateur. De cette manière, la transaction peut être authentifiée par le site financier, au cours de l'opération 807, préliminairement au paiement, au cours de l'opération 808.

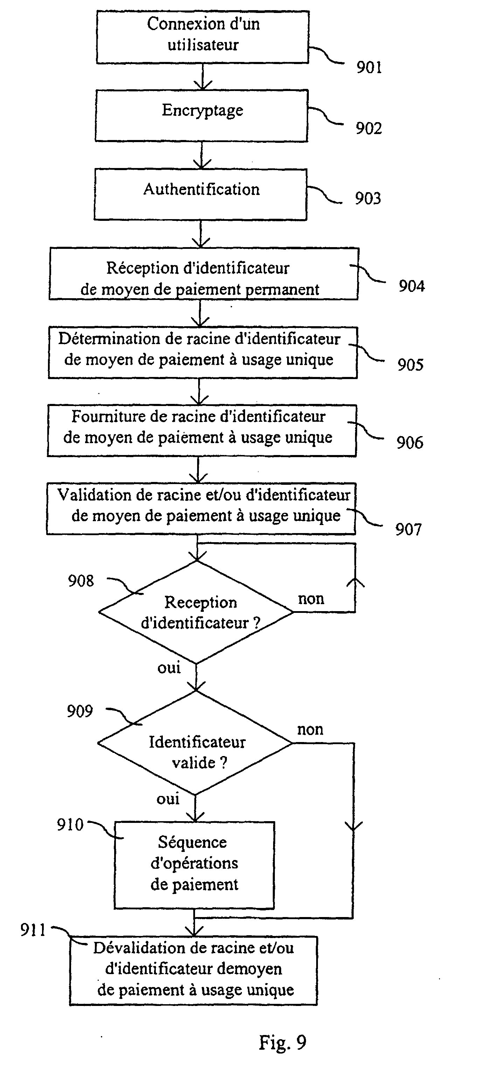

La figure 9 représente des fonctions mises en oeuvre dans différents systèmes informatiques reliés à un réseau de communication au cours d'un deuxième exemple de succession d'opérations mises en oeuvre conformément au quatrième aspect du procédé visé par la présente invention, dans le cas où l'utilisateur n'est pas référencé auprès du site financier. On observe en figure 9, que les opérations 901 à 903, 905 à 909 et 911 correspondent respectivement aux opérations 800 à 807 et 809.

A la suite de l'opération 903 et avant l'opération 905, au cours d'une opération 904, le terminal 100 fournit au site financier un identificateur de moyen de paiement permanent, tel qu'un numéro de carte de paiement.

A la suite du test 909, lorsqu'il est positif, au cours d'une opération 910, le site financier utilise l'identificateur de moyen de paiement qu'il a reçu du terminal 100 au cours de l'opération 904 pour obtenir un paiement auprès de l'organisme financier qui a délivré le moyen de paiement permanent. Ce paiement est effectué soit au profit du site marchand qui a fourni l'identificateur de moyen de paiement à usage unique, soit au profit du site financier, qui, ensuite, effectue le paiement au profit du site marchand qui a fourni l'identificateur de moyen de paiement à usage unique.

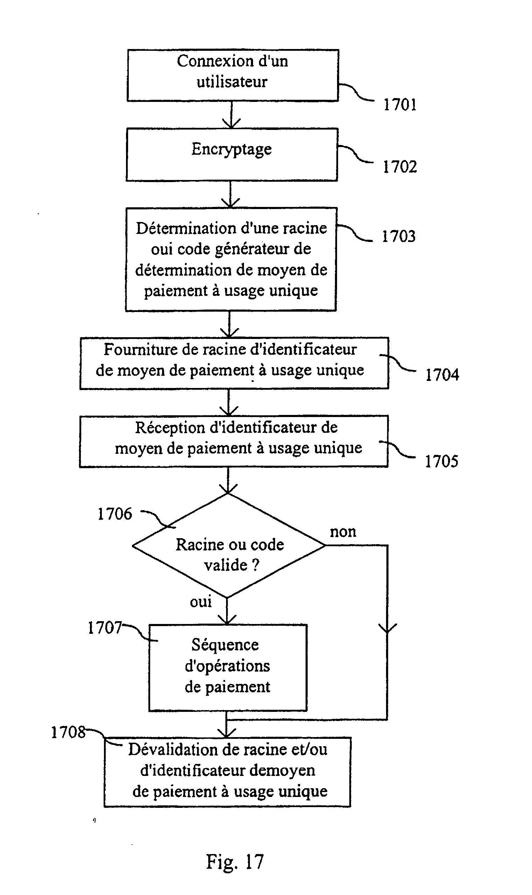

La figure 17 représente des fonctions mises en oeuvre dans différents systèmes informatiques reliés à un réseau de communication au cours d'un troisième exemple de succession d'opérations mises en oeuvre conformément au quatrième aspect du procédé visé par la présente invention, dans le cas où l'utilisateur n'est pas référencé auprès du site financier. On observe en figure 17, que les opérations 1701, 1702 sont identiques aux opérations 901 et 902. A la suite de l'opération 1702, au cours de l'opération 1703, le site financier détermine une racine ou un code de calcul et, au cours de l'opération 1704, le site financier fournit cette racine ou ce code au terminal 100 pour que celui-ci détermine un identificateur de moyen de paiement à usage unique.

Ce code peut être prédéterminé, en étant par exemple, fixe pendant une durée prédéterminée, prendre aléatoirement une parmi plusieurs valeurs possibles, ou dépendre d'une information liée à la transaction, comme le nom, le numéro de téléphone ou l'adresse de l'utilisateur ou l'adresse du site commerçant sur le réseau de communication.

On observe que, préférentiellement, le code est mis en oeuvre dans le terminal 100 de telle manière qu'un identificateur de moyen de paiement permanent puise être déterminé en connaissant la racine ou code et l'identificateur de moyen de paiement à usage unique.

Une fois la session entre le site financier et le terminal 100 achevée, le terminal 100 utilise la racine ou code fournie par le site financier au cours de l'opération 1704 pour déterminer un identificateur de moyen de paiement selon des techniques numériques connues.

Lorsque, au cours d'une opération 1705, le site financier reçoit un identificateur de moyen de paiement, il reçoit aussi des informations liées à la transaction. Le site financier peut donc déterminer la racine ou le code générateur qu'il a fournit au cours de l'opération 1704, même si ce code dépend d'informations liées à la transaction.

Au cours d'un test 1706, le site financier détermine si ce code est valide et si le l'identificateur de moyen de paiement à usage permanent est valide. Si les deux sont valides, l'opération 1707 est effectuée. Sinon, l'opération 1708 est effectuée.

Les opérations 1707 et 1708 correspondent aux opérations 910 et 911.

Selon une variante non représentée, la date de péremption liée à l'identificateur de moyen de paiement à usage unique permet d'identifier un code générateur ou un racine.

La figure 16 représente un organigramme de fonctionnement du dispositif illustré en figure 1, pour la mise en oeuvre du cinquième aspect de la présente invention. Cet aspect peut être combiné, ou non, à certaines des autres aspects de la présente invention.

Au cours d'une opération 1601, l'utilisateur du terminal 100 détermine une date à laquelle il considère qu'il serait satisfait d'avoir été fourni du produit ou service qu'il a payé sur le réseau de communication 120.

Ensuite, l'unité centrale 106, mettant en oeuvre le logiciel d'assistance, effectue une surveillance de la survenance de la date sélectionnée, au cours d'une opération 1602, qui peut s'étendre, en tâche de fond sur plusieurs jours. Lorsque la date survient, au cours d'une opération 1603, l'unité centrale 106 provoque l'affichage, sur l'écran de visualisation 104, d'une fenêtre de dialogue demandant si le produit ou service a bien été fourni.

Que la réponse soit positive ou négative, une autre question demande à l'utilisateur le degré de satisfaction ou d'insatisfaction dans lequel il est concernant la fourniture du produit ou service fourni, au cours d'une opération 1604. En outre, lorsque la réponse est négative, une nouvelle date est demandée à l'utilisateur et le processus est renouvelé.

L'information de satisfaction et l'éventuelle nouvelle date sont mis en mémoire 102 par le terminal 100, au cours d'une opération 1605.

Lorsque, au cours d'une opération 1606, le terminal 100 se connecte au réseau 120, et quel que soit le site auquel se connecte le terminal, un message de satisfaction comportant l'identificateur du site marchand et le degré de satisfaction de l'utilisateur ainsi que le délai de livraison, est automatiquement transmis au site de protection 170 au cours d'une opération 1607. Ce message peut prendre la forme d'un courrier électronique (« e-mail ») ou toute autre forme reconnue par le site de protection 170.

Grâce à ce message, le site de protection 170 peut déterminer les sites marchands qu'il peut recommander à ses visiteurs.

La figure 10 représente ce qui est affiché par l'écran de visualisation 104 lorsque l'utilisateur du terminal 100 a sélectionné une offre commerciale de la part du site informatique distant 150 et que cet utilisateur s'apprête à effectuer un paiement en ligne, en fournissant des informations concernant une carte de paiement telles que le numéro et la date d'expiration de la carte de paiement.

De manière simplifiée, l'écran de visualisation 104 affiche alors :
- une portion principale 1000 qui représente une portion d'une page reçue en provenance du site informatique distant 150 ;
- une bandeau supérieur 1010 qui affiche, et permet de sélectionner, des fonctions ou des menus déroulants ;
- un bandeau inférieur 1050 qui affiche des informations générales et des zones de sélection de fonction et
- un bandeau latéral 1080 qui permet de faire défiler la page affichée dans la portion principale 1000.

Dans l'exemple illustré en figure 10, la portion principale 1000 comporte, au cours de la phase de la transaction qui correspond au début d'un paiement en ligne :
- une portion d'une page reçue en provenance du site informatique distant 150 comportant des informations textuelles d'une offre commerciale 1020, éventuellement des informations graphique ou d'image (non représentées) et est associée à une séquence sonore (non représentée) ;
- des informations de sélection 1030 d'au moins un autre page du site informatique distant 150 ;
- des conditions commerciales 1035 ;
- un icône mobile 1090 représentant la position sélectionnée par la souris 103 et
- une portion centrale de paiement en ligne 1040.

La portion centrale 1040 comporte, par exemple, des cases 1041 de sélection d'un type de carte de paiement, une zone d'écriture 1042 d'un numéro de carte de paiement, un zone d'écriture 1043 d'un mois d'expiration de la durée de validité de carte de paiement et une zone de validation 1044 de la saisie des informations relatives au paiement électronique en ligne et de la transaction.

Le bandeau supérieur 1010 affiche deux flèches latérales 1084 qui, lorsque l'une d'entre elles est sélectionnée par usage de la souris 103, permettent de retourner à la page précédemment affichée dans la portion centrale 1000 (flèche orientée à gauche) ou d'avancer à la page affichée à la suite de la page en cours d'affichage dans la portion centrale 1000 (flèche orientée vers la droite) selon des conventions connues dans les logiciels de navigation sur Internet. Le bandeau supérieur 1010 affiche aussi des en-têtes de menus déroulant bien connus dans les logiciels de navigation, tels que :
- « fichier », pour créer, ouvrir, sauvegarder, imprimer ou fermer un fichier,
- « édition », pour sélectionner, couper, copier, coller, des informations,
- « accès Internet », pour rechercher un site Internet ou s'y connecter à partir de son adresse,
- « messagerie » pour accéder à sa messagerie personnelle, et
- « sites favoris », pour accéder directement à des sites Internet préalablement sélectionnés comme sites favoris.

L'utilisation de la souris 103 permet de sélectionner l'une des fonctions ou l'un des menus déroulants illustrés (parfois sous forme d'icônes) dans le bandeau supérieur 1010.

Le bandeau latéral 1080 comporte :
- une flèche supérieure 1082 orientée vers le haut, dont la sélection provoque le défilement de la page illustrée dans la portion principale 1000, vers le haut, pour en afficher sa partie supérieure,
- une flèche inférieure 1083 orientée vers le bas, dont la sélection provoque le défilement de la page illustrée dans la portion principale 1000, vers le bas, pour en afficher sa partie inférieure,
- une portion 1081 qui, en combinaison avec une portion 1085, représente la proportion de la page illustrée dans la portion principale 1000 qui est affichée et
- une portion 1085 qui représente, avec la même facteur de proportionnalité que la portion 1081, la partie inférieure de la page illustrée dans la portion principale 1000 qui n'est pas visible.

Le bandeau inférieur 1050 affiche des informations générales, telles que le nom du fournisseur d'accès, la durée de la connexion au fournisseur d'accès déjà écoulée, le logiciel de navigation utilisé (par exemple de l'une des marques déposées Netscape, Microsoft ou AOL) et des zones de sélection de fonction. Ici deux zones de sélection de fonctions 1060 et 1070 déclenchent une sauvegarde d'au moins une information de contenu d'au moins les portions des pages du site informatique distant 150 qui ont été reçues de la part du site informatique distant 150 et affichées sur l'écran de visualisation 104.

La zone 1060 affiche, en clair, la fonction de sauvegarde sous la forme de deux mots « sauvegarde commerciale ». La zone 1070 affiche, sous forme d'un icône représentant une balance, symbole de la justice, la fonction de sauvegarde. Selon différentes variantes de la présente invention :
- seules les portions qui ont été affichées,
- seules des informations de contenu ou de contexte, comme le nom du fournisseur et la date de la transaction,
- seuls certains mots présents dans ou représentant ces portions ou le fichier sonore reçu et diffusé,
- seuls les textes présents dans ces pages,
- les textes et les images,
- les pages entières,
- le fichier sonore,
- les informations de déplacement effectués dans les pages en cours d'affichage, et/ou
- la durée d'affichage de chaque portion de la page sur l'écran de visualisation 104 sont mis en mémoire non volatile, par exemple la mémoire 102 par déclenchement de la fonction de sauvegarde liée aux deux zones de sélection de fonctions 1060 et 1070.

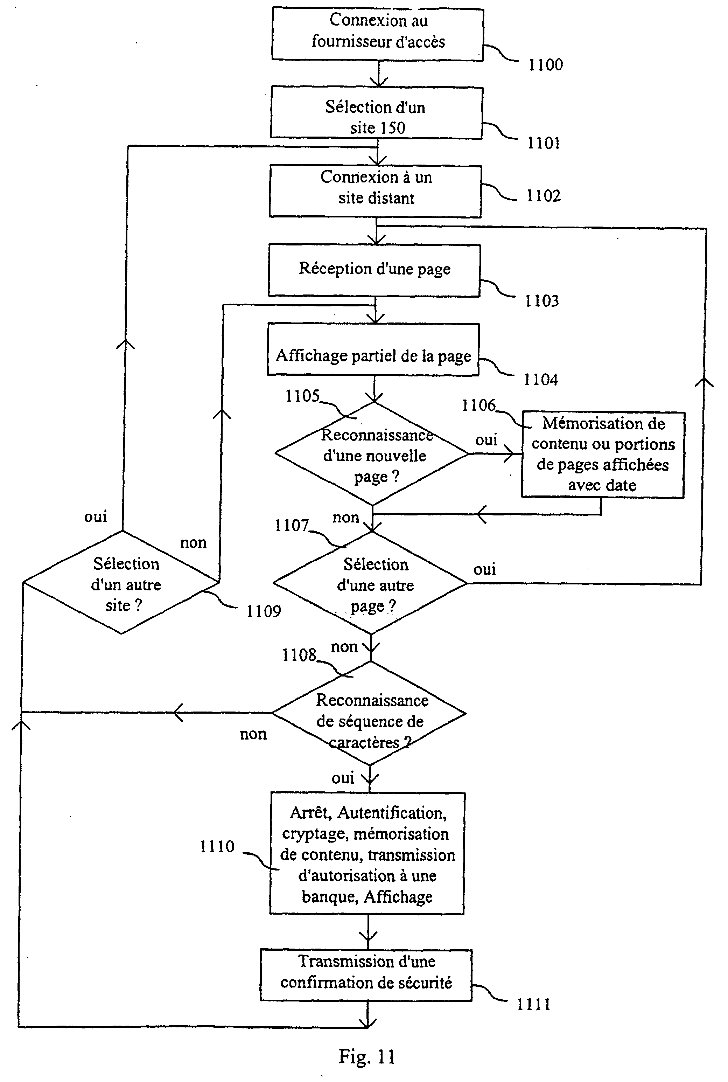

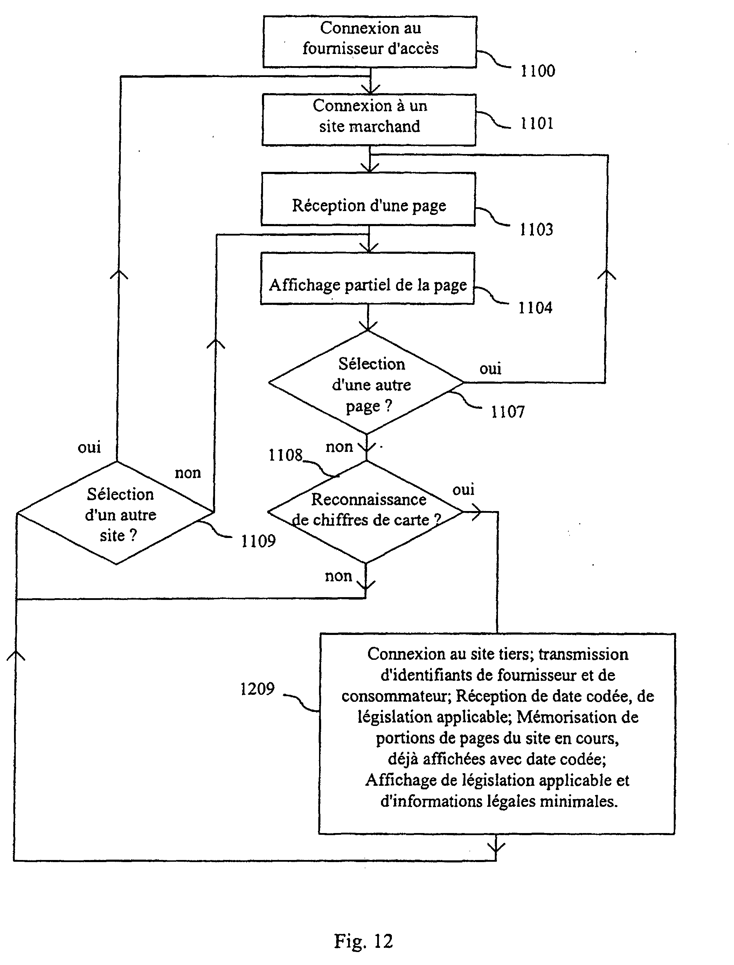

Cette fonction et/ou d'autres fonctions de sécurisation sont aussi déclenchées de manière automatique par détection de préparation d'un paiement par transmission d'un identifiant de moyen de paiement au cours de la session de communication avec le site informatique distant 150, par l'intermédiaire du terminal 100, comme exposé en regard de l'opération 307, en regard des figures 11 et 12.

Selon un aspect de l'invention, et d'une manière générale, l'utilisateur met d'abord en fonctionnement un terminal informatique et accède, par l'intermédiaire d'un réseau de communication, à un site informatique distant.

Le terminal ouvre alors une session de communication avec le site informatique distant et reçoit, de la part du site informatique une offre de transaction. En tâche de fond, le terminal ou un système informatique par lequel transitent des données échangées entre le terminal et le site informatique distant au cours de la session de communication, détermine si un paiement est préparé au cours de la session et par l'intermédiaire du terminal, par exemple en reconnaissant un identifiant d'une carte de paiement.

Si tel est le cas, le terminal ou le système informatique effectue une opération de sécurisation contre un usage abusif du consentement contractuel de l'utilisateur du terminal. Cette opération de sécurisation comporte, au moins une opération de sauvegarde du montant du paiement, par exemple, en effectuant au moins l'une des opérations suivantes:
- création d'un fichier de sauvegarde et mise en mémoire d'au moins une parties des données au format « texte » échangées au cours de la session de communication entre le terminal et le site informatique ;
- constitution d'un message crypté représentatif d'au moins le montant de la transaction et, préférentiellement, d'un identifiant du fournisseur et transmission de ce message à un tiers de confiance comme, par exemple, un site informatique d'une banque auprès de laquelle le paiement doit être effectué ; et
- impression d'une trace de la transaction, comportant, au moins la date, le montant de la transaction, et, préférentiellement, le nom du fournisseur et un code d'intégrité (et, lorsqu'il est disponible, le questionnaire complété mentionné ci-dessus) ; et
- affichage d'un questionnaire que l'utilisateur complète, s'il le souhaite, pour garder trace de la transaction, et sauvegarde du contenu de ce questionnaire s'il a été au moins partiellement renseigné.

En outre, l'opération de sécurisation peut comporter l'une des opérations suivantes :
- authentification du payeur, par exemple par affichage d'une demande de code secret puis vérification du code secret ;
- affichage de données juridiques ;
- impression d'un détail des paiements déjà effectués en ligne avec la carte concernée.
- transmission au site informatique avec lequel la transaction est en cours, d'une information représentative de la sécurisation de la transaction, comme, par exemple, un certificat de transaction à usage unique qui doit être associée à la demande de paiement pour que l'organisme bancaire qui effectue les paiements liés à la carte, paye le fournisseur.

Plus particulièrement, au cours d'un mode de fonctionnement du dispositif illustré en figure 1, l'utilisateur met en fonctionnement le terminal 100 et accède, par l'intermédiaire du modem 101 et du réseau 120, à un fournisseur d'accès à Internet 130.

Ensuite, l'utilisateur sélectionne, par l'intermédiaire du terminal 100, un site informatique distant 150, par exemple en pointant, avec la souris 103 :
- un identifiant d'un site dans le menu déroulant « sites favoris »,
- un lien avec un site sur le portail d'accès du fournisseur d'accès, ou
- le menu déroulant « accès Internet » et en saisissant une adresse de page Internet ou de site Internet, commençant, par exemple, par les lettres « http » ou « www ».

Le terminal 100 entre alors en communication et ouvre une session de communication avec le site informatique distant 150 sélectionné, et lui envoie une information de sécurisation de transaction. Cette information est une séquence de symboles spécifique qui indique que toute communication et/ou transaction est sécurisé selon un mode de réalisation du procédé visé par la présente invention. Puis, le terminal 100 reçoit, de la part du site informatique distant 150, une page Internet, par exemple une page d'accueil. Le terminal 100 provoque l'affichage, au moins partiel, de la page reçue. L'utilisateur peut alors déplacer cette page de manière à en prendre connaissance, plus ou moins complètement.

Ensuite, l'unité centrale 106 détermine si la page reçue est déjà conservée dans le disque dur 102, ou non. Si non, l'unité centrale 106 provoque la mémorisation d'au moins une information d'adresse de la page reçue, et, éventuellement, une information de contenu, telle que l'ensemble des données reçues au format « texte » pour la page concernée, dans le disque dur 102. Ensuite ou si la page reçue est déjà conservée dans le disque dur 102, l'unité centrale 106 détermine si l'utilisateur a sélectionné une autre page, par exemple par sélection d'un lien avec un autre page, tel que le lien 230.

Si l'utilisateur a sélectionné une autre page, et que la page sélectionnée n'a pas déjà été reçue au cours de la même session de communication entre le terminal 110 et le site informatique distant 150, le fonctionnement du terminal 100 déjà exposé ci-dessus est reproduit mais chaque page précédemment reçues est, au moins en partie (par exemple l'adresse de la page et/ou les données « texte » de cette page), conservée en mémoire cache 108. Sinon, l'unité centrale 106 détermine si un nombre prédéterminé de chiffres (par exemple quatre chiffres) saisis successivement correspondent à une séquence de chiffres d'une carte de paiement conservée en mémoire.

On observe ici que, par exemple lors de l'installation du logiciel qui permet l'application représentée ici, les quatre premiers chiffres des cartes de paiement de l'utilisateur lui sont demandées et sont mis en mémoire 102. Ensuite, en tâche de fond, chaque séquence de quatre chiffres saisis au clavier est comparée aux quatre premiers chiffres des cartes de paiement conservée en mémoire non volatile 102.

Si aucune séquence n'est reconnue, l'unité centrale 106 détermine si un autre site a été sélectionné par l'utilisateur, par exemple comme exposé ci-dessus ou par sélection d'un lien entre le site en cours de visite et un nouveau site, dans la zone principale 200. Si tel est la cas, ce que le terminal 100 a effectué vis-à-vis du site en cours est reproduit vis-à-vis du nouveau site visité. Si aucun autre site n'a été sélectionné, l'affichage de la page est les opérations suivantes sont réitérées.

Lorsqu'une séquence correspondant, par exemple, aux quatre premiers chiffres d'un numéro de carte de paiement est reconnue, l'unité centrale 106 effectue une opération de sécurisation contre un usage abusif du consentement contractuel de l'utilisateur du terminal. Cette opération de sécurisation comporte, au moins une sauvegarde locale ou à distance du montant du paiement, par exemple, en effectuant au moins l'une des opérations exposées ci-dessous :
- l'unité centrale 106 provoque l'affichage d'une fenêtre sur l'écran 104, fenêtre comportant un questionnaire que l'utilisateur complète, s'il le souhaite, pour garder trace de la transaction, le questionnaire portant, par exemple, sur le fournisseur, sur l'objet ou le service fournis, sur le montant de la transaction, sur le délai de fourniture, sur la garantie, sur le délai de réclamation, sur les conditions de remboursement en cas d'insatisfaction (pour remplir ce questionnaire, l'utilisateur peut minimiser la dimension de la fenêtre d'affichage du questionnaire et explorer les pages du site informatique distant 150) ;
- l'unité centrale 106 crée un fichier de sauvegarde dans la mémoire non volatile 102, et y enregistre au moins les données au format « texte » des portions de pages du site informatique distant 150 qui ont été transmises au cours de la session de communication avec le site informatique distant 150. De manière préférentielle, cette mise en mémoire est associée à la mise en mémoire de la date. De manière préférentielle, un code d'intégrité est inséré dans le fichier et garantit, au cours d'une lecture ultérieure, que les données qui ont été enregistrées n'ont pas été modifiées depuis la création du fichier. Le lecteur pourra, par exemple, s'inspirer des technique de marquage dites « watermarking » pour mettre en oeuvre cette fonction de code d'intégrité ;
- l'unité centrale 106 constitue un message crypté représentatif au moins du montant de la transaction et, préférentiellement d'un identifiant du fournisseur et ce message est transmis à un tiers de confiance 180, par exemple, le site informatique de la banque auprès de laquelle le paiement doit être effectué ; et/ou
- l'unité centrale 106 provoque l'impression de la date, du nom du fournisseur et du montant de la transaction, avec un code d'intégrité, et, lorsqu'il est disponible, le questionnaire complété mentionné ci-dessus.

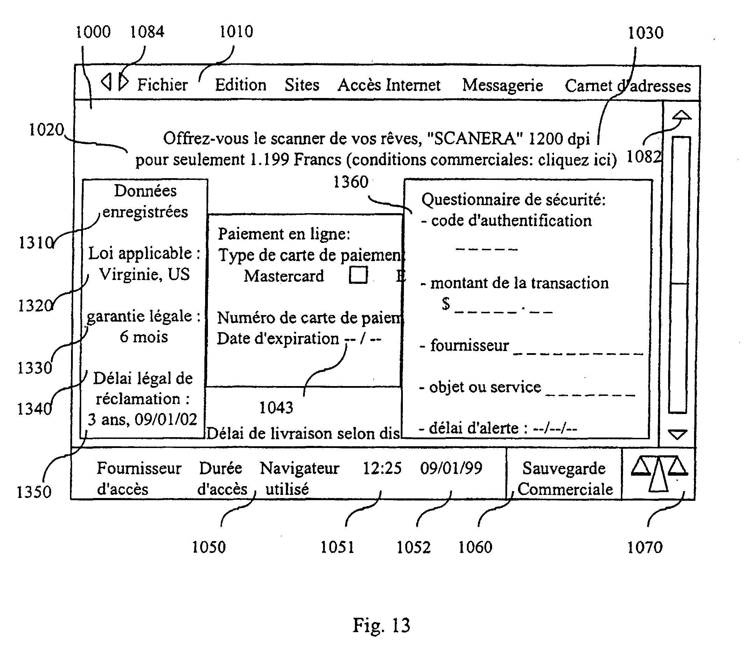

En outre, l'unité centrale 106 peut effectuer l'une des opérations suivante :
- l'unité centrale 106 affiche une demande de code secret (par exemple un nombre d'identification personnel connu sous le nom de PIN (pour Personal Identification Number) pour vérifier que l'utilisateur qui a saisi la séquence correspondant aux quatre premiers chiffres d'un numéro de carte de paiement est bien autorisé à utiliser cette carte, puis vérifie que ce code secret correspond à un code conservé en mémoire dans le disque dur 102 ;
- l'unité centrale 106 affiche une fenêtre comportant des données juridiques (voir figure 13) ; et
- l'unité centrale 106 effectue l'impression d'un détail des paiements déjà effectués en ligne avec la carte concernée.

L'unité centrale 106 envoie ensuite, au site informatique distant 150, une information représentative de la sécurisation de la transaction est envoyée au site informatique distant 150. Cette information est, par exemple, identique à l'information déjà transmise au début de la session de communication. En variante, cette information de sécurité est un certificat de transaction à usage unique qui doit être associée à la demande de paiement pour que l'organisme bancaire qui effectue les paiements liés à la carte, paye le fournisseur. En variante, cette information est un double du questionnaire mentionné ci-dessus, y compris des réponses fournies par l'utilisateur, afin qu'un document électronique contractuel soit connu des deux parties. Ensuite l'unité centrale 106 détermine, comme ci-dessus, si un autre site a été sélectionné, ou non, et poursuit, comme ci-dessus, la séquence d'opération, en fonction du résultat de cette détermination. On observe que la fin de la session de communication, c'est à dire la déconnexion du site Internet et la déconnexion du fournisseur d'accès sont effectuées de manière connue, au cours de l'affichage de la dernière page reçue de la part du site informatique distant 150, et ne sont donc pas détaillées ici.

La figure 11 représente un organigramme mettant en oeuvre un mode de réalisation du procédé objet de la présente invention. Au cours d'une opération 1100, il est accédé à un fournisseur d'accès à Internet.

Au cours de l'opération 1101, un site informatique distant est sélectionné, par exemple par l'intermédiaire :
- d'un identifiant d'un site dans un menu déroulant,
- d'un lien avec un site sur le portail d'accès du fournisseur d'accès, ou
- d'une adresse de page Internet ou de site Internet, commençant, par exemple, par les lettres « http » ou « www ».

Une session de communication est alors mise en place avec ce site informatique distant, au cours d'une opération 1102, et une information de sécurisation de transaction est transmise au site informatique distant. Cette information est une séquence de symboles spécifique qui indique que toute communication et/ou transaction est sécurisé selon un mode de réalisation du procédé visé par la présente invention. Au cours de l'opération 1103, il est reçu, de la part du site informatique distant 150, une page Internet qui, au cours de la première itération de la fonction 1103, est une page d'accueil. Au cours de l'opération 1104, un affichage, au moins partiel, de la page reçue au cours de l'opération 1103 est effectué.

Au cours d'un test 1105, il est déterminé si la page reçue est déjà mémorisée localement, ou non. Si le résultat du test 1105 est négatif, au cours d'une opération 1106, la mémorisation d'au moins une information d'adresse de la page reçue, et, éventuellement, d'une information de contenu, telle que l'ensemble des données reçues au format « texte » pour la page concernée, est effectuée. A la suite de l'opération 1106 ou lorsque le résultat du test 1105 est positif, au cours d'un test 1107, il est déterminé si l'utilisateur a sélectionné une autre page, par exemple par sélection d'un lien avec un autre page.

Lorsque le résultat du test 1107 est positif et que la page sélectionnée n'a pas déjà été reçue au cours d'une opération 1103, l'opération 1103 est réitérée mais chaque page précédemment reçues est, au moins en partie (par exemple l'adresse de la page et/ou les données « texte » de cette page), conservée localement. Lorsque le résultat du test 1107 est négatif, au cours d'un test 1108, il est déterminé si un nombre prédéterminé de chiffres (par exemple quatre chiffres) saisis successivement correspondent à une séquence de chiffres d'une carte de paiement.

Par exemple, avant la mise en oeuvre du mode de réalisation du procédé exposé ici, les quatre premiers chiffres des cartes de paiement de l'utilisateur lui sont demandées et sont conservées localement. Dans cet exemple, au cours de l'opération 1108, pour chaque saisie d'une séquence d'au moins quatre chiffres successifs, chaque séquence de quatre chiffres successifs de la séquence est comparé à la séquence de quatre chiffres conservée localement.

Lorsque le résultat du test 1108 est négatif, au cours d'un test 1109, il est déterminé si un autre site a été sélectionné, par exemple selon l'une des manières exposées en regard de l'opération 1102 ou par sélection d'un lien entre le site en cours de visite et un nouveau site, dans la page affichée, ou non. Lorsque le résultat du test 1109 est positif, l'opération 1102 est réitérée. Lorsque le résultat du test 1109 est négatif, l'opération 1104 est réitérée.

Lorsque le résultat du test 1108 est positif, au cours d'une opération 1110, une opération de sécurisation contre un usage abusif du consentement contractuel de l'utilisateur est effectuée en sauvegardant au moins le montant du paiement. Par exemple l'opération 1110 comporte au moins l'une des opérations de sécurisation exposées ci-dessus.

A la suite de l'opération 1110, au cours d'une opération 1111, une information représentative de la sécurisation de la transaction est envoyée au site informatique distant avec lequel la session a été ouverte au cours de l'opération 1102. Cette information est, par exemple, identique à l'information transmise au cours de l'opération 1101. En variante, cette information de sécurité est un certificat de transaction à usage unique qui doit être associée à la demande de paiement pour que l'organisme bancaire qui effectue les paiements liés à la carte, paye le fournisseur. En variante, cette information est un double du questionnaire mentionné ci-dessus, y compris des réponses fournies par l'utilisateur, afin qu'un document électronique contractuel soit connu des deux parties. A la suite de l'opération 1111, le test 1109 est effectué. On observe que la déconnexion du site Internet et la déconnexion du fournisseur d'accès sont effectuées de manière connue au cours de l'opération 1104, et ne sont donc pas détaillées ici.

Lorsque le mode de réalisation du procédé illustré en figure 11 est mis en oeuvre par le mode de réalisation du dispositif illustré en figures 1 et 10, au cours d'une opération 1100, l'utilisateur met en fonctionnement le terminal 100 et accède, par l'intermédiaire du modem 101 et du réseau 120, au fournisseur d'accès à Internet 130.

Au cours de l'opération 1101, l'utilisateur sélectionne, par l'intermédiaire du terminal 100, un site informatique distant 150, par exemple en pointant, avec la souris 103 :
- un identifiant d'un site dans le menu déroulant « sites favoris »,
- un lien avec un site sur le portail d'accès du fournisseur d'accès, ou
- le menu déroulant « accès Internet » et en saisissant une adresse de page Internet ou de site Internet, commençant, par exemple, par les lettres « http » ou « www ».

Le terminal 100 entre alors en communication avec le site informatique distant 150 sélectionné, au cours de l'opération 1102, et lui envoie une information de sécurisation de transaction. Cette information est une séquence de symboles spécifique qui indique que toute communication et/ou transaction est sécurisé selon un mode de réalisation du procédé visé par la présente invention. Au cours de l'opération 1103, le terminal 100 reçoit, de la part du site informatique distant 150, une page Internet qui, au cours de la première itération de la fonction 1103, est une page d'accueil. Au cours de l'opération 1104, le terminal 100 provoque l'affichage, au moins partiel, de la page reçue au cours de l'opération 1103. Au cours de l'opération 1104, l'utilisateur peut déplacer cette page de manière à en prendre connaissance, plus ou moins complètement, par l'intermédiaire de la souris 103 et de l'une des flèches 1082 et 1083.

Au cours du test 1105, l'unité centrale 1106 détermine si la page reçue est déjà conservée dans le disque dur 102, ou non. Si le résultat du test 1105 est négatif, au cours d'une opération 1106, l'unité centrale 106 provoque la mémorisation d'au moins une information d'adresse de la page reçue, et, éventuellement, une information de contenu, telle que l'ensemble des données reçues au format « texte » pour la page concernée, dans le disque dur 102.

A la suite de l'opération 1106 ou lorsque le résultat du test 1105 est positif, au cours du test 1107, l'unité centrale 106 détermine si l'utilisateur a sélectionné une autre page, par exemple par sélection d'un lien avec un autre page, tel que le lien 230.

Lorsque le résultat du test 1107 est positif et que la page sélectionnée n'a pas déjà été reçue au cours d'une opération 1103, l'opération 1103 est réitérée mais chaque page précédemment reçues est, au moins en partie (par exemple l'adresse de la page et/ou les données « texte » de cette page), conservée en mémoire cache 108. Lorsque le résultat du test 1107 est négatif, au cours du test 1108, l'unité centrale 106 détermine si un nombre prédéterminé de chiffres (par exemple quatre chiffres) saisis successivement correspondent à une séquence de chiffres d'une carte de paiement.

Lorsque le résultat du test 1108 est négatif, au cours du test 1109, l'unité centrale 106 détermine si un autre site a été sélectionné par l'utilisateur, par exemple selon l'une des manières exposées en regard de l'opération 1102 ou par sélection d'un lien entre le site en cours de visite et un nouveau site, dans la zone principale 1000, ou non. Lorsque le résultat du test 1109 est positif, l'opération 1102 est réitérée. Lorsque le résultat du test 1109 est négatif, l'opération 1104 est réitérée.

Lorsque le résultat du test 1108 est positif, au cours de l'opération 1110, l'unité centrale 106 effectue une opération de sécurisation contre un usage abusif du consentement contractuel de l'utilisateur du terminal 100 en sauvegardant au moins le montant du paiement. Cette opération de sécurisation comporte, par exemple, au moins l'une des opérations exposées ci-dessus. Par exemple, l'opération 1110 comporte au moins l'une des opérations de protection suivantes:
- l'unité centrale 106 crée un fichier de sauvegarde dans la mémoire non volatile 102, et y enregistre au moins les données au format « texte » des portions de pages du site informatique distant 150 qui ont été transmises depuis l'opération 1102 de connexion à ce site informatique distant 150. De manière préférentielle, cette mise en mémoire est associée à la mise en mémoire de la date. De manière préférentielle, au cours de l'opération 1109, un code d'intégrité est inséré dans le fichier et garantit, au cours d'une lecture ultérieure, que les données qui ont été enregistrées n'ont pas été modifiées depuis la création du fichier. Le lecteur pourra, par exemple, s'inspirer des technique de marquage dites « watermarking » pour mettre en oeuvre cette fonction de code d'intégrité ;
- l'unité centrale 106 affiche une fenêtre comportant un questionnaire que l'utilisateur complète, s'il le souhaite, pour garder trace de la transaction, le questionnaire portant, par exemple, sur le fournisseur, sur l'objet ou le service fournis, sur le montant de la transaction, sur le délai de fourniture, sur la garantie, sur le délai de réclamation, sur les conditions de remboursement en cas d'insatisfaction (pour remplir ce questionnaire, l'utilisateur peut minimiser la dimension de la fenêtre d'affichage du questionnaire et explorer les pages du site informatique distant 150) ;
- l'unité centrale 106 constitue un message crypté représentatif au moins du montant de la transaction et, préférentiellement d'un identifiant du fournisseur et ce message est transmis à un tiers de confiance 180, par exemple, le site informatique de la banque auprès de laquelle le paiement doit être effectué ; et/ou
- l'unité centrale 106 provoque l'impression de la date, du nom du fournisseur et du montant de la transaction, avec un code d'intégrité, et, lorsqu'il est disponible, le questionnaire complété mentionné ci-dessus.

En outre, cette opération de sécurisation comporte l'une des opérations ci-dessous :
- l'unité centrale 106 affiche une demande de code secret (par exemple un nombre d'identification personnel connu sous le nom de PIN (pour Personal Identification Number) pour vérifier que l'utilisateur qui a saisi la séquence reconnue au cours du test 1108 est bien autorisée à le faire, puis vérifie que ce code secret correspond à un code conservé en mémoire dans le disque dur 102 ;
- l'unité centrale 106 affiche une fenêtre comportant des données juridiques (voir figure 13) ;
- l'unité centrale 106 effectue l'impression d'un détail des paiements déjà effectués en ligne avec la carte concernée.

A la suite de l'opération 1110, au cours d'une opération 1111, une information représentative de la sécurisation de la transaction est envoyée au site informatique distant 150. Cette information est, par exemple, identique à l'information transmise au cours de l'opération 1101. En variante, cette information de sécurité est un certificat de transaction à usage unique qui doit être associée à la demande de paiement pour que l'organisme bancaire qui effectue les paiements liés à la carte, paye le fournisseur. En variante, cette information est un double du questionnaire mentionné ci-dessus, y compris des réponses fournies par l'utilisateur, afin qu'un document électronique contractuel soit connu des deux parties. A la suite de l'opération 1111, le test 1109 est effectué. On observe que la déconnexion du site Internet et la déconnexion du fournisseur d'accès sont effectuées de manière connue au cours de l'opération 1104, et ne sont donc pas détaillées ici.

Selon une variante non représentée, le test 1108 et les opérations 1109 et 1110 sont effectuées par un système informatique par lequel transite les données échangées au cours de la session de communication ou les données envoyées par le terminal 100 au site informatique distant 150. Par exemple, le système informatique du fournisseur d'accès à Internet 130 peut effectuer ce test 1108 et ces opérations 1109 et 1110 pour le compte de ses clients.

Selon un autre aspect du procédé visé par la présente invention, l'opération de sécurisation comporte :
- une connexion à un site tiers,
- une fourniture au site tiers d'un identifiant du site avec lequel la transaction est en cours (par exemple son adresse Internet), un identifiant de l'utilisateur (par exemple son adresse Internet), et un montant du paiement,
- une fourniture, par le site tiers, d'une information codée qui est représentative de la date et, préférentiellement, d'au moins un des identifiants indiqués ci-dessus selon une fonction de codage confidentielle,
- une création d'un fichier de sauvegarde conservant au moins les portions en mode « texte » des portions de pages transmises par le site informatique distant avec lequel la transaction est en cours, ainsi que l'information codée reçue de la part du site tiers. De manière préférentielle, un code d'intégrité est inséré dans le fichier et garantit que les données qui ont été enregistrées n'ont pas été modifiées depuis la création du fichier,
- une fourniture, par le site tiers, d'informations relatives à la loi applicable à la transaction commerciale en cours, et des informations légales minimales concernant cette loi, par exemple la durée de garantie légale et le délai légal de réclamation auprès du fournisseur, et
- un affichage d'informations légales.

Selon une variante, au moins une partie de l'identifiant d'un moyen de paiement, par exemple des chiffres de la carte de paiement ou une règle prédéterminée respectée par cette partie de l'identifiant, par exemple une somme des chiffres, sont transmises au site tiers de protection 170 et servent à calculer l'information codée.

Préférentiellement, la communication avec le site tiers de protection 170 est cryptée ou sécurisée, selon des techniques connues.

Selon un autre aspect de la présente invention, le dispositif illustré en figure 1 et, plus particulièrement l'unité centrale 106 mettent en oeuvre les opérations exposées ci-dessus, si ce n'est que l'unité centrale 106 effectue une opération de sécurisation au cours de laquelle :
- le terminal 100 se connecte, par l'intermédiaire du réseau 140, au site tiers de protection 170,
- le terminal 100 fournit au site tiers de protection 170 un identifiant du site informatique distant 150 (par exemple son adresse Internet), un identifiant de l'utilisateur (par exemple son adresse Internet), un montant de transaction,
- le site tiers de protection 170 fournit une information codée qui est représentative de la date et, préférentiellement, d'au moins un des identifiants indiqués ci-dessus selon une fonction de codage confidentielle,
- le terminal 100 crée un fichier de sauvegarde dans la mémoire non volatile 102, et y enregistre au moins les parties textuelles des portions de pages du site informatique distant 150 qui ont été transmises depuis l'opération 302, ainsi que l'information codée reçue de la part du site tiers de protection 170. De manière préférentielle, un code d'intégrité est inséré dans le fichier et garantit que les données qui ont été enregistrées n'ont pas été modifiées depuis la création du fichier,
- le site tiers de protection 170 fournit au terminal 100 des informations relatives à la loi applicable à la transaction commerciale en cours, et des informations légales minimales concernant cette loi, par exemple la durée de garantie légale et le délai légal de réclamation auprès du fournisseur, et
- le terminal 100 provoque l'affichage d'informations légales (voir figure 13).

Selon une variante, au moins une partie d'un identifiant de moyen de paiement, ou une relation qu'elle respecte, par exemple le résultat de la somme de chiffres, est transmise au site tiers de protection 170 et sert à calculer l'information codée.

Préférentiellement, la communication entre le terminal 100 et le site tiers de protection 170 est cryptée ou sécurisée, selon des techniques connues.

La figure 12 représente un organigramme d'opérations et tests d'un deuxième mode de réalisation du procédé objet de la présente invention. Cet organigramme comporte les fonctions et tests 1101 à 1104 et 1107 à 1109 de l'organigramme illustré en figure 11. Cependant, en comparaison avec l'organigramme illustré en figure 11, les opérations 1110 et 1111 sont remplacées par une opération 1209, au cours de laquelle :
- le terminal 100 se connecte, par l'intermédiaire du réseau 140, au site tiers de protection 170 ;
- le terminal 100 fournit au site tiers de protection 170 un identifiant du site informatique distant 150 (par exemple son adresse Internet), un identifiant de l'utilisateur (par exemple son adresse Internet), et un montant du paiement ;
- le site tiers de protection 170 fournit une information codée qui est représentative de la date et, préférentiellement, des identifiants indiqués ci-dessus selon une fonction de codage confidentielle ;
- le terminal 100 crée un fichier de sauvegarde dans la mémoire non volatile 102, et y enregistre au moins les parties textuelles des portions de pages du site informatique distant 150 qui ont été transmises depuis l'opération 1102, ainsi que l'information codée reçue de la part du site tiers de protection 170. De manière préférentielle, au cours de l'opération 1109, un code d'intégrité est inséré dans le fichier et garantit que les données qui ont été enregistrées n'ont pas été modifiées depuis la création du fichier ;
- le site tiers de protection 170 fournit au terminal 100 des informations relatives à la loi applicable à la transaction commerciale en cours, et des informations légales minimales concernant cette loi, par exemple la durée de garantie légale et le délai légal de réclamation auprès du fournisseur et
- le terminal 100 provoque l'affichage d'informations légales (voir figure 13).

Selon une variante, au moins une partie des chiffres de la carte de paiement qui sont conservés en mémoire 102 ou une relation entre eux, par exemple leur somme, sont transmis au site tiers de protection 170 et servent à calculer l'information codée.

Préférentiellement, la communication entre le terminal 100 et le site tiers de protection 170 est cryptée ou sécurisée, selon des techniques connues.

Selon une variante non représentée, le site tiers de protection 170 crée un fichier de sauvegarde dans sa propre mémoire (non représentée) et y enregistre les informations reçues de la part du terminal 100. De manière préférentielle, un code d'intégrité est inséré dans le fichier et garantit que les données qui ont été enregistrées n'ont pas été modifiées depuis la création du fichier.

La figure 13 représente un écran de visualisation au cours de la mise en oeuvre du deuxième mode de réalisation du procédé objet de la présente invention, à la suite de l'opération 1109.

L'écran de visualisation 104 présente les même éléments que ceux illustrés en figure 10, auxquels sont superposées, dans la portion principale 1000, une fenêtre d'information complémentaire 1350 et une fenêtre de questionnaire 1360. La fenêtre d'information complémentaire 1350 comporte une indication 1310 indiquant que des données liées à la transaction ont été enregistrées, une information sur la loi applicable à la transaction, 1320, des informations légales de base 1330 et 1340 comportant, en particulier, une information sur la durée de la garantie légale 1330 et une information sur le délai légal maximal de réclamation concernant la transaction 1340.

La fenêtre de questionnaire 1360 comporte des textes indications permettant à l'utilisateur de renseigner des zones destinées à préciser des données liées à la transaction en cours. Dans l'exemple décrit et représenté, les renseignements suivants sont demandés à l'utilisateur :
- un code d'authentification, qui permet d'authentifier l'utilisateur de la carte de paiement ;
- un montant de paiement ;
- le nom du fournisseur ;
- l'objet ou le service obtenu en échange du paiement ;
- un délai d'alerte qui correspond à une date raisonnable ou l'utilisateur souhaite voir un message sur l'écran 104, par exemple à la mise en route de son terminal, message qui lui sert à vérifier si les obligations du fournisseur ont bien été honorées.

Les réponses à ce questionnaire sont mises en mémoire, localement et/ou par le biais d'un tiers de confiance, et, éventuellement, sont transmis (à l'exception du délai d'alerte) au site informatique distant 150.

Dans un autre mode de réalisation, tout ou partie de ces renseignements est automatiquement extrait des informations disponibles dans les pages reçues de la part du site informatique distant 150.

Selon une variante non représentée, la page fournie par le site informatique distant 150 comporte, de manière codée ou non, une information représentative de la date de la transaction ou un numéro de session et cette informations est mémorisée au cours de l'opération de sécurisation.

Selon d'autres variantes, les information mémorisées au cours de l'une des opérations 1109 ou 1209 sont représentatives des informations textuelles d'au moins une portion d'au moins une page fournie par le site informatique distant 150, portion qui a été affichée par l'écran 104, ou de l'une ou de plusieurs des informations suivantes :
- les informations textuelles des autres portions desdites pages,
- les informations textuelles des autres pages affichées par l'écran de visualisation 104 et fournies par le site informatique distant 150,
- des informations non textuelles (graphiques et images) desdites portions affichées,
- des informations non textuelles d'au moins deux pages fournies par le site informatique distant 150 et affichées par l'écran de visualisation 104,
- des informations non textuelles des autres pages fournies par le site informatique distant 150,
- des informations contextuelles, date, heure, autres sites visités précédemment, ...

L'opération de sécurisation peut aussi comporter un affichage d'informations concernant la propriété intellectuelle relative à la transaction en cours, un clôture de la session, une transmission d'un message court sur un réseau de télécommunication, tel qu'un réseau téléphonique, par exemple mobile, ou un réseau de pageur, à un terminal de communication de l'utilisateur, message récapitulant les informations principales de la transaction en cours, une opération de transfert de données (date, montant du paiement, fournisseur) à un logiciel de tenue de comptabilité, personnelle ou professionnelle.

Un mode de réalisation du logiciel qui implémente le procédé objet de la présente invention, peut comporter, dans son code informatique, une partie d'un identifiant de moyen de paiement afin que ce logiciel soit associé à la carte de paiement. Ainsi, le logiciel peut être fourni par l'organisme financier qui a fourni la carte de paiement à l'utilisateur ou le logiciel peut être vendu sur un réseau de communication, tout en empêchant une copie illégale de ce logiciel d'être utilisée avec une autre carte de paiement. Dans ce dernier cas, une détection d'un moyen de paiement autre que celui qui est associé au logiciel peut provoquer l'affichage d'un message invitant l'utilisateur à acquérir une version du logiciel associée au moyen de paiement qu'il tente d'utiliser. Lorsqu'une commission est prévue pour la sécurisation de données ou avec un tiers de confiance, le logiciel put aussi provoquer un paiement pour payer cette commission.

L'opération de sécurisation peut aussi comporter la génération d'un certificat de transaction, mettant en oeuvre un tiers de confiance selon des techniques connues. Par exemple, la détection du paiement peut provoquer l'émission par un tiers de confiance d'un identifiant de transaction qui est transmis à l'une ou l'autre des parties de la transaction en cours (par exemple le client), puis qui est retransmis entre les parties (par exemple au fournisseur) avant d'être utilisée pour obtenir le paiement.

Le procédé de l'invention peut être mis en oeuvre dans un logiciel comportant une fonction de fourniture d'une autorisation de paiement et, automatiquement, d'un identifiant d'un moyen de paiement. Ainsi, ce logiciel comporte une sécurisation conforme à ce qui est exposé ci-dessus. Dans ce cas, cependant, ce logiciel fonctionne, conformément à la présente invention en tâche de fond par rapport à la session de communication entre le terminal et le site informatique distant.

On observe que l'information mémorisée au cours de l'opération de sécurisation peut être limitée au montant de la transaction et à une date, ou à ces éléments et un identifiant du fournisseur, ou à une seule page reçue de la part du site informatique distant 150 (par exemple la page de paiement, qui devrait légalement, à terme, récapituler les informations contractuelles).

La manière dont les informations enregistrées au cours de l'une des opérations de sécurisation exposées ci-dessus sont relues et mises à disposition de l'utilisateur, d'un avocat ou de la justice, sont bien connues de l'homme du métier et ne sont donc pas détaillées ici. D'une manière préférentielle, ces données ne peuvent pas être modifiées sans que cela ne soit perceptible.

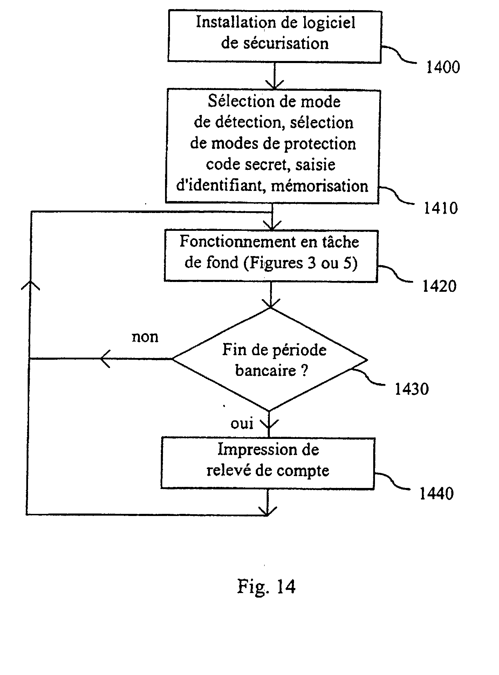

En figure 14 sont représentées les opérations effectuées pour la mise en oeuvre du procédé visé par la présente invention tel qu'illustré en figures 1 à 13 et 15.

Au cours d'une opération 1400, le logiciel mettant en oeuvre le procédé visé par la présente invention est installé.

Au cours de l'opération 1410, l'utilisateur sélectionne un mode de détection de préparation de paiement. Par exemple l'utilisateur donne les quatre premiers numéros d'une carte de paiement ou sélectionne que tout quadruplet de séquences de quatre chiffres ou une fonction d'un logiciel de paiement ou la sélection d'un icône dédié au paiement (non représenté) seront à détecter comme préparation d'un paiement en ligne.

Au cours de l'opération 1410, l'utilisateur sélectionne aussi les fonctions d'une opération de sécurisation, parmi celles qui sont exposées ci-dessus. L'opération de sécurisation comporte, au moins une opération de sauvegarde du montant du paiement. L'utilisateur peut aussi choisir un code secret, s'il souhaite être authentifié à chaque paiement en ligne. L'utilisateur peut aussi choisir un tiers de confiance et un organisme financier. L'utilisateur désigne aussi un ou plusieurs logiciels de navigation sur un réseau de communication informatique tel qu'Internet. Le mode de fonctionnement sélectionné par l'utilisateur est mis en mémoire.

Au cours d'une opération 1420, à chaque mise en fonctionnement du terminal 100 ou à chaque lancement de l'un des logiciels de navigation désignés au cours de l'opération 1410, la fonction de détection de paiement et, en cas de détection, la fonction de sécurisation, sont mises en fonctionnement en tâche de fond. Des modes d'implémentation de l'opération 1420 sont décrits en regard des figures 11 et 12.

Au cours d'un test 1430, il est détecté si une période bancaire, par exemple la période facturation de l'utilisation d'une carte de paiement, a expiré, ou non. Si le résultat du test 1430 est négatif, l'opération 1420 est réitérée. Si le résultat du test 1430 est positif, un affichage et/ou une impression de tous les achats effectués au cours de la période bancaire considérée est effectuée au cours d'une opération 1440, puis l'opération 1420 est réitérée.

On observe que la détection de la préparation de paiement peut consister en une détection d'un paiement, par exemple, par détection de transmission, sur le bus 109, d'informations relative à un moyen de paiement ou par détection de mise en fonctionnement d'un logiciel ou d'une routine de paiement ou de comptabilisation.

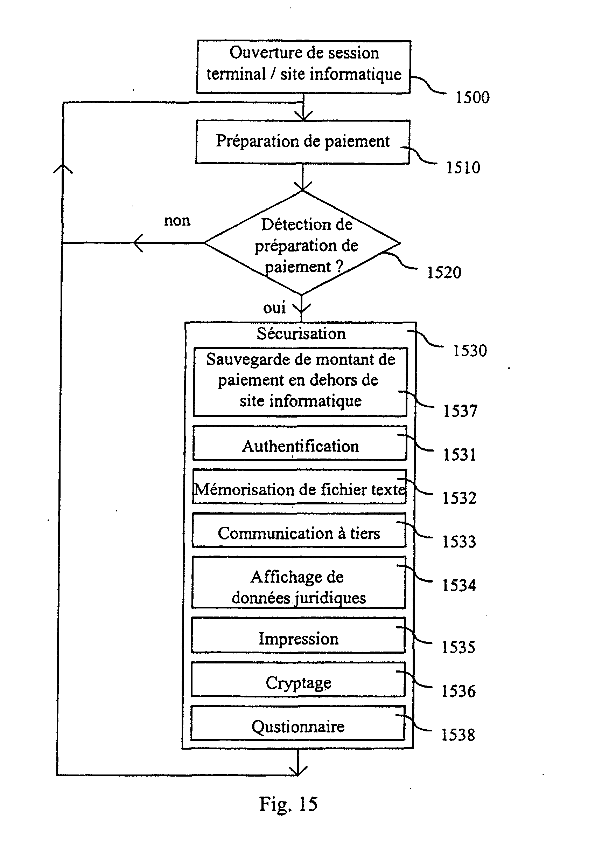

Selon l'un de ses aspects, illustré en figure 15, le procédé objet de la présente invention détecte automatiquement (opération 1520), au cours d'une session de communication (ouverte au cours d'une opération 1500) entre un terminal informatique d'un utilisateur et un site informatique, sur un réseau tel qu'Intemet, que l'utilisateur prépare un paiement par transmission, au cours de la session et par l'intermédiaire de son terminal, d'un identifiant d'un moyen de paiement (opération 1510). Par exemple, cette détection est effectuée en reconnaissant, parmi les chiffres saisis par l'intermédiaire d'un clavier du terminal, tout ou partie d'un numéro de carte de paiement ou de crédit (et/ou d'une date de péremption d'une telle carte, et/ou d'un numéro de compte bancaire et/ou d'une demande de certificat de transaction). Lorsque cette préparation de paiement est détectée, une opération 1530 de sécurisation dudit paiement.

Cette opération 1530 de sécurisation (soit, par exemple, de protection contre un usage abusif du consentement de l'utilisateur lié audit paiement) comporte au moins une opération 1537 de sauvegarde, en dehors du site informatique distant, du montant du paiement. L'opération de sauvegarde peut être effectuée en mémorisant ce montant, en l'imprimant ou en le transmettant à distance. L'opération 1530 peut comporter, en outre, par exemple, une authentification de l'utilisateur 1531, une mise en mémoire des données échangées avec un format « texte » au cours de la session 1532, une communication à un tiers de confiance, tel qu'une banque auprès de laquelle le paiement doit être effectué, de données relatives au paiement (montant, fournisseur) 1533, un affichage de données juridiques 1534, l'impression d'informations relatives à la transaction ou d'un détail des paiements déjà effectués en ligne 1535, un cryptage de la transmission de données confidentielles 1536, un affichage de questionnaire en vue de son renseignement 1538.

Ceci permet à l'utilisateur d'avoir, au moins, une protection juridique car une trace de l'accord contractuel existe, et une protection financière car le paiement est limité au montant convenu.

La plupart des différents aspects de la présente invention peuvent être combinés pour la mise en oeuvre d'un procédé et d'un dispositif d'assistance à un utilisateur de réseau de communication.

On observe que l'information fournie par le site de protection 170 au terminal 100 peut dépendre des lieux géographiques où se trouvent d'une part le site 150 et d'autre part le terminal 100. Par exemple, les lois applicables à une transaction peuvent dépendre de ces deux informations géographiques.

En fonction de la localisation géographique du terminal 100, que son utilisateur peut fournir au moment de l'acquisition ou de l'installation du logiciel d'assistance, l'offre ou la publicité d'un commerçant local à proximité du terminal 100 peut être fournie à ce terminal.

On observe que l'information confidentielle ou "à protéger" peut comporter toute signature électronique, le logiciel d'assistance détectant l'utilisation d'une routine ou d'un logiciel de signature résidant sur le terminal 100, ou d'une forme d'information reçue de la part du réseau 120 et représentative d'une mise en oeuvre d'une signature ou d'une forme particulière de séquences de symboles d'une signature électronique, d'une racine d'une signature électronique ou d'un accès à une fonction de signature électronique.

Préférentiellement, les données mémorisées identifient celles des données qui ont été affichées sur l'écran 104 et, éventuellement, la durée de leur affichage.

En variante, le paiement est sécurisé en remplaçant le numéro de carte de paiement par un numéro de chèque que le site fournisseur 150 peut faire tirer sur le compte de l'utilisateur ou du tiers de protection ou d'un tiers assurant le paiement. Préférentiellement, selon cette variante, le tiers de protection 170 demande une confirmation, une authentification ou une signature de l'utilisateur, émet à destination du site 150, une confirmation de l'ordre de paiement par ledit chèque en précisant le numéro de chèque, le nom du fournisseur et le montant du chèque. Le paiement n'est alors effectué que lorsque la livraison du bien vendu a été faite, le cas échéant. Cette variante possède l'avantage de mettre l'argent sous-séquestre jusqu'à la livraison, de garantir le fournisseur qu'il sera payé et d'éviter qu'un numéro de carte de paiement ne circule sur un réseau tel qu'Internet. On observe que, dans ce cas, il n'est pas indispensable que le site tiers de protection 170 ne fournisse une racine pour le numéro de chèque.

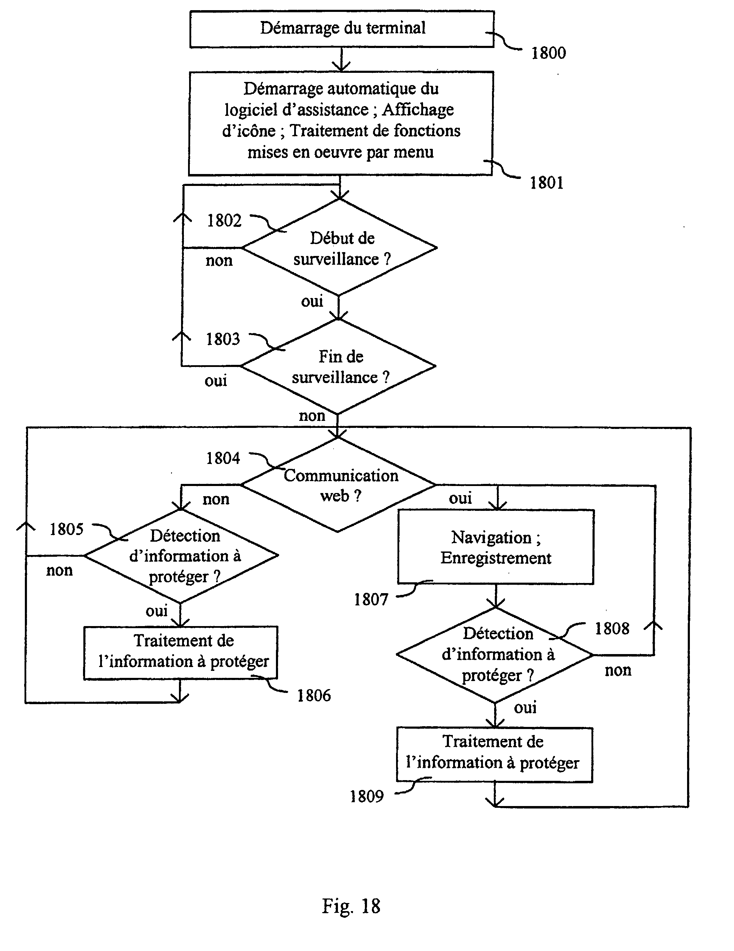

Dans le mode de réalisation illustré en figure 18, à la suite d'une opération 1800 de démarrage du terminal 100, au cours de l'opération 1801, le logiciel d'assistance est automatiquement mis en fonctionnement et provoque l'affichage par l'écran de visualisation 104, dans une barre d'outils, d'un icône spécifique audit logiciel d'assistance. En cliquant sur cet icône, grâce à un dispositif de pointage tel que la souris 103, l'utilisateur fait apparaître un menu qui comporte les options suivantes :
- enregistrer la partie visible de la page affichée,
- enregistrer la page affichée,
- commencer un enregistrement,
- éditer les enregistrements déjà effectués,
- aller sur le site d'assistance à la transaction,
- préférences/paramétrage,
- visualiser les informations concernant un site,
- suspendre l'exécution du logiciel d'assistance, et
- quitter le logiciel d'assistance,

L'option "enregistrer la partie visible de la page affichée" provoque la mise en mémoire de ce qui apparaît sur l'écran de visualisation 104, conjointement à une date et une heure, et un certificat d'intégrité qui permet de détecter toute modification ultérieure de l'information mémorisée.

L'option "enregistrer la page affichée" provoque la mise en mémoire de l'ensemble de la page dont une partie apparaît sur l'écran de visualisation 104, conjointement à une date et une heure, et un certificat d'intégrité qui permet de détecter toute modification ultérieure de l'information mémorisée.

L'option "commencer un enregistrement" provoque la mise en mémoire de tout ce qui apparaît sur l'écran de visualisation 104, à partir de la sélection de cette option jusqu'à la sélection d'une option "arrêter l'enregistrement" (cette option apparaît automatiquement à la place de l'option "commencer un enregistrement" lorsque cette dernière est sélectionnée) conjointement à une date et une heure, et un certificat d'intégrité qui permet de détecter toute modification ultérieure de l'information mémorisée.

L'option "éditer les enregistrements déjà effectués" permet de voir une liste d'enregistrements mis en mémoire. Par exemple, chaque ligne d'un tableau correspond à l'un de ces enregistrements mis en mémoire et de gauche à droite :
- un symbole indique si cet enregistrement concerne une information confidentielle (par exemple, le symbole "C"), si cet enregistrement concerne une transaction financière (par exemple, le symbole "$"), si cet enregistrement concerne une information confidentielle critique (par exemple, le symbole "X") ;
- un numéro de certificat d'intégrité, au moins pour les transactions financières,
- une date et une heure au cours de l'enregistrement, par exemple le début ou la fin de l'enregistrement,
- la durée de l'enregistrement,
- une date à laquelle une action doit être exécutée (en particulier une livraison liée à une transaction financière) et à laquelle l'utilisateur sera interrogé sur le bon déroulement de cette action et/ou sur sa satisfaction concernant le fournisseur de cette action,
- le nom du site internet ou web dont des pages ou des parties de pages sont enregistrées, le cas échéant,
- la présence ou non d'informations jointes, telles que des pages HTML de termes et conditions, et
- la taille du fichier contenant l'enregistrement en question.

Chacun des enregistrements peut être sélectionné par usage de la souris 103. Le tableau des enregistrements est affiché avec des boutons qui peuvent être sélectionnés par usage de la souris 103 et qui concernent, respectivement :
- un lancement de la visualisation de l'enregistrement concerné par une ligne sélectionnée préliminairement (par défaut, la première), cette visualisation se fait avec un petite interface graphique représentant les boutons d'un magnétoscope (lire, arrêt, et, éventuellement, retour) et/ou une échelle avec un curseur qui peut être déplacé pour visualiser les images dans la séquence, la position du curseur représentant, par rapport à l'échelle, la proportion de temps écoulé entre le début de la séquence et l'image visualisée par rapport à la durée totale de la séquence,
- de visualiser les informations jointes à l'enregistrement,
- d'adjoindre ou de modifier des commentaires relatifs à cet enregistrement,
- d'effacer un enregistrement, et
- d'exporter un enregistrement vers un autre répertoire de la mémoire 108 ou d'une autre mémoire.

L'usage de chacune de ces fonctions est conditionné à une authentification de l'utilisateur (demande de mot de passe ou toute autre signature).

L'option "aller sur le site d'assistance à la transaction" connecte le terminal 100 et le site tiers de protection 170 pour que l'utilisateur du terminal 100 puisse visualiser des pages du site 170.

L'option "préférences/paramétrage" permet de choisir les paramètres de fonctionnement du logiciel d'assistance, et, en particulier les paramètres suivants :
- un mot de passe pour contrôler le logiciel d'assistance (si aucun mot de passe n'est choisi, tous les contrôles sont toujours accessibles à tout utilisateur),
- des informations dites "financières" comportant, par exemple, une ou plusieurs des informations suivantes :
   . des numéros de cartes de paiement,
   . des numéros de comptes bancaires et
   . des mots de passe pour accéder à des logiciels de paiement, des sites de paiement ou un répertoire/fonction de navigateur d'informations pouvant être utilisé pour effectuer un paiement, répertoire/fonction de navigateur appelé "wallet" en anglais.
- d'autres informations confidentielles considérées comme "critiques", telles que des numéros de sécurité sociale, de pièces d'identité, nom de jeune fille, prénoms des enfants, nom de l'école des enfants,
- d'autres informations confidentielles considérées comme non critiques, somme le code postal, le numéro de l'adresse dans une rue, des mots clés comme "garçon" ou "fille",
- l'acceptation de partager (c'est-à-dire de transmettre à une base de données, de manière anonyme) une indication de satisfaction et/ou une indication de ponctualité de livraison liées à un identificateur du site fournisseur concerné,
- la manière dont le logiciel d'assistance réagit lorsqu'il détecte la saisie d'une information critique, c'est-à-dire en demandant la saisie du mot de passe, en affichant une fenêtre de mise en garde contre les dangers liés à la transmission de cette information confidentielle, et/ou la mémorisation de l'enregistrement en cours lorsque cette information critique est détectée,
- la manière dont le logiciel d'assistance réagit lorsqu'il détecte une information confidentielle non critique, en affichant une mise en garde et/ou en effectuant une mémorisation de l'enregistrement en cours lorsque cette information non critique est détectée,
- où les enregistrements doivent être stockés, c'est-à-dire dans quelle répertoire, sur quelle mémoire liée à un réseau local, sur le site tiers de protection 170, sur un site tiers de confiance 180, ... On observe que plusieurs destinations peuvent être choisies simultanément pour ces enregistrements,
- si les enregistrements ne concernant aucune information confidentielle doivent être conservés,
- quand la surveillance des informations confidentielles doit avoir lieu, par exemple, soit à tout moment, soit dès qu'un logiciel d'accès à une fournisseur d'accès à Internet et/ou de courrier électronique, soit seulement lorsque l'utilisateur est relié à un site Internet web ;
- une quantité de mémoire allouée aux enregistrements du logiciel d'assistance,

Le choix de chacun de ces paramètres est conditionné à une authentification de l'utilisateur (demande de mot de passe ou toute autre signature).
- visualiser les informations concernant un site permet d'afficher les informations concernant le site sur lequel l'utilisateur navigue, qui sont conservées ou retrouvées par le site tiers de protection 170,
- suspendre l'exécution du logiciel d'assistance permet de suspendre la surveillance des informations à protéger et d'effacer l'enregistrement en cours, le cas échéant, et
- quitter le logiciel d'assistance permet d'arrêter le fonctionnement du logiciel d'assistance.

Le choix de chacune de ces deux dernières fonctions est conditionné à une authentification de l'utilisateur. Lorsque le menu est sélectionné, le mot de passe n'est, cependant, demandé qu'une seule fois jusqu'à ce que le menu soit refermé.

Pour des raisons de simplification de la description en ce qui concerne des fonctions techniques biens connues de l'homme du métier, la mise en oeuvre des options ci-dessus n'est pas détaillée ici.

Ensuite, au cours du fonctionnement du logiciel d'assistance, lorsque les options du menu du logiciel d'assistance ne sont pas affichées ou utilisées, au cours d'un test 1802, est déterminé si la surveillance d'informations à protéger (informations financières, critiques et non critiques) doit commencé. Ce test 1802 dépend du paramétrage choisi par l'utilisateur comme exposé plus haut ou du paramétrage du logiciel par défaut. Lorsque le résultat du test 1802 est négatif, le test 1802 est réitéré. Lorsque le résultat du test 1802 est positif, au cours d'un test 1803, est déterminé si la surveillance d'informations à protéger doit s'achever. Ce test 1803 dépend du paramétrage choisi par l'utilisateur ou par défaut. Lorsque le résultat du test 1803 est positif, le test 1802 est réitéré. Lorsque le résultat du test 1803 est négatif, au cours d'un test 1804, est déterminé si l'ordinateur 100 est relié à un site Internet web. Si le résultat du test 1804 est négatif, le test 1805 est effectué. Si le résultat du test 1804 est positif, l'opération 1807 est effectuée.

Au cours du test 1805, est déterminé si une information à protéger est détectée. La détection de l'information confidentielle peut être effectuée de différentes manières, comme, par exemple :
- par surveillance des symboles saisis au clavier 105,
- par surveillance du passage en mode sécurisé (encrypté) de la communication, par exemple en détectant la présence de la racine "https" dans une adresse de page reçue,
- par surveillance d'autres moyens d'entrées d'informations non représentés (comme un microphone et une carte de reconnaissance de parole),
- par surveillance des informations reçues (par exemple par reconnaissance optique de caractère et détection de mots clés comme "signature", "bon de commande", "carte de crédit" (en anglais "credit card"), "adresse", "e-mail address", "visa"(marque déposée), "mastercard" (marque déposée), ...)
- par surveillance du contenu du presse-papier, et/ou
- par surveillance de la copie de fichiers présents dans la mémoire 108, fichiers qui contiennent des informations à protéger (ces fichiers sont détectés, de manière connue, au moment où une nouvelle information confidentielle est fournie par l'utilisateur à titre d'information à protéger au cours d'une opération de paramétrage.

Par exemple, la surveillance d'informations à protéger consiste en la comparaison de caractéristiques d'informations à protéger avec des caractéristiques d'informations mises en oeuvre à chaque instant ou pendant des périodes de surveillance et lorsque ces caractéristiques se correspondent à considérer qu'une information à protéger à été détectée.

Si le résultat du test 1805 est négatif, le test 1804 est réitéré. Si le résultat du test 1805 est positif, au cours de l'opération 1806, le traitement de la détection de l'information à protéger est effectué. Selon les paramètres choisis par l'utilisateur ou les paramètres du logiciel par défaut,
- une fenêtre de mise en garde, dont le contenu dépend préférentiellement de l'information confidentielle détectée, est affichée,
- l'image affichée au moment de la détection de l'information confidentielle est mise en mémoire,
- une authentification de l'utilisateur est demandée, par exemple, sous la forme de la demande du mot de passe.

A la suite de l'opération 1806, le test 1804 est réitéré.

Au cours de l'opération 1807, et pendant que l'utilisateur navigue sur le site web du fournisseur d'offre 150, le logiciel d'assistance effectue différentes opérations,
- à chaque fois que l'utilisateur accède à un nouveau site web, le logiciel d'assistance entame un enregistrement qui est conservé en mémoire 108 et l'icône spécifique au logiciel d'assistance commence à clignoter dans la barre d'outils;
- à chaque fois que l'utilisateur accède à un nouveau site web, le logiciel d'assistance fournit au site tiers de protection 170 un identifiant du site web 150, et attends, en retour, une information concernant le site web 150 (taux de satisfaction des précédents clients, taux de ponctualité constatés par les précédents clients, taux de respect de vie privée, adresses des pages a contenu légal, par exemple page des termes et conditions, de la garantie, des conditions de remboursement, de livraison, de traitement des informations confidentielles, pays du site, principales lois de protection du consommateur applicables à la transaction, ...). Pendant que l'ordinateur 100 attends la réponse, l'icône clignote en orange, si des informations sont reçues de la part du site 170 dans un délai prédéterminé, l'icône se met à clignoter en vert, et, sinon, l'icône se met à clignoter en rouge;
- à chaque fois que l'utilisateur quitte un site web sans qu'aucune information à protéger n'ait été détectée, en fonction du paramétrage choisi par l'utilisateur ou du paramétrage par défaut du logiciel d'assistance, soit l'enregistrement est détruit, soit il est conservé et mis dans la liste des enregistrements effectués. Dans ce cas, selon les variantes de modes de réalisation de la présente invention, cet enregistrement est doté, ou non, d'un certificat d'intégrité.

On observe ici que l'enregistrement effectué comporte préférentiellement une compression d'image sans perte de ce qui est affiché sur l'écran 104, par exemple, toutes les séquences, lorsque, au cours de ladite seconde le dispositif de pointage (la souris) a été utilisé soit en déplacement soit par appui sur l'un de ses boutons ou si le clavier ou un autre dispositif d'entrée d'information a été mis en oeuvre.

L'enregistrement comporte, pour chaque image, l'heure (y compris minutes, seconde et, éventuellement fractions de seconde) à laquelle elle a été prise ou, ce qui revient au même, combien de temps a séparé la prise de cette image de la prise de la suivante. De cette manière la séquence des images affichées sur l'écran 104 peut être visualisée ultérieurement avec les durées d'affichage de chaque image qui correspondent à leur durée d'affichage initial. L'enregistrement peut, par exemple, prendre un format vidéo, tel que le format ".AVI" bien connu de l'homme du métier. Ceci permet, par exemple que tout dispositif capable de lire ce type de format puisse visualiser l'enregistrement en question.

Ensuite, au cours du test 1808, il est déterminé si une information à protéger est détectée. La détection de l'information confidentielle peut être effectuée de différentes manières, comme, par exemple :
- par surveillance des symboles saisis au clavier 105,
- par surveillance d'autres moyens d'entrées d'informations non représentés (comme un microphone et une carte de reconnaissance de parole),
- par surveillance du contenu du presse-papier,
- par surveillance de la copie de fichiers présents dans la mémoire 108, fichiers qui contiennent des informations à protéger (ces fichiers sont détectés, de manière connue, au moment où une nouvelle information confidentielle est fournie par l'utilisateur à titre d'information à protéger au cours d'une opération de paramétrage,
- par surveillance du passage en mode sécurisé (encrypté) de la communication, par exemple en détectant la présence de la racine "https" dans une adresse de page reçue,
- par surveillance des informations reçues par le terminal, en provenance du réseau de communication, (par exemple par reconnaissance optique de caractère et détection de mots clés comme "signature", "bon de commande", "carte de crédit" (en anglais "credit card"), "adresse", "e-mail address", "visa"(marque déposée), "mastercard" (marque déposée), ...), et/ou
- par surveillance de la copie de fichiers présents dans la mémoire 108, fichiers qui contiennent des informations à protéger (ces fichiers sont détectés, de manière connue, au moment où une nouvelle information confidentielle est fournie par l'utilisateur à titre d'information à protéger au cours d'une opération de paramétrage.

Si le résultat du test 1808 est négatif, l'opération 1807 est poursuivie. Si le résultat du test 1808 est positif, au cours de l'opération 1809, le traitement de la détection de l'information à protéger est effectué. Selon les paramètres choisis par l'utilisateur ou les paramètres du logiciel par défaut :
- une fenêtre de mise en garde, dont le contenu dépend préférentiellement de l'information confidentielle détectée, est affichée,
- l'enregistrement en cours est mis en mémoire à l'endroit choisi, dès que l'utilisateur quitte le site web 150 en question, l'enregistrement étant associé à un certificat d'intégrité, une date d'enregistrement certifiée (car provenant du site de protection 170), les contenus des pages à contenu légal dudit site 150, le cas échéant (l'ordinateur 100 effectue directement cette lecture sur le site du fournisseur d'offre 150),
- un double du certificat d'intégrité est envoyé au site de protection 170, avec, éventuellement, la liste des pages du site web visitées par l'utilisateur, par exemple pour constituer un enregistrement représentatif de celui conservé par l'utilisateur mais ne comportant que les adresses ou les contenus des pages au format HTML (et non des séquences d'images comprimées comme l'enregistrement de l'utilisateur), afin de témoigner, au cas où la relation entre l'utilisateur de l'ordinateur 100 et le site 150 devait donner lieu à un litige ultérieur,
- dès que l'utilisateur quitte le site web 150 en question, une fenêtre lui demandant une date de réalisation d'une action ultérieure, telle qu'une livraison, est affichée et l'utilisateur peut choisir une date de livraison espérée (voir autres modes de réalisation de l'invention, et figure 16),
- une authentification de l'utilisateur est demandée, par exemple, sous la forme de la demande du mot de passe.

A la suite de l'opération 1809, le test 1804 est réitéré.

On observe que, selon des variantes, les images mémorisées comportent, ou non, la position du marqueur (ou curseur) de la souris 103 ou d'un dispositif de pointage compatible. A cet effet, le logiciel d'assistance capte à tous moments, d'une part, l'écran, de manière connue, et, d'autre part, la forme du curseur de la souris et ses coordonnées à l'écran. Le logiciel insère alors le curseur dans l'image capturée à l'endroit indiqué par lesdites coordonnées et enregistre l'image résultante.

Dès qu'un enregistrement vidéo d'une transaction financière a été enregistrée en mémoire RAM non volatile en vue d'une conservation prolongée (au delà de la durée de fonctionnement continu de l'ordinateur), le logiciel d'assistance calcule une combinaison mathématique des données du fichier vidéo résultant (par exemple, une fonction connue sous le nom de "checksum" pour "somme de vérification"). Cette combinaison mathématique est appelée certificat d'intégrité car si le fichier est modifié ultérieurement, la valeur de cette combinaison mathématique changera si bien que la modification ultérieure sera détectée. Le terminal 100 ou le logiciel d'assistance envoient alors au site tiers de protection 170 les informations suivantes:
* Numéro de série du logiciel d'assistance,
* adresse Internet URL du site 150,
* le certificat d'intégrité du fichier vidéo,
* la taille du fichier vidéo,
* la date et heure universelle sur le terminal 100 à la fin de la transaction.

En retour, le logiciel d'assistance obtient, de la part du site 170 et mémorise, de manière associée à l'enregistrement concerné :
* Un numéro unique identifiant la transaction sur le serveur du site 170,
* la date sur le serveur du site 170 à laquelle la transaction a été enregistrée
* la date sur le terminal 100 d'enregistrement de la transaction (afin de confirmer que la date reçue est correcte et d'avoir exactement ce qui est enregistré au niveau du serveur, pour tenir compte, notamment des problèmes de fuseau horaire).

Lors de l'exportation (fonction mise en oeuvre par utilisation du menu du logiciel d'assistance et de l'option d'édition d'enregistrements, le logiciel d'assistance génère 3 types de fichiers:
* de 1 a 10 fichiers HTML contenant les pages à contenu légal du site 150,
* Un fichier vidéo, par exemple au format AVI
* Un certificat d'intégrité contenant un autre certificat d'intégrité calculé sur les fichiers HTML et vidéo ainsi que la taille de ces fichiers.

Il contient également le numéro de la transaction d'origine, ainsi que les dates d'enregistrement de la transaction du serveur du site 170 et du terminal 100 et le certificat d'intégrité du fichier vidéo d'origine et sa taille. Un certificat d'intégrité est aussi calculé sur le certificat d'intégrité principal. Ainsi, tout changement ultérieur effectué dans un fichier vidéo, HTML ou le certificat d'intégrité sera détecté et rendra l'ensemble exporte invalide.

A titre d'exemple, les certificats d'intégrités sont calculés selon la méthode connue sous le nom de CRC-32.

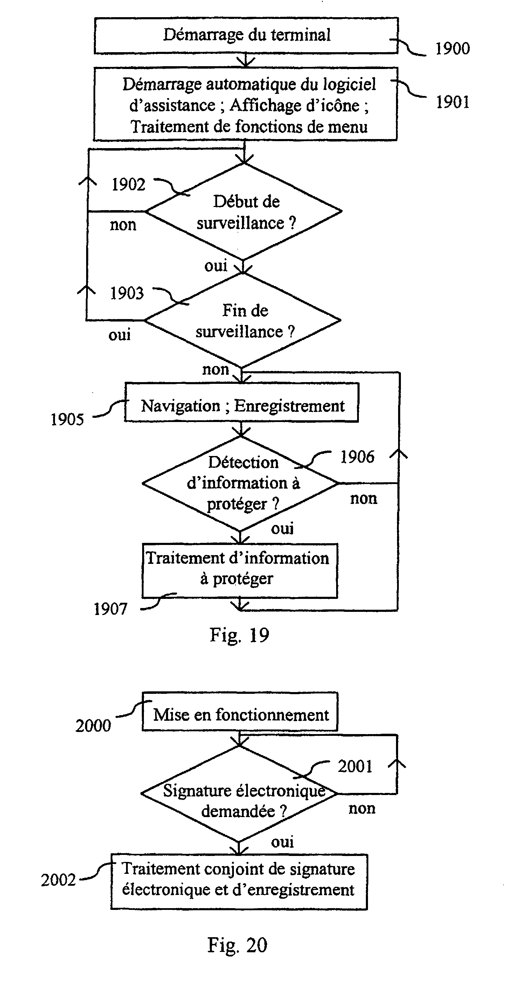

Dans le mode de réalisation illustré en figure 19, le terminal de l'utilisateur ne comporte pas de mémoire disponible pour conserver des informations. Par exemple, ce terminal est un téléphone mobile ou un ordinateur de poche. Le logiciel d'assistance est alors mis en oeuvre dans un système informatique qui reçoit une information représentative de l'information reçue par le terminal de l'utilisateur. Par exemple, le logiciel d'assistance fonctionne dans le serveur d'un site portail ou fournisseur d'accès à Internet (en anglais "ISP" pour Internet Service Provider) par lequel l'utilisateur accède à des ressources du réseau de communication. Une autre partie du logiciel d'assistance est mise en oeuvre dans un terminal tel que le terminal 100 et reçoit des enregistrements faits par ledit serveur, par exemple sous forme de fichiers attachés à des courriers électroniques. Cette autre partie du logiciel peut être similaire au logiciel d'assistance illustré en regard des figures 1 à 18, avec, en outre, une fonction d'importation d'enregistrements effectués à partir d'un terminal portable.

Par simplification, on n'a considérer dans la description qui suit que le cas où seules les transactions sont protégées, c'est à dire que les informations confidentielles à protéger sont des informations financières, des signatures électronique ou des informations caractéristiques d'une transaction.

A la suite d'une opération 1900 de démarrage du terminal et de mise en relation de ce terminal avec le serveur mettant en oeuvre le logiciel d'assistance, au cours de l'opération 1901, le logiciel d'assistance est automatiquement mis en fonctionnement et provoque l'affichage par l'écran de visualisation 104, d'un icône spécifique audit logiciel d'assistance. En sélectionnant cet icône, de manière connue dans le domaine des terminaux portables, l'utilisateur fait apparaître un menu qui comporte les options suivantes :
- commencer un enregistrement,
- préférences/paramétrage,
- visualiser les informations concernant un site, et
- suspendre l'exécution du logiciel d'assistance.

L'option "commencer un enregistrement" provoque la mise en mémoire dans le serveur, de tout ce qui apparaît sur l'écran de visualisation du terminal portable, à partir du moment de la sélection de cette option jusqu'au moment de la sélection d'une option "arrêter l'enregistrement" (cette option apparaît automatiquement, dans le menu, à la place de l'option "commencer un enregistrement" lorsque cette dernière est sélectionnée) conjointement à une date et une heure, et un certificat d'intégrité qui permet de détecter toute modification ultérieure de l'information mémorisée.

L'option "préférences/paramétrage" permet de choisir les paramètres de fonctionnement du logiciel d'assistance, et, en particulier les paramètres suivants :
- un mot de passe pour contrôler le logiciel d'assistance (si aucun mot de passe n'est choisi, tous les contrôles sont toujours accessibles à tout utilisateur),
- des informations dites "financières" comportant, par exemple, une ou plusieurs des informations suivantes :
   . des numéros de cartes de paiement,
   . des numéros de comptes bancaires et
   . des mots de passe pour accéder à des logiciels de paiement, des sites de paiement ou un répertoire/fonction de navigateur d'informations pouvant être utilisé pour effectuer un paiement, répertoire/fonction de navigateur appelé "wallet" en anglais.
- la manière dont le logiciel d'assistance réagit lorsqu'il détecte la survenance d'une transaction, c'est-à-dire en demandant la saisie du mot de passe (par exemple pour la cas où le paiement d'une transaction est effectué avec celui des communications effectuées avec le terminal portable), et/ou la mémorisation/conservation de l'enregistrement en cours lorsque la transaction est détectée,
- où les enregistrements doivent être stockés, c'est-à-dire dans quelle répertoire, sur quelle mémoire liée à un réseau local, sur le site tiers de protection 170, sur un site tiers de confiance 180, en attachement à un courrier électronique à destination de quelle adresse ee-mail ... On observe que plusieurs destinations peuvent être choisies simultanément pour ces enregistrements,
- si les enregistrements ne concernant aucune transaction doivent être conservés,
- quand la surveillance des informations à protéger doit avoir lieu, par exemple, soit à tout moment, soit dès qu'un logiciel d'accès à une fournisseur d'accès à Internet et/ou de courrier électronique, soit seulement lorsque l'utilisateur est relié à un site Internet web ;

Le choix de chacun de ces paramètres est conditionné à une authentification de l'utilisateur (demande de mot de passe ou toute autre signature).
- visualiser les informations concernant un site permet d'afficher les informations concernant le site sur lequel l'utilisateur navigue, qui sont conservées ou retrouvées par le site tiers de protection 170,
- suspendre l'exécution du logiciel d'assistance permet de suspendre la surveillance des informations à protéger et d'effacer l'enregistrement en cours, le cas échéant.

Le choix de cette dernière fonction est conditionné à une authentification de l'utilisateur. Lorsque le menu est sélectionné, le mot de passe n'est, cependant, demandé qu'une seule fois jusqu'à ce que le menu soit refermé.

Pour des raisons de simplification de la description en ce qui concerne des fonctions techniques biens connues de l'homme du métier, la mise en oeuvre des options ci-dessus n'est pas détaillée ici.

Ensuite, au cours du fonctionnement du logiciel d'assistance, lorsque les options du menu du logiciel d'assistance ne sont pas affichées ou utilisées, au cours d'un test 1902, est déterminé si la surveillance d'informations à protéger (informations financières, critiques et non critiques) doit commencé. Ce test 1902 dépend du paramétrage choisi par l'utilisateur comme exposé plus haut ou du paramétrage du logiciel par défaut. Lorsque le résultat du test 1902 est négatif, le test 1902 est réitéré. Lorsque le résultat du test 1902 est positif, au cours d'un test 1903, est déterminé si la surveillance d'informations à protéger doit s'achever. Ce test 1903 dépend du paramétrage choisi par l'utilisateur ou par défaut. Lorsque le résultat du test 1903 est positif, le test 1902 est réitéré. Lorsque le résultat du test 1903 est négatif, au cours d'une opération 1905, et pendant que l'utilisateur utilise son terminal pour communiquer sur le réseau, le logiciel d'assistance effectue différentes opérations,
- à chaque fois que l'utilisateur accède à un nouveau site, le logiciel d'assistance entame un enregistrement de tout ce qui est transmis à l'utilisateur, cet enregistrement est conservé dans le serveur ;
- à chaque fois que l'utilisateur accède à un nouveau site, le logiciel d'assistance indique à l'utilisateur s'il dispose d'informations concernant le site visité (taux de satisfaction des précédents clients, taux de ponctualité constatés par les précédents clients, taux de respect de vie privée, adresses des pages a contenu légal, par exemple page des termes et conditions, de la garantie, des conditions de remboursement, de livraison, de traitement des informations confidentielles, pays du site, principales lois de protection du consommateur applicables à la transaction, ...) ;
- à chaque fois que l'utilisateur quitte un site sans qu'aucune information à protéger n'ait été détectée, en fonction du paramétrage choisi par l'utilisateur ou du paramétrage par défaut du logiciel d'assistance, soit l'enregistrement est détruit, soit il est conservé dans le lieu choisi par l'utilisateur. Dans ce cas, selon les variantes de modes de réalisation de la présente invention, cet enregistrement est doté, ou non, d'un certificat d'intégrité.

L'enregistrement comporte, pour l'ensemble des informations transmises au terminal utilisateur, pendant la navigation, l'heure (y compris minutes, seconde et, éventuellement fractions de seconde) de la communication.

Ensuite, au cours du test 1906, il est déterminé si une information à protéger est détectée. La détection de l'information confidentielle peut être effectuée de différentes manières, comme, par exemple :
- par surveillance des symboles saisis au clavier du terminal,
- par surveillance d'autres moyens d'entrées d'informations non représentés (comme un microphone),
- par surveillance du contenu des informations transmises à ce terminal, en provenance du réseau de communication.

Si le résultat du test 1906 est négatif, l'opération 1905 est poursuivie. Si le résultat du test 1906 est positif, au cours de l'opération 1907, le traitement de la détection de l'information à protéger est effectué. Selon les paramètres choisis par l'utilisateur ou les paramètres du logiciel par défaut :
- l'enregistrement en cours est mis en mémoire à l'endroit choisi, dès que l'utilisateur quitte le site en question, l'enregistrement étant associé à un certificat d'intégrité, une date d'enregistrement certifiée (car fournie par le serveur), les contenus des pages à contenu légal dudit site, même si elles n'ont pas été transmises au terminal, le cas échéant),
- dès que l'utilisateur quitte le site web 150 en question, une fenêtre lui demandant une date de réalisation d'une action ultérieure, telle qu'une livraison, est affichée et l'utilisateur peut choisir une date de livraison espérée (voir autres modes de réalisation de l'invention, et figure 16),
- une authentification de l'utilisateur est demandée, par exemple, sous la forme de la demande du mot de passe.

A la suite de l'opération 1907, le test 1904 est réitéré.

On observe ici que, pour chacun des modes de réalisation de la présente invention, la surveillance de fourniture d'informations à protéger peut, par exemple, avoir lieu en permanence, seulement lorsqu'un logiciel de communication sur un réseau est en fonctionnement (tel qu'un logiciel d'accès à un fournisseur d'accès en ligne et/ou de rédaction de courriers électroniques), seulement lorsque le terminal est connecté à un autre système informatique à travers un réseau de communication, par exemple l'Internet ou un intranet ou seulement lorsque le terminal est connecté à un autre système informatique à travers une connexion sécurisée d'un réseau de communication. Ceci peut être fixé par fabrication, par défaut ou par paramétrage du logiciel d'assistance par l'un de ses utilisateurs, par exemple.

En variante, la mise en oeuvre de l'opération de conservation en mémoire de l'enregistrement, dépend de la détection d'informations à protéger au cours de la communication avec un site 150. Par exemple :
- si une transaction financière ou une signature est détectée, la conservation de l'enregistrement est effectué au format vidéo et représente la séquence des images affichées sur l'écran 104 (les portions des pages reçues du site et affichées), avec les pages HTML des pages du site 150 à contenu légal, une date certifiée et un certificat d'intégrité et, une conservation selon un format texte dans le site de protection 170 des pages reçues par le terminal 100 et des pages à contenu légal de ce site ;
- sinon, et si une information confidentielle critique est détectée, les pages HTML reçues de la part du site sont conservées ainsi qu'une page à contenu juridique précisant la pratique du site en matière de données confidentielles ;
- sinon, si une information confidentielle non critique est détectée, seul les fichiers des pages correspondant à du texte sont conservés ;
- sinon, aucune conservation d'information n'est effectuée.

De même, l'effacement automatique de ces données, leur compression, et/ou une invitation de l'utilisateur à effacer ces données, dépendent préférentiellement du type d'information à protéger que ces données concernent.

Le lecteur pourra s'appuyer sur la description des autres modes pour la mise en oeuvre de chaque caractéristique technique du mode de réalisation exposé ici.

Dans le cas d'un accès à Internet par l'intermédiaire d'un dispositif possédant peu de mémoire disponible, l'enregistrement ou l'enregistrement simplifié (c'est-à-dire l'enregistrement d'une partie des informations reçues par le terminal) peuvent être envoyés automatiquement à une adresse Internet donnée, à un site de conservation de documents, tel que Xdrive (marque déposée), ou en attachement à un courrier électronique à une adresse e-mail choisie par l'utilisateur.

Dans le cas d'un accès avec un téléphone mobile, le portail d'accès peut réaliser les fonctions exposées ci-dessus en regard de l'un ou l'autre des aspects de la présente invention.

En outre, le site fournisseur d'offre 150 peut mettre en oeuvre un aspect de la présente invention selon lequel il conserve une identification des pages sur lesquelles l'utilisateur a navigué et de la partie de ces pages qui a effectivement été affichée pour l'utilisateur, ainsi qu'une date de ladite visite.

Selon une variante non représentée, dans un réseau local, chaque poste effectue les opérations présentées dans l'un des modes de réalisation ci-dessus et conserve localement les enregistrements qu'il réalise. Puis, à intervalle de temps régulier, par exemple, chaque nuit, les enregistrements sont collectés par un serveur de réseau.

Selon une variante non représentée, le déclenchement (détection d'information à protéger, de signature, de passage en mode sécurisé, ...) provoque la mémorisation des informations représentatives de la page en cours d'affichage au moment d'un déclenchement mais aussi d'autres pages du site, par exemple, les pages considérées comme pouvant avoir un contenu légal (conformément aux modes de réalisation exposés ci-dessus dans lequel le site de protection 170 conserve des adresses de telles pages).

Dans ce qui suit, le premier site est généralement un site web, ou un site fournisseur d'offre tel que le site 150.

Selon une variante non représentée, le logiciel d'assistance protège l'utilisateur en transmettant, automatiquement, au site 150 ou à un interlocuteur à distance, une information complémentaire à la communication avec ce site ou cet interlocuteur. Cette transmission ou cet ajout dépendent d'au moins l'un des critères suivants :
- l'identité de l'une des personnes partie à la communication, et/ou
- le contenu des informations communiquées entre les parties à la communication.

Selon des caractéristiques particulières du vingt-septième aspect, ladite information ajoutée comporte une limitation de la portée juridique de ladite communication. Par exemple, l'information ajoutée indique "une communication a eu lieu avec un membre du personnel de l'entreprise, tout engagement de l'entreprise est assujetti à la signature de l'un de ses mandataires sociaux. L'interlocuteur de l'entreprise est responsable de vérifié s'il est nécessaire de confirmer le contenu de la communication qui a eu lieu auprès d'un responsable de l'entreprise. Pour obtenir une signature, cliquez ici ". Le fait de sélectionner le mot "ici" provoque la transmission d'une information représentative de la communication initiale à un membre de la hiérarchie de l'entreprise protégée afin qu'il valide (par signature électronique, par exemple) ou infirme le contenu de ladite communication initiale.

Ainsi, dans une entreprise utilisant le logiciel d'assistance, en fonction de l'identité d'une utilisateur dans l'entreprise, de l'identité d'un interlocuteur de cet utilisateur dans l'entreprise et/ou de la détection d'une information à protéger (par exemple, les mots "préjudice", "contrat", "engage", "réparation", "Euros", "dollars", "gratuit", ...), le logiciel d'assistance provoque l'ajout dans un courrier électronique ou l'envoi d'un courrier électronique complémentaire à destination de l'interlocuteur ou d'un tiers, pour réduire la portée juridique de la communication entre l'utilisateur et l'interlocuteur. Préférentiellement, l'utilisateur dans l'entreprise est avertis de la conservation de l'enregistrement et un enregistrement de la communication est certifié (daté et doté d'un certificat d'intégrité) et conservé par l'entreprise comme indiqué plus haut.

En variante, le logiciel d'assistance demande une authentification de l'utilisateur et, s'il n'est pas autorisé à prendre un engagement au nom de l'entreprise, le met en garde contre les dangers de la communication en cours et/ou de la transmission d'une trace de cette communication à un responsable de l'entreprise ou un conseil juridique de l'entreprise (ces opérations, biens connues de l'homme du métier, n'étant pas rappelées ici).

Comme exposé ci-dessus, des procédés de communication objets de la présente invention (conformément à au moins son neuvième aspect), tel que le procédé de communication illustré en figure 18, comportent :
- une opération de réception d'une succession de pages en provenance d'un premier site d'un réseau informatique,
- une opération de mémorisation d'information représentative de ladite succession de pages, en dehors dudit premier site, et
- une opération d'association d'un certificat d'intégrité à l'information mémorisée représentative de ladite succession de pages, ledit certificat d'intégrité étant mémorisé en association avec l'information représentative de ladite succession de pages, ledit certificat d'intégrité rendant détectable toute modification de l'information mémorisée représentative de ladite succession de pages, ultérieurement à sa mémorisation.

L'opération de mémorisation peut être effectuée dans l'un ou plusieurs des lieux suivants : dans le terminal 100, dans le site de protection 170, par transmission d'un fichier à une adresse Internet ou une adresse e-mail prédéterminée ou dans un site tiers de confiance 180, par exemple.

L'opération de mémorisation peut concerner les images des pages qui ont été affichées sur l'écran 104, les adresses de ces pages, les fichiers comportant certains formats de données desdites pages, par exemple.

En outre, selon des caractéristiques particulières, ces procédés comportent une opération de datation attribuant une date à l'une au moins des opérations de réception et de mémorisation, ladite date est mémorisée en association avec l'information représentative de ladite succession de pages et le certificat d'intégrité rend détectable une modification de ladite date ultérieurement à sa mémorisation. Préférentiellement, une telle datation est effectuée en fonction d'une horloge indépendante du terminal 100.

Selon des caractéristiques particulières, ces procédés comportent une opération de détermination d'une adresse dudit premier site sur ledit réseau, ladite adresse étant mémorisée en association avec l'information représentative de ladite succession de pages et le certificat d'intégrité rend détectable une modification de ladite adresse ultérieurement à sa mémorisation. En général, cette adresse est contenue dans les informations affichées au cours de la visite d'un site. Cependant, elle peut être mémorisée, en information associée ou à distance, par exemple dans le site de protection 170. Dans ce dernier cas, le site de protection 170 peut témoigner de la visite effectuée par l'utilisateur du terminal 100, sur le site 150, sans utiliser un espace mémoire trop important.

Selon des caractéristiques particulières, ces procédés comportent une opération de détermination d'une durée d'affichage de chaque page de ladite succession, ladite durée étant mémorisée en association avec l'information représentative de ladite succession de pages et le certificat d'intégrité rend détectable une modification de ladite durée ultérieurement à sa mémorisation. Ainsi, l'enregistrement peut témoigner du déroulement temporel de la communication considérée.

Selon des caractéristiques particulières, ces procédés comportent, pour chaque site d'une pluralité de sites dudit réseau, une opération de détermination d'adresses de pages dudit site, ladite opération de mémorisation comportant une mémorisation desdites pages, lesdites pages étant mémorisées en association avec l'information représentative de ladite succession de pages et le certificat d'intégrité rend détectable une modification desdites pages ultérieurement à sa mémorisation. Ainsi, des pages à contenu légal de chacun de ces sites peuvent être visualisées et/ou mémorisées afin de témoigner des conditions juridiques gouvernant la communication avec ledit site.

Selon des caractéristiques particulières, ces procédés comportent une opération d'affichage des pages reçues au cours de l'opération de réception, et au cours de l'opération de mémorisation, sont mémorisées les parties des pages reçues qui sont affichées au cours de l'opération d'affichage. Ainsi, l'enregistrement peut témoigner de ce que le visiteur du site a eu sous les yeux au cours de la visite du site (aussi appelée communication avec le site dans le reste de la présente demande).

Selon des caractéristiques particulières, ces procédés comportent une opération d'affichage des pages reçues au cours de l'opération de réception, et au cours de l'opération de mémorisation, sont mémorisées des indicateurs des parties des pages reçues qui sont affichées au cours de l'opération d'affichage. Ainsi, l'enregistrement peut témoigner de ce que le visiteur du site a eu sous les yeux au cours de la visite du site (aussi appelée communication avec le site dans le reste de la présente demande) mais aussi du contenu des pages que l'utilisateur n'a pas eu sous ses yeux, tout en utilisant un format de description de l'intégralité de la page, ce format (par exemple HTML) pouvant permettre la conservation de données mieux compressées qu'un format vidéo, par exemple.

Selon des caractéristiques particulières, ces procédés comportent une opération d'affichage des pages reçues au cours de l'opération de réception, et au cours de l'opération de mémorisation, ne sont pas mémorisées les parties des pages reçues qui ne sont pas affichées au cours de l'opération d'affichage. Ainsi, la quantité d'information mémorisé est limité aux informations qui témoignent de ce qui a été mis sous les yeux de l'utilisateur.

Selon des caractéristiques particulières, dans ces procédés, l'information mémorisée au cours de l'opération de mémorisation comporte l'information au format texte de ladite succession de pages.

Selon des caractéristiques particulières, ces procédés comportent une opération de communication avec un deuxième site dudit réseau et de transmission audit deuxième site d'une information dépendant du premier site. Ainsi, le deuxième site peut mémoriser cette information et/ou retourner un témoin pour générer le certificat d'intégrité ou une information à transmettre au premier site (comme un identificateur de moyen de paiement) et/ou transmettre, en retour, des informations concernant le premier site.

Selon des caractéristiques particulières, ces procédés comportent une opération de communication avec un deuxième site dudit réseau et de réception d'information en provenance dudit deuxième site, l'information mémorisée étant représentative de ladite information en provenance du deuxième site. Ainsi, le deuxième site peut retourner un témoin pour générer le certificat d'intégrité ou une information à transmettre au premier site (comme un identificateur de moyen de paiement) et/ou transmettre, en retour, des informations concernant le premier site.

Selon des caractéristiques particulières, ces procédés comportent une opération de communication avec un deuxième site dudit réseau et de transmission audit deuxième site de l'information représentative desdites pages, l'opération de mémorisation étant effectuée par ledit deuxième site. Ainsi, le deuxième site conserve cette information, ce qui peut limiter l'espace mémoire du terminal qui est nécessaire pour conserver des enregistrements. Ces caractéristiques particulières s'appliquent, en particulier, au cas des accès à des ressources en ligne par des terminaux ne comportant pas ou peu de mémoire non volatile (comme des téléphones mobiles), par rapport à la quantité d'information à mémoriser pour l'enregistrement et le certificat d'intégrité.

Selon des caractéristiques particulières, ces procédés comportent une opération de communication avec un deuxième site dudit réseau, l'opération de réception étant effectuée par l'intermédiaire dudit deuxième site. Ces caractéristiques particulières s'appliquent, en particulier, aux portails pour communication avec des dispositif portables comme des téléphones mobiles.

Selon des caractéristiques particulières, ces procédés comportent une opération de détection d'une information caractéristique d'une transaction avec ledit premier site, et une opération d'effacement de l'information mémorisée représentative de ladite succession de page dudit premier site, ladite opération d'effacement dépendant de ladite détection. Ainsi, l'information mémorisée (aussi appelée "enregistrement" dans le reste de la présente demande) peut être conservée plus ou moins longtemps en fonction du fait qu'une transaction a eu lieu, ou non, au cours de la communication que cet enregistrement concerne.

Selon des caractéristiques particulières, ces procédés comportent une opération de détection d'une information caractéristique d'une transaction avec ledit premier site, ladite opération de mémorisation dépendant de ladite détection. Ainsi l'information mémorisée, ou enregistrement, peut être plus ou moins complète (c'est-à-dire représenter plus ou moins précisément l'information échangée au cours de la communication) ou plus ou moins protégée (par le certificat d'intégrité, par une éventuelle datation, par mémorisation d'éventuelles informations complémentaires, par recopie en un autre lieu, par types de données conservés ou taux de compression utilisés, par exemple) en fonction de la présence d'une transaction au cours de ladite communication.

Selon des caractéristiques particulières, ces procédés comportent une opération de détection d'une information caractéristique d'une transaction avec ledit premier site, par détermination d'une préparation de communication au premier site d'une information correspondant à une information dite "à protéger" conservée dans une mémoire.

Comme exposé dans la description ci-dessus, des procédés objets de la présente invention (conformément à au moins son dixième aspect), comportent :
- une opération de réception d'une succession de pages en provenance d'un premier site d'un réseau informatique,
- une opération d'affichage de parties de pages de ladite succession de pages,
- une opération de mémorisation d'information représentative desdites parties de pages affichées, en dehors dudit premier site, ladite information étant identifiée en mémoire comme affichée et
- une opération de mémorisation d'information de parties de pages non affichées, en provenance dudit premier site, en dehors dudit premier site, ladite information étant identifiée en mémoire comme non affichée.

Ainsi, les informations mémorisées peuvent témoigner d'une part de ce qui a été mis sous le regard d'un visiteur du site et, d'autre part, d'autres informations qui peuvent être utiles pour déterminer les conditions de la visite, comme les autres informations des pages dont une partie a été affichée ou des informations d'autres pages, telles que des pages à contenu légal, par exemple.

Toutes les caractéristiques particulières du neuvième aspect de la présente invention forment des caractéristiques particulières du dixième aspect, mais pour des raisons de concision, ces caractéristiques particulières ne sont pas rappelées ici.

Comme exposé dans la description ci-dessus, des procédés objets de la présente invention (conformément à au moins son onzième aspect), comportent :
- une opération de réception, par un terminal informatique, d'une succession de pages en provenance d'un premier site d'un réseau informatique,
- une opération d'affichage, par le terminal informatique, de parties de pages de ladite succession, et
- une opération de mémorisation en un deuxième site informatique indépendant dudit terminal, d'information représentatives desdites parties de pages affichées.

Ainsi, les informations mémorisées peuvent témoigner du contenu desdites parties affichées de la succession de pages.

Toutes les caractéristiques particulières du neuvième aspect de la présente invention forment des caractéristiques particulières du onzième aspect, mais pour des raisons de concision, ces caractéristiques particulières ne sont pas rappelées ici.

Comme exposé dans la description ci-dessus, des procédés objets de la présente invention (conformément à au moins son douzième aspect), comportent :
- une opération de réception, par un terminal informatique, d'une succession de pages en provenance d'un premier site informatique,
- une opération automatique de réception, par le terminal informatique, en provenance d'un deuxième site informatique, d'information contextuelle dépendant d'un identifiant dudit premier site,
- une opération de déclenchement, et
- une opération d'affichage de ladite information contextuelle.

L'opération de déclenchement qui provoque l'opération d'affichage peut être, comme exposé en regard des figures (en particulier la figure 18), la détection d'une information à protéger, la détection d'une transaction, l'usage d'un menu ou d'un icône.

La figure 20 représente la mise en oeuvre de la présente invention en relation avec une signature électronique. Cette mise en oeuvre comporte des aspects indépendants :
- la signature électronique dépend du contenu d'une pluralité de pages,
- lesdites pages sont éditées par l'utilisateur, à l'exception de la page où la signature est demandée,
- la signature électronique provoque la mémorisation et la conservation d'informations représentatives d'une pluralité de pages,
- la détection d'une signature électronique influence l'information mémorisée (format et/ou contenu), son délai de conservation, son lieu de conservation, et les informations qui lui sont associées (certificat d'intégrité, datation, informations complémentaires), par exemple.

En figure 20, après qu'un terminal ait été mis en fonctionnement et que le logiciel d'assistance ait été initialisé, opération 2000, au cours d'un test 2001, il est déterminé si une signature électronique est demandée. Par exemple, une routine logicielle caractéristique de la mise en oeuvre d'une signature est détectée, ou une information reçue de la part du site est détectée. Lorsque le résultat du test 2001 est négatif, le test 2001 est réitéré. Lorsque le résultat du test 2001 est positif, une interface graphique invite l'utilisateur a indiquer quelles autres pages du site, en dehors de la page dans laquelle la signature électronique est demandée, sont liées à la transaction. L'utilisateur peut alors retourner sur des pages qu'il a vues pour les joindre au document à signer. L'utilisateur peut aussi accepter ou décider que tout l'enregistrement de ce qu'il a vu sur le site visité servent d'annexe au document signé. Enfin, l'utilisateur peut accepter ou décider que les pages ayant un contenu légal, répertoriées par le site de protection 170, soient annexés au document signé.

Selon le type de signature électronique, ce contenu à signer est alors l'objet d'un certificat d'intégrité qui certifie la signature ou ce contenu à signer fournit une racine pour la signature à constituer.

L'ensemble du contenu choisi par l'utilisateur ou, en variante, l'enregistrement concernant la visite du site demandant la signature, sans que l'utilisateur ne puisse influencer ce contenu, sont conservés dans un lieu choisi par l'utilisateur et un message indiquant cette conservation est transmis au site, opération 2002.

Comme exposé dans la description ci-dessus, des procédés objets de la présente invention (conformément à au moins son treizième aspect), comportent :
- une opération de réception, par un terminal informatique, d'une succession de pages en provenance d'un premier site,
- une opération de détection d'une signature électronique,
- une opération de mémorisation d'information représentative d'au moins une page de ladite succession de pages, en dehors dudit premier site, dépendant de ladite détection.

Ainsi, la détection d'une signature électronique peut provoquer l'opération de mémorisation, ou influencer l'information mémorisée (format et/ou contenu), son délai de conservation, son lieu de conservation, et les informations qui lui sont associées (certificat d'intégrité, datation, informations complémentaires), par exemple.

Selon des caractéristiques particulières du procédé visé par le treizième aspect de la présente invention, au cours de l'opération de mémorisation, l'information mémorisée est représentative d'une pluralité de pages. Ainsi, ce n'est pas seulement un bon de commande ou un document tenant sur une seule page qui est conservé mais une pluralité de pages, par exemple une pluralité de pages de ladite succession ou une pluralité de pages comportant des pages à contenu légal provenant dudit premier site.

Préférentiellement, au cours de l'opération de mémorisation, l'information mémorisée est représentative d'au moins une page où est demandée ladite signature électronique. Selon une variante, au cours de l'opération de mémorisation, l'information mémorisée est représentative de chaque page de ladite succession.

Selon des caractéristiques particulières, le procédé visé par le treizième aspect de la présente invention, comporte une opération de détermination d'un début de document contractuel et une opération de détermination de fin de document contractuel et au cours de l'opération de mémorisation, l'information mémorisée est représentative de chaque page accédée entre le début de document et la fin de document. Ainsi, la signature peut dépendre d'un ensemble d'informations que l'utilisateur considère comme contractuel et sur lequel il souhaite que porte la signature.

Selon des caractéristiques particulières, le procédé visé par le treizième aspect de la présente invention, comporte une opération d'association d'un certificat d'intégrité à l'information mémorisée représentative des pages sur lesquelles portent l'information mémorisée, ledit certificat d'intégrité étant mémorisé en association avec l'information mémorisée, ledit certificat d'intégrité rendant détectable toute modification de l'information mémorisée, ultérieurement à sa mémorisation.

Selon des caractéristiques particulières, ladite signature comporte un certificat d'intégrité mémorisé en association avec l'information représentative d'au moins une page de ladite succession de pages, ledit certificat d'intégrité rendant détectable toute modification de l'information mémorisée, ultérieurement à sa mémorisation.

Selon un quatorzième aspect, la présente invention vise un procédé de communication,
caractérisé en ce qu'il comporte :
- une opération de réception, par un terminal informatique, d'une succession de pages en provenance d'un premier site,
- une opération de détection d'une signature électronique,
- une opération d'édition d'une pluralité de pages de ladite succession,
- ladite signature électronique dépendant de ladite pluralité de pages.

A cet effet, un logiciel de signature électronique détermine la signature électronique en fonction non seulement de données d'identification du signataire mais aussi du contenu de ladite pluralité de pages. Ce contenu peut être édité par un utilisateur afin, s'il le souhaite d'associer des pages provenant dudit site à la page à laquelle il appose sa signature. Les pages associées peuvent comporter une description précise ou une image d'un objet d'une transaction et/ou des pages à contenu légal (ces pages pouvant être fournies comme indiquer en regard de la figure 18)

Selon des caractéristiques particulières, le procédé visé par le quatorzième aspect de la présente invention comporte une opération d'affichage conjoint d'information représentative de ladite pluralité de pages. Ainsi, le signataire peut visualiser l'ensemble des pièces qui sont liées à la signature. Par exemple, chacune des pages associées à la signature est affichée, en petit format juxtaposé aux autre pages ou superposé aux autres pages ou par défilement cyclique de toutes les pages concernées par ladite signature.

Selon des caractéristiques particulières, le procédé visé par le quatorzième aspect de la présente invention comporte une opération de transmission d'une information représentative de ladite opération de mémorisation en association avec une opération de transmission de signature électronique. Ainsi, un interlocuteur situé à distance, comme, par exemple, un site marchand, est informé de ce que la signature est associée à une pluralité des pages qu'il a transmise.

Selon un quinzième aspect, la présente invention vise un procédé de gestion de mémoire,
caractérisé en ce qu'il comporte:
- une opération de détermination d'au moins une donnée dite "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, et d'un indicateur de détermination ou non de préparation de transmission de données à protéger,
- une opération de détermination de nécessité d'effacer certaines données mémorisées, et
- lorsqu'il est nécessaire d'effacer des données mémorisées, une opération d'effacement au cours de laquelle des données mémorisées sont traitées différemment en fonction de leur date de mémorisation et de la valeur dudit indicateur.

Selon un seizième aspect, la présente invention vise un procédé de gestion de mémoire,
caractérisé en ce qu'il comporte :
- une opération de détermination d'au moins deux niveaux de protection de données dites "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, et d'un indicateur de niveau de protection de données à protéger dont une préparation de transmission a été déterminée,
- une opération de détermination de nécessité d'effacer certaines données mémorisées, et
- lorsqu'il est nécessaire d'effacer des données mémorisées, une opération d'effacement au cours de laquelle des données mémorisées sont traitées différemment en fonction de leur date de mémorisation et de la valeur dudit indicateur.

Selon des caractéristiques particulières du procédé visé par le seizième aspect de la présente invention, l'opération de détermination de nécessité comporte une opération de comparaison d'un espace mémoire avec une valeur d'espace mémoire prédéterminée.

Selon un dix-septième aspect, la présente invention vise un procédé de gestion de mémoire,
caractérisé en ce qu'il comporte :
- une opération de détermination d'au moins une donnée dite "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, ladite opération de mémorisation dépendant de ladite détermination ou non de préparation de transmission de données à protéger.

Selon des caractéristiques particulières du dix-septième aspect de la présente invention, l'opération de mémorisation comporte une opération de cryptage des données mémorisées.

Selon un dix-huitième aspect, la présente invention vise un procédé de gestion de mémoire,
caractérisé en ce qu'il comporte :
- une opération de détermination d'au moins une donnée dite "à protéger",
- au moins deux opérations de communication par l'intermédiaire d'un réseau de communication, et pour chaque opération de communication :
   . une opération de détermination de transmission de données à protéger au cours de ladite opération de communication,
   . une opération de mémorisation de données représentatives de données reçues au cours de dites opération de communication, ladite opération de mémorisation dépendant de ladite détermination ou non de transmission de données à protéger, et
   . une opération de transmission à destination dudit réseau d'une information représentative de ladite opération de mémorisation.

Selon des caractéristiques particulières du dix-huitième aspect, ladite opération de transmission d'une information représentative de ladite opération est effectuée par courrier électronique.

Selon un dix-neuvième aspect, la présente invention vise un procédé de gestion de mémoire,
caractérisé en ce qu'il comporte :
- une opération de détermination d'au moins deux niveaux de protection de données dites "à protéger",
- au moins deux opérations de communication par l'intermédiaire d'un réseau de communication, et pour chaque opération de communication :
   . une opération de détermination de préparation de transmission de données à protéger au cours de ladite opération de communication,
   . une opération de mémorisation de données reçues au cours de dites opération de communication, ladite mémorisation dépendant du niveau de protection de données à protéger déterminé au cours de ladite opération de détermination.

Selon des caractéristiques particulières du procédé visé par le dix-neuvième aspect de la présente invention, l'opération de mémorisation met en oeuvre différents formats de données, en relation avec le résultat de ladite opération de détermination.

Un vingtième aspect de la présente invention vise un procédé de protection de données,
caractérisé en ce qu'il comporte :
- une opération de sélection de contexte logiciel de protection de données dites "à protégér", au cours de laquelle un utilisateur détermine dans quel cas parmi au moins deux des cas suivants, des données à protéger doivent être protégées;
   . hors communication sur un réseau de communication international,
   . pour des communications de courriers électroniques sur un réseau de communication international, et/ou
   . pour des visites de sites Internet web;
- une opération de détection d'utilisation, par un utilisateur, de données à protéger, dans l'un des contextes logiciels sélectionnés; et
- une opération de mémorisation d'une information représentative de ladite utilisation.

Un vingt-et-unième aspect de la présente invention vise un procédé de mémorisation de données, caractérisé en ce qu'il comporte :
- une opération de communication, par l'intermédiaire d'un réseau de communication, au cours de laquelle des données sont échangées entre un terminal et ledit réseau,
- une opération de mémorisation de données provenant dudit réseau de communication au cours de ladite opération de communication,
- au cours de ladite opération de mémorisation, une opération de détermination de nécessité de conserver lesdites données mémorisées, en fonction des données émises sur ledit réseau par ledit terminal au cours de ladite opération de communication, et
- une opération de conservation desdites données mémorisées dépendant du résultat de ladite opération de détermination de nécessité de conserver lesdites données mémorisées.

Un vingt-deuxième aspect de la présente invention vise un procédé d'information contextuel,
caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant du premier serveur distant sont échangées avec un deuxième serveur distant,
- au cours de ladite première opération de communication, une opération de détermination de nécessité d'afficher lesdites deuxièmes données, en fonction des premières données émises par le terminal au cours de ladite première opération de communication, et
- une opération d'affichage desdites deuxièmes données dépendant du résultat de ladite opération de détermination de nécessité d'afficher lesdites deuxièmes données.

Selon des caractéristiques particulières du vingt-deuxième aspect, lesdites deuxièmes données sont représentatives de pages fournies par ledit premier serveur distant.

Selon des caractéristiques particulières du vingt-deuxième aspect, le procédé comporte une opération de mémorisation de tout ou partie desdites premières données et de tout ou partie desdites deuxièmes données.

Un vingt-troisième aspect de la présente invention vise un procédé de conservation de données à distance, caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant des premières données sont reçues par un deuxième serveur distant,
- au cours de ladite première opération de communication, une opération de détermination de nécessité de conserver lesdites deuxièmes données, en fonction des premières données émises par le terminal au cours de ladite première opération de communication, et
- une opération de conservation desdites deuxièmes données dépendant du résultat de ladite opération de détermination de nécessité de conserver lesdites deuxièmes données.

Selon des caractéristiques particulières du vingt-troisième aspect, lesdites deuxièmes données sont des adresses de pages fournies par ledit premier serveur et, au cours de l'opération de conservation, au moins un type de données, par exemple les données textes, situées audites adresses sont conservées.

Selon des caractéristiques particulières du vingt-troisième aspect, lesdites deuxièmes données comportent un identificateur du premier serveur distant, du terminal, de la date de la première opération de communication.

Selon des caractéristiques particulières du vingt-troisième aspect, lesdites deuxièmes données sont représentatives des premières données qui sont affichées sur ledit terminal.

Un vingt-quatrième aspect de la présente invention vise un procédé de conservation de données à distance, caractérisé en ce qu'il comporte :
- une première opération de communication, par l'intermédiaire d'un réseau de communication, au cours de laquelle des premières données sont échangées entre un terminal et un premier serveur distant,
- une deuxième opération de communication, par l'intermédiaire dudit réseau de communication, au cours de laquelle des deuxièmes données dépendant des premières données sont reçues par un deuxième serveur distant,
- au cours de ladite première opération de mémorisation, une opération de détermination de nécessité de conserver lesdites premières et deuxièmes données, en fonction des premières données émises par le terminal au cours de ladite première opération de communication, et
- une opération de conservation desdites premières données par ledit terminal et desdites deuxièmes données par ledit deuxième serveur, dépendant du résultat de ladite opération de détermination de nécessité de conserver lesdites premières et deuxièmes données.

Selon des caractéristiques particulières du vingt-quatrième aspect, lesdites premières données et lesdites deuxièmes données ne sont pas conservées dans les mêmes formats.

Selon un vingt-cinquième aspect, la présente invention vise un procédé d'enregistrement de données échangées entre un terminal et un site distant, caractérisé en ce qu'il comporte l'affichage d'un témoin sur ledit terminal, ledit témoin variant entre au moins deux états visibles lorsqu'un enregistrement est en cours et au moins l'un des deux états visibles n'étant pas affiché lorsque l'enregistrement n'est pas en cours.

Selon un vingt-sixième aspect, la présente invention vise un procédé de conservation de données relatives à une communication sur un réseau de communication, caractérisé en ce qu'il comporte :
- une opération de mise en mémoire desdites données associées à une date de mise en mémoire,
- une opération de détermination de nécessité de comprimer lesdites données, en fonction de la date de leur mise en mémoire, et lorsque ladite opération de détermination indique qu'il est nécessaire de comprimer lesdites données, une opération de compression desdites données et de mémorisation de données secondaires représentatives desdites données primaires.

Selon des caractéristiques particulières du vingt-sixième aspect, ladite opération de compression comporte une opération de reconnaissance optique de caractères.

Selon des caractéristiques particulières du vingt-sixième aspect, ladite opération de compression comporte la sélection de formats de données et d'élimination de données qui n'ont pas un format sélectionné.

Selon des caractéristiques particulières, ladite opération de compression comporte la sélection d'au plus deux images par page de données reçues d'un site Internet web. Préférentiellement, ces images sont soit la première image affichée de la page en question soit la dernière image affichée de la page en question.

Selon un vingt-septième aspect, la présente invention vise un procédé de communication,
caractérisé en ce qu'il comporte une opération de communication d'informations entre au moins deux personnes et une opération d'ajout d'information à ladite communication, en fonction d'au moins l'un des critères suivants :
- l'identité de l'une desdites personnes, et/ou
- le contenu desdites informations communiquées.

Selon des caractéristiques particulières du vingt-septième aspect, ladite information ajoutée comporte une limitation de la portée juridique de ladite communication.

## Revendications

1. Procédé de communication comportant une opération de réception d'une succession de pages en provenance d'un premier site d'un réseau informatique au cours d'une navigation sur ledit site (201, 702, 704, 1101-1105, 1107, 1109, 1500, 1807, 1905), **caractérisé en ce qu'**il comporte :
- une opération de mémorisation d'information représentative de ladite succession de pages (204, 758, 760, 1106, 1209, 1532, 1807, 1905), en dehors dudit premier site, et
- une opération d'association d'un certificat d'intégrité à l'information mémorisée représentative de ladite succession de pages (207, 758, 760, 1110, 1209, 1809, 1907), ledit certificat d'intégrité étant mémorisé en association avec l'information représentative de ladite succession de pages, ledit certificat d'intégrité rendant détectable toute modification de l'information mémorisée représentative de ladite succession de pages, ultérieurement à sa mémorisation.

2. Procédé de communication selon la revendication 1, **caractérisé en ce qu'**il comporte une opération de datation (207, 1110, 1209, 1809, 1907) attribuant une date à l'une au moins des opérations de réception et de mémorisation, ladite date est mémorisée en association avec l'information représentative de ladite succession de pages et le certificat d'intégrité rend détectable une modification de ladite date ultérieurement à sa mémorisation.

3. Procédé de communication selon l'une quelconque des revendications 1 ou 2, **caractérisé en ce qu'**il comporte une opération de détermination d'une adresse dudit premier site sur ledit réseau, ladite adresse étant mémorisée en association avec l'information représentative de ladite succession de pages (207, 1110, 1209, 1809, 1907) et le certificat d'intégrité rend détectable une modification de ladite adresse ultérieurement à sa mémorisation.

4. Procédé de communication selon l'une quelconque des revendications 1 à 3, **caractérisé en ce qu'**il comporte une opération de détermination d'une durée d'affichage de chaque page de ladite succession (1530, 1807), ladite durée étant mémorisée en association avec l'information représentative de ladite succession de pages et le certificat d'intégrité rend détectable une modification de ladite durée ultérieurement à sa mémorisation.

5. Procédé de communication selon l'une quelconque des revendications 1 à 4, **caractérisé en ce qu'**il comporte, pour chaque site d'une pluralité de sites dudit réseau, une opération de détermination d'au moins une adresse de page dudit site (1807, 1905), ladite opération de mémorisation comportant une opération de mémorisation de chaque page (1809, 1907) possédant une dite adresse en association avec l'information représentative de ladite succession de pages et le certificat d'intégrité rend détectable une modification de chaque dite page possédant une dite adresse ultérieurement à sa mémorisation.

6. Procédé de communication selon l'une quelconque des revendications 1 à 5, **caractérisé en ce qu'**il comporte une opération d'affichage des pages reçues au cours de l'opération de réception, et au cours de l'opération de mémorisation, sont mémorisées les parties des pages reçues qui sont affichées au cours de l'opération d'affichage.

7. Procédé de communication selon l'une quelconque des revendications 1 à 6, **caractérisé en ce que** l'information mémorisée au cours de l'opération de mémorisation comporte l'information au format texte de ladite succession de pages.

8. Procédé de communication selon l'une quelconque des revendications 1 à 7, **caractérisé en ce qu'**il comporte une opération de communication avec un deuxième site dudit réseau (710, 730, 1209) et de transmission audit deuxième site d'une information dépendant du premier site.

9. Procédé de communication selon l'une quelconque des revendications 1 à 8, **caractérisé en ce qu'**il comporte une opération de communication avec un deuxième site dudit réseau (712, 732, 1209) et de réception d'information en provenance dudit deuxième site, l'information mémorisée étant représentative de ladite information en provenance du deuxième site.

10. Procédé de communication selon l'une quelconque des revendications 1 à 9, **caractérisé en ce qu'**il comporte une opération de communication avec un deuxième site dudit réseau (758, 760, 1907) et de transmission audit deuxième site de l'information représentative desdites pages, l'opération de mémorisation étant effectuée par ledit deuxième site.

11. Procédé de communication selon l'une quelconque des revendications 1 à 10, **caractérisé en ce qu'**il comporte une opération de communication avec un deuxième site dudit réseau, l'opération de réception (1907) étant effectuée par l'intermédiaire dudit deuxième site.

12. Procédé de communication selon l'une quelconque des revendications 1 à 11, **caractérisé en ce qu'**il comporte une opération de détection d'une information caractéristique d'une transaction avec ledit premier site, et une opération d'effacement (412) de l'information mémorisée représentative de ladite succession de page dudit premier site, ladite opération d'effacement dépendant de ladite détection.

13. Procédé de communication selon l'une quelconque des revendications 1 à 12, **caractérisé en ce qu'**il comporte une opération de détection d'une information caractéristique d'une transaction (206, 1108, 1520, 1808, 1906) avec ledit premier site, par détermination d'une préparation de communication au premier site d'une information conservée dans une mémoire.

14. Procédé de communication selon l'une quelconque des revendications 8 à 11, **caractérisé en ce qu'**il comporte une opération de lecture (1809, 1907) sur ledit premier site (150) d'informations d'au moins une page du premier site possédant une adresse basée sur des informations reçues en provenance dudit deuxième site (170).

15. Procédé de communication selon l'une quelconque des revendications 8 à 11 ou 14, **caractérisé en ce qu'**il comporte une opération de requête (766) d'informations permettant de déterminer un identificateur de moyen de paiement à usage unique ou **en ce que** les informations relatives au premier site (150) comportent une racine ou code générateur permettant de définir un identificateur de moyen de paiement à usage unique (772, 774).

16. Procédé de communication selon l'une quelconque des revendications 1 à 15, **caractérisé en ce qu'**il comporte :
- une opération de sélection d'une date (1601),
- une opération de mémorisation de ladite date (1605) et
- à ladite date, une opération d'affichage (1603) d'une fenêtre de dialogue sur un écran d'un terminal (100) et, en fonction d'une réponse dudit utilisateur, une opération d'ouverture automatique d'une deuxième session de communication (1607) entre ledit terminal et un site distant (170).

17. Procédé de communication selon l'une quelconque des revendications 1 à 16, **caractérisé en ce qu'**il comporte :
- une opération d'affichage (409, 1104) de parties de pages de ladite succession de pages,
- une opération de mémorisation, en dehors dudit premier site (150), d'information représentative d'au moins lesdites parties de pages affichées (1807) et
- une opération de mémorisation, en dehors du premier site, d'information de pages non affichées du premier site (1807, 1809, 1907).

18. Procédé de communication selon l'une quelconque des revendications 1 à 17, **caractérisé en ce qu'**il comporte :
- une opération d'affichage (409, 1104), par un terminal informatique (100), de parties de pages de ladite succession de pages et
- une opération de mémorisation (1905) en un deuxième site (170) indépendant dudit terminal (100), d'information représentatives desdites parties de pages affichées.

19. Procédé de communication selon l'une quelconque des revendications 1 à 18, **caractérisé en ce qu'**il comporte :
- une opération automatique de réception (1807), en provenance d'un deuxième site (170), d'information contextuelle dépendant d'un identifiant du premier site (150),
- une opération de déclenchement (1805, 1808, 1906) et
- une opération d'affichage de ladite information contextuelle en fonction dudit déclenchement (figures 18 et 19, options "éditer les enregistrements déjà effectués" et "préférences/paramétrage").

20. Procédé selon l'une quelconque des revendications 1 à 19, **caractérisé en ce qu'**il comporte :
- une opération de communication, par l'intermédiaire d'un réseau de communication (120), au cours de laquelle des données sont échangées entre un terminal (100) et ledit réseau,
- une opération de mémorisation (1807, 1905) de données provenant dudit réseau de communication au cours de ladite opération de communication,
- au cours de ladite opération de mémorisation, une opération de détermination de nécessité de conserver lesdites données mémorisées (1808, 1906), en fonction des données émises sur ledit réseau par ledit terminal au cours de ladite opération de communication, et
- une opération de conservation (1809, 1907) desdites données mémorisées dépendant du résultat de ladite opération de détermination de nécessité de conserver lesdites données mémorisées.

21. Procédé de communication selon l'une quelconque des revendications 1 à 20, **caractérisé en ce qu'**il comporte :
- une opération de détection d'une signature électronique (2001),
- en cas de détection de signature électronique, une opération de mémorisation (2002) d'information représentative d'au moins une page de ladite succession de pages, en dehors du premier site.

22. Procédé de communication selon l'une quelconque des revendications 1 à 21, **caractérisé en ce que**, au cours de l'opération de mémorisation (1807, 1905), l'information mémorisée est représentative de chaque page de ladite succession de pages accédée entre un début de l'opération de mémorisation et une fin de l'opération de mémorisation.

23. Procédé de communication selon l'une quelconque des revendications 1 à 21, **caractérisé en ce qu'**il comporte :
- une opération de détection d'une signature électronique (2001),
- une opération d'association d'au moins une page de ladite succession au document à signer (2002),
- ladite signature électronique dépendant de chaque pages associée.

24. Procédé selon l'une quelconque des revendications 1 à 23, **caractérisé en ce qu'**il comporte l'affichage (1807) d'un témoin sur ledit terminal, ledit témoin prenant au moins un premier état visible lorsqu'un enregistrement est en cours et au moins un deuxième état visible différent du premier état visible lorsque l'enregistrement n'est pas en cours.

25. Procédé selon l'une quelconque des revendications 1 à 24, **caractérisé en ce qu'**il comporte une opération de détection de passage en mode de communication sécurisé (1805, 1808) de la communication sur le réseau informatique, ladite opération de mémorisation dépendant de ladite détection de passage.

26. Procédé selon l'une quelconque des revendications 1 à 25, **caractérisé en ce qu'**il comporte une opération de détection (1805, 1808, 1906) d'information prédéterminée en provenance du premier site, ladite opération de mémorisation dépendant de ladite détection d'information.

## Claims

1. A communications method comprising a step of receiving a succession of pages originating from a first site of a computer network while browsing on said site (201, 702, 704, 1101-1105, 1107, 1109, 1500, 1807, 1905), **characterised in that** it includes:
- a step of memory storage of information representative of the said succession of pages (204, 758, 760, 1106, 1209, 1532, 1807, 1905), outside the said first site, and
- a step of associating a certificate of integrity with the memory-stored information representative of the said succession of pages (207, 758, 760, 1110, 1209, 1809, 1907), the said certificate of integrity being stored in memory in association with the information representative of the said succession of pages, the said certificate of integrity making it possible to detect any alteration to the memory-stored information representative of the said succession of pages, subsequent to its being stored in memory.

2. A communications method according to claim 1, **characterised in that** it includes a time-stamping step (207, 1110, 1209, 1809, 1907) attributing a date to at least one of the reception and memory-storage steps; the said date is stored in memory in association with the information representative of the said succession of pages and the certificate of integrity makes it possible to detect an alteration to the said date subsequent to its being stored in memory.

3. A communications method according to either one of claims 1 or 2, **characterised in that** it includes a step of determining an address of the said first site on the said network, the said address being stored in memory in association with the information representative of the said succession of pages (207, 1110, 1209, 1809, 1907), and the certificate of integrity makes it possible to detect an alteration to the said address subsequent to its being stored in memory.

4. A communications method according to any one of claims 1 to 3, **characterised in that** it includes a step of determining a display duration for each page of the said succession (1530, 1807), the said duration being stored in memory in association with the information representative of the said succession of pages, and the certificate of integrity makes it possible to detect an alteration to the said duration subsequent to its being stored in memory.

5. A communications method according to any one of claims 1 to 4, **characterised in that** it includes, for each site of a plurality of sites of the said network, a step of determining at least one address of a page of the said site (1807, 1905), the said memory-storage step including memory storage of each page having one of said address (1809, 1907), the said pages being stored in memory in association with the information representative of the said succession of pages, and the certificate of integrity makes it possible to detect an alteration to each page having one of said address subsequent to their being stored in memory.

6. A communications method according to any one of claims 1 to 5, **characterised in that** it includes a step of displaying the pages received in the course of the receiving step, and in the course of the memory-storage step the parts of the pages received which are displayed in the course of the display step are stored in memory.

7. A communications method according to any one of claims 1 to 6, **characterised in that** the information stored in memory in the course of the memory-storage step includes the information, in text format, of the said succession of pages.

8. A communications method according to any one of claims 1 to 7, **characterised in that** it includes a step of communicating with a second site of the said network (710, 730, 1209) and of transmitting, to the said second site, information dependent on the first site.

9. A communications method according to any one of claims 1 to 8, **characterised in that** it includes a step of communicating with a second site of the said network (712, 732, 1209) and of receiving information originating from the said second site, the information stored in memory being representative of the said information originating from the second site.

10. A communications method according to any one of claims 1 to 9, **characterised in that** it includes a step of communicating with a second site of the said network (758, 760, 1907) and of transmitting to the said second site information representative of the said pages, the memory-storage step being carried out by the said second site.

11. A communications method according to any one of claims 1 to 10, **characterised in that** it includes a step of communicating with a second site of the said network, the receiving step (1907) being carried out via the said second site.

12. A communications method according to any one of claims 1 to 11, **characterised in that** it includes a step of detecting information characteristic of a transaction with the said first site, and a step of deleting (412) the memory-stored information representative of the said succession of pages of the said first site, the said delete step depending on the said detection.

13. A communications method according to any one of claims 1 to 12, **characterised in that** it includes a step of detecting information characteristic of a transaction (206, 1108, 1520, 1808, 1906) with the said first site, by determining a preparation for communication to the first site of information kept in a memory.

14. A communications method according to any one of claims 8 to 11, **characterised in that** it includes a step of reading (1809, 1907), on the said first site, information of at least one page, the address of which is based on received information originating from the said second site (170).

15. A communications method according to any one of claims 8 to 11 and 14, **characterised in that** it includes a step of requesting information (766) making it possible to determine a single-use means-of-payment identifier or the information relating to the first site (150) includes a generator code or root making it possible to define a single-use means-of-payment identifier (772, 774).

16. A communications method according to any one of claims 1 to 15, **characterised in that** it includes:
- a step of selecting a date (1601),
- a step of storing the said date in memory (1605) and,
- at the said date, a step of displaying (1603) a dialogue window on a visual-display screen of a terminal (100), and, depending on the user's answer, a step of automatic opening of a second communications session (1607) between the said terminal and a distant site (170).

17. A communications method according to any one of claims 1 to 15, **characterised in that** it includes:
- a step of displaying (409, 1104) parts of pages of the said succession of pages,
- a step of memory storage of information (1807) representative of at least the said parts of displayed pages, outside the first site (150), and
- a step of memory storage (1807, 1809, 1907) of information of parts of non displayed pages of the first, outside the first site.

18. A communications method according to any one of claims 1 to 17, **characterised in that** it includes:
- a step of displaying (409, 1104), by a computer terminal (100), parts of pages of the said succession of pages, and
- a step of memory storage (1905), at a second site (170) independent of the said terminal (100), of information representative of the said parts of pages displayed.

19. A communications method according to any one of claims 1 to 18, **characterised in that** it includes:
- an automatic step of receiving (1807), originating from a second site (170), contextual information depending on an identifier of the first site (150),
- a triggering step (1805, 1808, 1906) and
- depending on the triggering step, a step of displaying (1809, 1907) the said contextual information.

20. A communications method according to any one of claims 1 to 19, **characterised in that** it includes:
- a step of communicating, via a communications network (120), in the course of which data is exchanged between a terminal (100) and the said network,
- a step of memory storage (1807, 1905) of data originating from the said communications network in the course of the said communications step,
- in the course of the said memory-storage step, a step of determining the necessity to keep the said memory-stored data (1808, 1906), on the basis of the data sent on the said network by the said terminal in the course of the said communications step, and
- a step of keeping (1809, 1907) the said memory-stored data depending on the result of the said step for determining the necessity to keep the said memory-stored data.

21. A communications method according to any one of claims 1 to 20, **characterised in that** it includes:
- a step of detecting an electronic signature (2001),
- in case an electronic signature is detected, a step of memory storage (2002) of information representative of at least one page of the said succession of pages, outside the first site.

22. A communications method according to any one of claims 1 to 21, **characterised in that**, in the course of the memory-storage step (1807, 1905), the information stored in memory is representative of each page of the succession of pages accessed between a start of the memory-storage step and an end of the memory-storage step.

23. A communications method according to any one of claims 1 to 21, **characterised in that** it includes:
- a step of detecting an electronic signature (2001),
- a step of joining at least one page of the said succession to the document to be signed (2002),
- the said electronic signature depending on each joined page.

24. A communications method according to any one of claims 1 to 23, **characterised in that** it includes the displaying (1807) of a witness on the said terminal, the said witness having a visible state when a recording is in progress and at least a second visible state different from the first visible state, when the recording is not in progress.

25. A communications method according to any one of claims 1 to 24, **characterised in that** it includes a step of detecting the change to security-protected mode (1805, 1808) of the communication on the computer network, the said step of memory storage of information representative of said succession of pages depending on the said detection of change.

26. A communications method according to any one of claims 1 to 25, **characterised in that** it includes a step of detecting (1805, 1808, 1906) predetermined information received from the first site, the said step of memory storage of information representative of the said succession of pages depending on the said detection of information.

## Patentansprüche

1. Kommunikationsmethode, dass sie umfasst einen Schritt des Empfangs einer Seitenfolge von einer ersten Website eines Informatiknetzes (201, 702, 704, 1101-1105, 1107, 1109, 1500, 1807, 1905), **gekennzeichnet dadurch, dass** sie umfasst :
- einen Schritt der Speicherung von Information repräsentativ der besagten Seitenfolge (204, 758, 760, 1106, 1209, 1532, 1807, 1905), außerhalb der ersten Website; und
- einen Schritt der Zuordnung eines Integritätszertifikats zu der gespeicherten Information repräsentativ der besagten Seitenfolge (207, 758, 760, 1110, 1209, 1809, 1907), wobei besagtes Integritätszertifikat jede Änderung der gespeicherten Information repräsentativ der besagten Seitenfolge nach dessen Speicherung nachweisbar macht.

2. Kommunikationsmethode gemäss Anspruch 1, **gekennzeichnet dadurch, dass** sie einen Schritt der Datierung (207, 1110, 1209, 1809, 1907) umfasst, welcher mindestens einem von dem Empfangsschritt und der Speicherschritt ein Datum zuordnet, wobei besagtes Datum zusammen mit der Information repräsentativ der besagten Seitenfolge gespeichert ist und das Integritätszertifikat jede Änderung des gespeicherten Datums nach dessen Speicherung nachweisbar macht.

3. Kommunikationsmethode gemäss Anspruch 1 oder 2, **gekennzeichnet dadurch, dass** sie einen Schritt der Bestimmung einer Adresse des besagten ersten Websites in besagtem Netz umfasst, wobei besagte Adresse zusammen mit der Information repräsentativ der besagten Seitenfolge (207, 1110, 1209, 1809, 1907) gespeichert wird und das Integritätszertifikat jede Änderung der gespeicherten Adresse nach dessen Speicherung nachweisbar macht.

4. Kommunikationsmethode gemäss mindestens einem der Ansprüche 1 bis 3, **gekennzeichnet dadurch, dass** sie einen Schritt der Bestimmung einer Anzeigedauer jeder Seite besagter Folge (1530, 1807) umfasst, wobei die besagte Dauer zusammen mit der gespeicherten Information repräsentativ der besagten Seitenfolge gespeichert wird und das Integritätszertifikat jede Änderung der gespeicherten Dauer nach dessen Speicherung nachweisbar macht.

5. Kommunikationsmethode gemäss mindestens einem der Ansprüche 1 bis 4, **gekennzeichnet dadurch, dass** sie für jede Website einer Mehrzahl Websites des besagten Netzes einen Schritt der Bestimmung mindestens einer Seitenadresse der besagten Websites (1807, 1905) umfasst, wobei besagter Speicherschritt die Speicherung jeder Seite (1809, 1907) mit besagter Adresse zusammen mit der Information repräsentativ für besagte Seitenfolge gespeichert sind und das Integritätszertifikat eine Änderung jeder Seite mit besagter Adresse nach dessen Speicherung nachweisbar macht.

6. Kommunikationsmethode gemäss mindestens einem der Ansprüche 1 bis 5, **gekennzeichnet dadurch, dass** sie einen Schritt der Anzeige der während des Empfangsschritt empfangenen Seiten umfasst und dass der Teil der empfangenen Seiten, welcher während des Anzeigeschrittes angezeigt wird während des Speicherschritts gespeichert wird.

7. Kommunikationsmethode gemäss mindestens einem der Ansprüche 1 bis 6, **gekennzeichnet dadurch, dass** die während des Speicherschritts gespeicherte Information die Information der besagten Seitenfolge in Textformat umfasst.

8. Kommunikationsmethode gemäss mindestens einem der Ansprüche 1 bis 7, **gekennzeichnet dadurch, dass** sie einen Kommunikationsschritt (710, 730, 1209) mit einer zweiten Website besagten Netzes sowie die Übertragung zur zweiten Website einer von der ersten Website abhängigen Information umfasst.

9. Kommunikationsmethode gemäss mindestens einem der Ansprüche 1 bis 8, **gekennzeichnet dadurch, dass** sie einen Kommunikationsschritt (712, 732, 1209) mit einer zweiten Website besagten Netzes sowie den Empfang von Information von der zweiten Website umfasst, wobei die gespeicherte Information repräsentativ besagter Information aus der zweiten Website ist.

10. Kommunikationsmethode gemäss mindestens einem der Ansprüche 1 bis 9, **gekennzeichnet dadurch, dass** sie einen Kommunikationsschritt (758, 760, 1907) mit einer zweiten Website besagten Netzes sowie der Übertragung der Information repräsentativ besagter Seiten zu der zweiten Website umfasst, wobei der Speicherschritt von der zweiten Website ausgeführt wird.

11. Kommunikationsmethode gemäss mindestens einem der Ansprüche 1 bis 10, **gekennzeichnet dadurch, dass** sie einen Kommunikationsschritt mit einer zweiten Website besagten Netzes umfasst, wobei der Empfangsschritt (1907) von der zweiten Website ausgeführt wird.

12. Kommunikationsmethode gemäss mindestens einem der Ansprüche 1 bis 11, **gekennzeichnet dadurch, dass** sie einen Schritt des Nachweises einer eine Transaktion mit besagter erster Website kennzeichnende Information umfasst, und einen Schritt des Löschens der gespeicherten Information repräsentativ besagter Seitenfolge (412) der besagten ersten Website, wobei besagter Löschungsschritt von besagtem Nachweis abhängig ist.

13. Kommunikationsmethode gemäss mindestens einem der Ansprüche 1 bis 12, **gekennzeichnet dadurch, dass** sie einen Schritt des Nachweises einer eine Transaktion (206, 1108, 1520, 1808, 1906) mit besagter ersten Website kennzeichnende Information, mittels der Bestimmung einer Vorbereitung der Kommunikation auf der ersten Website einer in einem Speicher befindlichen Information umfasst.

14. Kommunikationsmethode gemäss mindestens einem der Ansprüche 8 bis 11, **gekennzeichnet dadurch, dass** sie einen Schritt (1809, 1907) des Lesens von Information mindestens einer Seite, auf der ersten Website (150) dessen Adresse auf Information beruht, welche von der zweiten Website (170) empfangen wurde.

15. Kommunikationsmethode gemäss mindestens einem der Ansprüche 8 bis 11 und 14, **gekennzeichnet dadurch, dass** sie einen Schritt (766) der Informationsanfrage umfasst, welcher die Bestimmung eines für die einmalige Verwendung bestimmten Zahlungsmittelbezeichners erlaubt oder dadurch, dass die Informationen bezüglich der ersten Website (150) eine Wurzel oder Generatorcode umfassen, welcher die Bestimmung eines für die einmalige Verwendung bestimmten Zahlungsmittelbezeichners erlaubt (772, 774).

16. Kommunikationsmethode gemäss mindestens einem der Ansprüche 1 bis 15, **gekennzeichnet dadurch, dass** sie umfasst:
- einen Schritt der Wahl eines Datums (1601),
- einen Schritt der Speicherung besagten Datums in einem Speicher (1605), und
- an besagtem Datum, einen Schritt (1603) der automatischen Anzeige eines Dialogfensters auf dem visuellen Anzeigeschirm (100), und, je nach der Antwort des Benutzers, einen Schritt (1607) des automatischen Öffnung einer zweiten Kommunikationssession zwischen besagtem Terminal und einer entfernten Website (170).

17. Kommunikationsmethode gemäss mindestens einem der Ansprüche 1 bis 15, **gekennzeichnet dadurch, dass** sie umfasst:
- einen Schritt (409, 1104) der Anzeige von Teilen der Seiten besagter Seitenfolge,
- einen Schritt der Speicherung von Information repräsentativ mindestens von besagten angezeigten Teilen der Seiten (1807), außerhalb der ersten Website (150), und
- einen Schritt der Speicherung von Information von Teilen von nichtangezeigten Seiten der ersten Website, außerhalb der ersten Website (1807, 1809, 1907).

18. Kommunikationsmethode gemäss mindestens einem der Ansprüche 1 bis 17, **gekennzeichnet dadurch, dass** sie umfasst:
- einen Schritt (409, 1104) der Anzeige durch das Computerterminal (100) von Teilen der Seiten besagter Seitenfolge, und
- einen Schritt (1905) der Speicherung von Information repräsentativ von besagten Teilen der angezeigten Seiten (100), in einer zweiten, von besagtem Terminal unabhängigen Website (170).

19. Kommunikationsmethode gemäss mindestens einem der Ansprüche 1 bis 18, **gekennzeichnet dadurch, dass** sie umfasst:
- einen automatischen Schritt (1807) des Empfangs, von kontextueller Information aus einer zweiten site (170), welche von einem Identifizierten der ersten Websites abhängig ist,
- einen Auslöseschritt (1805, 1808, 1906) und
- einen Schritt der Anzeige besagter kontextueller Information, abhängig von besagtem Auslöseschritt (Abbildungs 18 und 19).

20. Kommunikationsmethode gemäss mindestens einem der Ansprüche 1 bis 19, **gekennzeichnet dadurch, dass** sie umfasst:
- einen Schritt der Kommunikation, über ein Kommunikationsnetz (120), wobei während dieses Schritts Daten zwischen einem Terminal (100) und besagtem Netz ausgetauscht werden,
- einen Schritt (1807, 1905) der Speicherung von Daten, welche während besagtem Kommunikationsschritt aus besagtem Kommunikationsnetz kommen,
- während besagtem Speicherschrittes, ein Schritt (1808, 1906) der Bestimmung der Notwendigkeit, die gespeicherten Daten zu bewahren, abhängig von den vom besagtem Terminal während des Kommunikationsschrittes in das besagte Netz ausgesendeten Daten,
- ein Schritt (1809, 1907) der Bewahrung besagter gespeicherten Daten, abhängig von dem Ergebnis des besagten Schrittes der Bestimmung der Notwendigkeit, besagte gespeicherte Daten zu bewahren.

21. Kommunikationsmethode gemäss mindestens einem der Ansprüche 1 bis 20, **gekennzeichnet dadurch, dass** sie umfasst:
- einen Schritt des Nachweises einer elektronischen Unterschrift (2001),
- im Falle dass eine elektronische Unterschrift nachgewiesen wird, einen Schritt (2002) des Speicherung der Information repräsentativ mindestens einer Seite besagter Seitenfolge, außerhalb der ersten Website.

22. Kommunikationsmethode gemäss mindestens einem der Ansprüche 1 bis 21, **gekennzeichnet dadurch**, während des Speicherschrittes (1807, 1905), die im Speicher gespeicherte Information repräsentativ jeder Seite der zwischen Speicherschrittanfang und Speicherschrittende eingesehenen Seitenfolge ist.

23. Kommunikationsmethode gemäss mindestens einem der Ansprüche 1 bis 21, **gekennzeichnet dadurch, dass** sie umfasst:
- einen Schritt des Nachweises einer elektronischen Unterschrift (2001),
- einen Schritt der Zuordnung mindestens einer Seite besagter Seitenfolge zu dem zu unterzeichnenden Dokument (2002),
- wobei die besagte elektronische Unterschrift von jeder zugeordneten Seite abhängt.

24. Kommunikationsmethode gemäss mindestens einem der Ansprüche 1 bis 15, **gekennzeichnet dadurch, dass** sie die Anzeige (1807) eines Zeugen auf besagtem Terminal umfasst, wobei besagter Zeuge mindestens einen sichtbaren Zustand annimmt wenn eine Speicherung im Gang ist, und mindestens einen zweiten sichtbaren, vom ersten sichtbaren Zustand verschiedenen Zustand annimmt wenn keine Speicherung im Gang ist.

25. Kommunikationsmethode gemäss mindestens einem der Ansprüche 1 bis 24, **gekennzeichnet dadurch, dass** sie einen Schritt (1805, 1808) des Nachweises des Übergangs in einen gesicherten Kommunikationsmodus der Kommunikation über das Computernetz umfasst, wobei besagter Speicherschritt von besagtem Nachweis abhängig ist.

26. Kommunikationsmethode gemäss mindestens einem der Ansprüche 1 bis 25, **gekennzeichnet dadurch, dass** sie einen Schritt (1805, 1808, 1906) des Nachweises von vorbestimmter Information aus der ersten Website, umfasst, wobei besagter Speicherschritt von besagtem Nachweis abhängig ist.
